(19) Europäisches Patentamt
European Patent Office
Office européen des brevets

(11) EP 2 050 989 B1

(12) **EUROPEAN PATENT SPECIFICATION**

(45) Date of publication and mention of the grant of the patent:
**23.02.2011 Bulletin 2011/08**

(51) Int Cl.:
***F16H 63/42*** *(2006.01)*

(21) Application number: **08164445.2**

(22) Date of filing: **16.09.2008**

(54) **Shift indicator system**

Schaltungsanzeigesystem

Système indicateur de changement de vitesse

(84) Designated Contracting States:
**DE GB**

(30) Priority: **18.10.2007 JP 2007271599**

(43) Date of publication of application:
**22.04.2009 Bulletin 2009/17**

(73) Proprietor: **HONDA MOTOR CO., LTD.**
**Tokyo 107-8556 (JP)**

(72) Inventors:
- **Moteki, Norio**
**Saitama 351-0193 (JP)**
- **Takamiya, Hideharu**
**Saitama 351-0193 (JP)**
- **Taga, Wataru**
**Saitama 351-0193 (JP)**

(74) Representative: **Rupp, Christian**
**Mitscherlich & Partner**
**Patent- und Rechtsanwälte**
**Sonnenstraße 33**
**80331 München (DE)**

(56) References cited:
**EP-A- 0 600 400**
**DE-A1- 4 326 182**
**GB-A- 2 091 358**
**JP-A- 10 138 795**
**JP-A- 60 030 848**
**JP-A- 61 081 228**
**US-A- 4 719 820**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION

### Field of the Invention

The present invention relates to a shift indicator system in which shift determinations are made on the basis of operating conditions of a vehicle.

### Description of the Related Art

In running with a manual transmission or in a manual running mode with an automatic transmission, if the driver is not informed of the quality of fuel consumption of his or her vehicle and the acceleration characteristics after a gear shift, in general, the driver makes a transmission gear shift and operates an accelerator pedal according to the vehicle speed and on the basis of the driving feeling acquired by his or her own experience. Therefore, it is difficult for the driver to get a good fuel consumption and to secure good acceleration characteristics after the gear shift.

At present, from the viewpoint of enhancing economy of automobiles and for the purpose of securing less $CO_2$ emission, there is a demand for running with good fuel consumption conditions and pleasant acceleration characteristics maintained normally. In order to meet the demand, it is necessary for the driver during running to be given an instruction to make a transmission gear shift according to the operating conditions of the vehicle. Besides, the instruction to make the gear shift must be such that an acceleration expected by the driver can be realized after the gear shift and the driver will not get a sense of incompatibility.

Conventionally, an upshift permissive vehicle speed has been designated on the basis of each gear, and an instruction to make an upshift has been issued when the current vehicle speed has exceeded a prescribed vehicle speed. In addition, an instruction to make a downshift has been issued on the condition that the throttle opening is large, the engine speed is less than an engine speed determined on a gear basis, and the acceleration is less than a predetermined value.

Besides, a technology in which, in the case of driving a vehicle equipped with a manual transmission in an auto-cruising mode, the driver is prompted to make a shift change upon a change in the load status due to the presence of an ascending or descending slope so as to prevent a worsening in fuel consumption and to enhance easy-driveability, has been proposed by the following document, for example.

Patent Document 1 (Japanese Patent Laid-open No. Sho 61-122035) describes a technology in which an instruction to make a downshift or an upshift is issued on the basis of determining whether or not an overrun of the engine will occur upon a downshift from the current gear in the manual transmission and determining whether or not a driving force is sufficient if an upshift is made from the current gear.

## SUMMARY OF THE INVENTION

It is an object of the present invention to provide a shift indicator system by which an instruction to make a gear shift can be given based on a target acceleration such as to prevent the driver from getting a sense of incompatibility, and it is possible to obtain an improved fuel consumption and an enhanced acceleration characteristics or enhanced practicality. It is another object of the present invention to provide a shift indicator system by which an instruction to make a gear shift can be given by setting an auto-cruising throttle position command in place of an accelerator pedal position to be used in other modes than an auto-cruising mode, not only in the other modes than the auto-cruising mode but also in the auto-cruising mode.

In accordance with a first-named invention, there is provided a shift indicator system for making a shift determination based on an operating condition of a vehicle having an engine, and a transmission for transmitting a driving torque to a wheel or wheels on the basis of an input shaft torque transmitted to a main shaft on the basis of an engine torque outputted from a crankshaft of the engine, the shift indicator system including: running resistance calculating means for calculating a running resistance of the vehicle in running; target acceleration storing means for storing a target acceleration according to the vehicle speed and the accelerator position; target acceleration calculating means for calculating a target acceleration according to a current vehicle speed and a current accelerator position from the target acceleration storing means; engine torque storing means for storing engine torques according to each engine speeds; post-upshift engine speed calculating means for calculating an engine speed after an upshift, based on the current vehicle speed and a gear position after the upshift; post-upshift engine torque estimating means for calculating the engine torque after the upshift corresponding to the engine speed calculated by the post-upshift engine speed calculating means from the engine torque storing means; post-upshift acceleration calculating means for calculating an acceleration after the upshift, based on the engine torque calculated by the post-upshift engine torque estimating means and the running resistance calculated by the running resistance calculating means; upshift determining means for determining whether or not upshift instruction conditions are fulfilled, the upshift instruction conditions including a condition where the acceleration after the upshift calculated by the post-upshift acceleration calculating means is greater than the target acceleration calculated by the target acceleration calculating means; and upshift display control means for controlling display means for giving a driver an instruction to make the upshift.

In accordance with a second-named invention, there is provided a shift indicator system for making a shift determination based on an operating condition of a vehicle having an engine, and a transmission for transmitting a driving torque to a wheel or wheels on the basis of an input shaft torque transmitted to a main shaft on the basis of an engine torque outputted from a crankshaft of the engine, the shift indicator system including: running resistance calculating means for calculating a running resistance of the vehicle in running; target acceleration storing means for storing a target acceleration according to the vehicle speed and the accelerator position; target acceleration calculating means for calculating a target acceleration according to a current vehicle speed and a current accelerator position from the target acceleration storing means; engine torque storing means for storing engine torques according to engine speeds; current-gear engine torque estimating means for calculating an engine torque corresponding to the engine speed at the current gear from the engine torque storing means; current-gear acceleration calculating means for calculating the acceleration at the current gear, based on the engine torque calculated by the current-gear engine torque calculating means and the running resistance calculated by the running resistance calculating means; downshift determining means for determining whether or not downshift instruction conditions are fulfilled, the downshift instruction conditions including a condition where the throttle position is not less than a predetermined value and the acceleration at the current gear calculated by the current-gear acceleration calculating means is smaller than the target acceleration calculated by the target acceleration calculating means; and downshift display control means for controlling display means for giving a driver an instruction to make the downshift.

In accordance with a further aspect, there is provided a shift indicator system according to the second-named invention, further including post-downshift engine speed calculating means for calculating the engine speed after the downshift, based on the current vehicle speed and the gear position after the downshift, wherein the downshift determining means compares the post-downshift engine speed calculated by the post-downshift engine speed calculating means with an over-rev preventive threshold and determines the downshift instruction conditions to be not fulfilled in the case where the post-downshift engine speed is not less than the over-rev preventive threshold.

In accordance with a further aspect, there is provided a shift indicator system according to the first-named or second-named invention, wherein the running resistance calculating means calculates a driving force acting on the wheel on the basis of the engine torque obtained in the current gear and the gear position in the current gear, calculates an acceleration resisting force acting on the wheel on the basis of the current vehicle acceleration, and calculates the running resistance on the basis of the driving force and the acceleration resisting force.

In accordance with a further aspect, there is provided a shift indicator system according to the first-named invention, wherein the upshift determining means determines the upshift instruction conditions to be not fulfilled when the post-upshift engine speed calculated by the post-upshift engine speed calculating means is less than a predetermined engine speed such as to worsen the driveability.

In accordance with a further aspect, there is provided a shift indicator system according to the first-named invention, wherein the engine torques according to the engine speeds stored in the engine torque storing means are engine torques within such a range that engine torque varies linearly with throttle position at each engine speed.

In accordance with a further aspect, there is provided a shift indicator system according to the second-named invention, wherein the engine torques according to the engine speeds stored in the engine torque storing means are engine torques greater than an engine torque within such a range that engine torque varies linearly with throttle position at each engine speed, and are engine torques at an effective throttle position such that the ratio of the engine torque variation rate to the throttle position variation rate is less than a predetermined value.

In accordance with a further aspect, there is provided a shift indicator system according to the first-named invention, wherein even after the upshift instruction conditions come to be not fulfilled, the upshift display control means continues displaying an upshift on the display means until a predetermined time elapses, and, in the case of a condition where upshift and downshift displays are not made on the display means when the upshift instruction conditions are fulfilled, the upshift display control means displays the upshift on the display means after this condition has continued for a predetermined time.

In accordance with a further aspect, there is provided a shift indicator system according to the second-named invention, wherein even after the downshift instruction conditions come to be not fulfilled, the downshift display control means continues displaying a downshift on the display means until a predetermined time elapses, and, in the case of a condition where upshift and downshift displays are not made on the display means when the downshift instruction conditions are fulfilled, the downshift display control means displays the downshift on the display means after this condition has continued for a predetermined time.

The above and other objects, features and advantages of the present invention and the manner of realizing them will become more apparent, and the invention itself will best be understood from a study of the following description and appended claims with reference to the attached drawings showing some preferred embodiments of the invention.

## BRIEF DESCRIPTION OF THE DRAWINGS

FIG. 1 is a schematic diagram of a vehicle according to an embodiment of the present invention;
FIG. 2 is a block diagram of a shift indicator system according to the present invention;
FIG. 3 is a functional block diagram of running resistance calculating means in FIG. 2;
FIG. 4 is a functional block diagram of upshift control means in FIG. 2;
FIG. 5 is a diagram showing equi-horsepower lines, optimum fuel consumption rate lines and equi-fuel-economy lines;
FIG. 6 is a diagram for illustrating an upshift;
FIG. 7 is a diagram for illustrating an upshift;
FIGS. 8A to 8C are diagrams showing TH-TRQ linearity lines;
FIGS. 9A and 9B are diagrams showing a minimum expected acceleration;
FIG. 10 is a diagram showing an upshift instruction according to an embodiment of the present invention;
FIG. 11 is a functional block diagram of downshift control means in FIG. 2;
FIGS. 12A to 12C are diagrams an effective TH corresponding engine torque;
FIG. 13 is a diagram showing a downshift instruction according to an embodiment of the present invention;
FIG. 14 is a functional block diagram of indicator control means in FIG. 2;
FIG. 15 is a main flowchart showing a shift instruction method according to an embodiment of the present invention;
FIG. 16 is a flowchart showing a parameter acquisition process in FIG. 15;
FIG. 17 is a flowchart showing a current-gear engine torque estimating process in FIG. 15;
FIGS. 18A and 18B shows tables pertaining to the current-gear engine torque estimating process of FIG. 17;
FIG. 19 is a flowchart showing a running resistance calculating process in FIG. 16;
FIG. 20 is a flowchart showing a running resistance calculating process before a smoothing process in FIG. 19;
FIGS. 21A and 21B are figures showing a table pertaining to the running resistance calculating process before the smoothing process of FIG. 20;
FIG. 22 is a flowchart showing a shift inhibition determining process in FIG. 15;
FIG. 23 is a flowchart showing an upshift instruction determining process in FIG. 15;
FIG. 24 is a flowchart showing an upshift instruction determining preparatory process;
FIGS. 25A to 25F are figures showing tables pertaining to the upshift instruction determining preparatory process of FIG. 24;
FIG. 26 is a flowchart showing a downshift instruction determining process in FIG. 15;
FIG. 27 is a figure showing a table pertaining to a downshift instruction determining process of FIG. 26;
FIG. 28 is a flowchart showing a downshift instruction determining preparatory process in FIG. 27;
FIGS. 29A and 29B are figures showing tables pertaining to the downshift instruction determining preparatory process in FIG. 28;
FIG. 30 is a flowchart showing controls of upshift lamp turning-on, downshift lamp turning-on and lamp turning-off; and
FIG. 31 is a time chart showing the controls of upshift lamp turning-on, downshift lamp turning-on and lamp turning-off.

## DETAILED DESCRIPTION OF THE PREFERRED EMBODIMENTS

FIG. 1 is a schematic diagram of a vehicle according to an embodiment of the present invention. As shown in FIG. 1, the vehicle includes mainly an engine 2, a clutch 4, a transmission 6, a shift operating lever 8, a brake device 10, a clutch pedal 12, an ECU 14, a CAN 16, a meter 18, an air flow sensor 20, a throttle 22, an intake pipe 24, a throttle driving device 26, fuel injection valves 28, an intake air temperature sensor 30, an engine speed sensor 32, an atmospheric pressure sensor 34, an accelerator position sensor 36, a clutch switch 38, a vehicle speed sensor 40, a brake switch 42.

The engine 2 is, for example, a 4-cycle DOHC (double overhead cam) type in-line 4-cylinder internal combustion engine with a pair of intake valves and a pair of exhaust valves provided for each cylinder, wherein the valve timing (valve-opening timing and valve lift amount) for each of the intake and exhaust valves can be switched between two stages, i.e., a high-speed valve timing suitable for a high-speed revolution region and a low-speed valve timing suitable for a low-speed revolution region. A crankshaft of the engine 2 is connected to the transmission 6 through the clutch 4.

The clutch 4 is, for example, a mechanical friction clutch (dry single disk type clutch), which has a flywheel connected to the crankshaft of the engine 2, a clutch cover, a pressure plate, a clutch disk, a spring, a release fork, and a release bearing. The pressure plate presses the clutch disk against the flywheel by a spring force of the spring, and the frictional force serves to transmit the engine torque of the engine 2 to the transmission 6 (to engage the clutch 4).

In addition, when the release fork is pressed upon depression of the clutch pedal 12, the release fork is swung clockwise. This swing moves the release bearing, to push the spring leftward so as to weaken the spring force, whereby the pressure plate is separated from the clutch disk, and transmission of the output torque of the engine 2 to the transmission 6 is interrupted (the clutch 4 is disengaged).

The transmission (manual transmission) 6 is composed of a transmission equipped with a normally meshed synchromesh mechanism, and has a plurality of gears disposed between a main shaft and a counter shaft therein. With some of the gears meshed through the shift fork, arbitrary one of gears consisting of six forward gears (6 speeds) and one reverse gear (1 speed) is established. Based on an input torque transmitted from the engine 2 to the main shaft through the clutch 4, wheels W are driven through the functions of the counter shaft and a drive shaft. The shift operating lever 8 is a lever which is connected to the transmission 6 and is operative to effect a gear shift in the transmission 6.

The brake device 10 has a tandem type master cylinder (not shown), a brake fluid pressure controller (not shown) and brakes mounted to the wheels W. A brake fluid pressure according to the depression amount of the brake pedal (not shown) is outputted from a first and a second output port of the master cylinder, and the brake fluid pressure is controlled by the brake fluid pressure controller connected to both the output ports, whereby the brake is supplied with the brake fluid pressure, resulting in a braking action. In a VSA (vehicle stability assist system) for stabilizing the vehicle behaviors by controlling an ABS (antilock brake system), TCS (traction control system) and a skid suppressing function, the brake fluid pressure is regulated under control of the brake fluid pressure controller based on an instruction by a brake ECU, whereby the braking force is controlled.

The clutch pedal 12 is disposed at the driver's seat floor surface of the vehicle, and is connected to the release fork of the clutch 4. With the clutch pedal 12 depressed so as to press the release fork, the clutch 4 is disengaged, and transmission of the engine torque of the engine 2 to the transmission 6 is interrupted.

The ECU 14 has the function as a shift indicator system for instructing (prompting) the driver to make a shift operation in the transmission 6 through the shift operating lever 8, by turning on the meter 18. An engine ECU (not shown) provided separately from the ECU 14 for the purpose of controlling the engine 2 performs control actions as follows. (1) The engine ECU calculates a target engine torque. The target engine torque is calculated, for example, by searching a map according to an engine speed NE and an accelerator position (accelerator opening or accelerator angle) detected by an accelerator position sensor. (2) The engine ECU determines a target throttle position according to the target engine torque thus calculated, and regulates the position (opening) of the throttle 22 by controlling the throttle driving device 26 so as to obtain the target throttle position. (3) The engine ECU calculates a target fuel injection amount, based on the driving conditions such as engine speed, and controls the fuel injection valve 28. Further, the engine ECU calculates a fundamental theoretical ignition timing, based on an intake pipe absolute pressure sent from an intake air absolute pressure sensor (not shown) provided just downstream of the throttle 22 and an engine speed sent from the engine speed sensor 32, corrects the fundamental theoretical ignition timing on the basis of the intake air temperature so as to calculate a theoretical ignition timing, and controls a spark plug (not shown) of each cylinder in the engine 2 according to the theoretical ignition timing. (4) The engine ECU cuts the fuel supply (performs fuel-cut (F/C)) in the cases where the driving conditions do not need an engine torque at the time of deceleration, such as the case where the throttle 22 is fully closed and the engine speed is not less than a predetermined value. The information on the control of the engine 2 by the engine ECU, including the F/C, is sent from the engine ECU to the ECU 14 through the CAN 16.

A brake ECU (not shown) provided separately from the ECU 14 controls the brake device 10, and controls the brake fluid pressure controller provided in the brake device 10, in the VSA, so as to control the braking force of the brakes mounted to the wheels W, thereby stabilizing the behaviors of the vehicle. Whether the VSA control is being under way or not is informed from the brake ECU to the ECU 14 through the CAN 16. A meter ECU (not shown) provided separately from the ECU 14 controls the turning-on of upshift and downshift lamps and the turning-off of the lamps at the meter 18, based on instructions from the ECU 14.

The CAN 16 is a network for mutual communication between the ECU 14, and the engine ECU and the meter ECU. The meter 18 performs turning-on of the upshift lamp, turning-on of the downshift lamp, and turning-off of the lamps, under the control of the meter ECU based on the instructions from the ECU 14.

The intake pipe 24 of the engine 2 is provided with the air flow sensor 20 for measuring a cylinder intake air amount, on the downstream side of an air cleaner (not shown). The throttle 22 is disposed on the downstream side of the air flow sensor 20. The throttle driving device 26 is connected to the throttle 22, and controls the position (opening) of the throttle 22 according to a throttle command included in the instructions from the engine ECU.

The fuel injection valves 28 are each provided, on the basis of each cylinder, between the engine 2 and the throttle 22 and slightly on the upstream side of an intake valve (not shown) in the intake pipe 24. Each of the fuel injection valves 28 is connected to a fuel pump (not shown), and is electrically connected to the ECU 14, and the fuel injection time thereof is controlled by a signal from the engine ECU.

The intake temperature sensor 30 mounted to a main body of the engine 2 is composed of a thermistor or the like, detects the intake air temperature in the engine 2, and outputs an electrical signal corresponding to the intake air temperature detected. The engine speed sensor 32 detects the rotating speed of a crankshaft (not shown), and outputs a corresponding electrical signal. The atmospheric pressure sensor 34 detects the atmospheric pressure, and outputs a corresponding electrical signal.

The accelerator position sensor 36 detects the position (opening) of an accelerator pedal (not shown), and outputs a corresponding electrical signal. The clutch switch 38 detects whether or not the clutch pedal 12 is depressed, and turns on a clutch signal when the clutch pedal 12 is depressed.

The vehicle speed sensor 40 is mounted to the wheel W, detects the rotating speed of the wheel W, and outputs a corresponding electrical signal. The brake switch 42 detects whether or not a brake pedal (not shown) is depressed, and turns on a brake switch signal when the brake pedal is depressed. The output signals from the sensors 20, 30, 32, 34, 36, 40 and the switches 38, 42 are inputted to the ECU 14.

FIG. 2 is a functional block diagram for realizing the functions of the ECU 14 as the shift indicator system. The shift indicator system has running resistance calculating means 100, upshift control means 102, downshift control means 104, and indicator control means 106.

The running resistance calculating means 100 is for calculating the running resistance of the vehicle in running, and, as shown in FIG. 3, it includes engine torque calculating means 150, current-gear tire end driving force calculating means 152, acceleration resistance calculating means 154, and running resistance arithmetic means 156.

The engine torque calculating means 150 calculates the engine torque [Nm] (or may be in [kgfm]) from not only the cylinder intake air amount detected by the air flow sensor 20 and the engine speed detected by the engine speed sensor 32 but also from a first map storing the relation between the cylinder intake air amount and the engine speed in other modes than F/C mode and the engine torque when the system is not in the F/C mode, or a second map storing the relation between the cylinder intake air amount and the engine speed in F/C mode and the engine torque when the system is in the F/C mode.

The current-gear tire end driving force calculating means 152 calculates the current-gear tire end driving force [N] from the engine torque [Nm] calculated by the engine torque calculating means 150 as well as a gear ratio at the current gear (which is determined from the engine speed detected by the engine speed sensor 32 and the vehicle speed detected by the vehicle speed sensor 40), a transmission efficiency, a final gear ratio and a dynamic loaded radius [m], according to the following formula (1):

$$\text{Current-gear tire end driving force} = (\text{Engine torque}) \times (\text{Current-gear gear ratio}) \times (\text{Final gear ratio}) \times (\text{Transmission efficiency}) / (\text{Dynamic loaded radius}) \quad \ldots (1)$$

Then, the current-gear tire end driving force is subjected to a filtering process by use of a second order FIR filter. A current-gear tire driving force after filtering is calculated from a current-run current-gear tire end driving force, a tire end driving force at around the last filtering, and a tire end driving force at around the filtering-before-last, according to the following formula (2):

Current-gear tire end driving force after filtering = [(Filter coefficient 1) × (Tire end driving force before filtering-before-last) + (Filter coefficient 2) × (Tire end driving force before last filtering) + (Filter coefficient 3) × (Tire end driving force before current filtering)] - [(Filter coefficient 4) × (Tire end driving force after filtering-before-last) + (Filter coefficient 5) × (Tire end driving force after last filtering)] ...(2)

Here, the filter coefficients 1 to 5 are so set that the cutoff frequency is 4 to 5 Hz in a driving system ranging from the engine torque as an input to the tire end as an output.

The acceleration resistance calculating means 154 calculates an acceleration [m/sec$^2$] from the vehicle speed VP [km/sec] outputted from the vehicle speed sensor 40, and calculates the acceleration resistance [N] of the vehicle from the acceleration and the vehicle weight [kg] according to the following formula (3):

Acceleration resistance = (Vehicle weight) × Acceleration ...(3)

The running resistance arithmetic means 156 calculates the running resistance represented by the following formula (4):

Running resistance = (Current-gear tire end driving force) - (Acceleration resistance) ...(4)

The running resistance arithmetic means 156 calculates the running resistance from the current-gear tire end driving force calculated by the current-gear tire end driving force calculating means 152 and the acceleration resistance calculated by the acceleration resistance calculating means 154, according to the formula (4). Incidentally, the current-gear tire end driving force in the formula (4) is the value after the filtering process.

Since the running resistance shows little variation per time, the running resistance calculated by the formula (4) is subjected to a smoothing process according to the following formula (5), to obtain a final running resistance.

$$\text{Running resistance after current smoothing} = [1 - (\text{Smoothing coefficient})] \times (\text{Running resistance after last smoothing}) + (\text{Smoothing coefficient}) \times (\text{Running resistance before current smoothing}) \quad ...(5)$$

As shown in FIG. 4, the upshift control means 102 has post-upshift engine speed calculating means 200, post-upshift engine torque estimating means 202, post-upshift engine torque correcting means 204, post-upshift minimum expected acceleration calculating means 206, minimum expected acceleration corresponding tire end driving force calculating means 208, post-upshift tire end driving force calculating means 210, and upshift determining means 212.

The post-upshift engine speed calculating means 200 calculates a gear (shift position) after one-gear upshift from the current gear which is determined from the ratio between the vehicle speed detected by the vehicle speed sensor 40 and the engine speed detected by the engine speed sensor 32, and calculates a gear ratio (upshift gear ratio) from the gear (shift position) after the one-gear upshift. An engine speed after the one-gear upshift (upshift engine speed) [rpm] is calculated from the upshift gear ratio, the final gear ratio, the vehicle speed VP [km/h] detected by the vehicle speed sensor 40, and the dynamic loaded radius [m], according to the following formula (6):

$$\text{Upshift engine speed} = (\text{Vehicle speed}) \times (\text{Upshift gear ratio}) \times (\text{Final gear ratio}) \times 1000\ [\text{m/km}]/2 \times \pi \times (\text{Dynamic loaded radius}) \times 60\ [\text{min/h}] = (\text{Vehicle speed}) \times (\text{Upshift gear ratio}) \times (\text{Final gear ratio}) \times 2.6526/(\text{Dynamic loaded radius}) \quad ...(6)$$

FIG. 5 shows a diagram in which engine speed is taken on the axis of abscissas, and engine torque is taken on the axis of ordinates. In the figure, symbol a indicates equi-horsepower lines (horsepower = coefficient × vehicle speed × tire end driving force) on which the tire end driving forces upon arrival at a fixed vehicle under a certain acceleration are equal; symbol b indicates equi-fuel-economy lines where fuel economy values are equal; symbol c indicates a set of optimum specific fuel consumption points on the equi-horsepower lines, that is, an optimum specific fuel consumption line indicating optimum specific fuel consumptions at various engine speeds; and symbol d indicates a maximum torque line indicating maximum engine torques at various engine speeds.

As shown in FIG. 5, when the vehicle runs at the engine speed and the engine torque on the optimum specific fuel consumption line c, the fuel economy is optimized. Therefore, it is desirable to bring the driving region after an upshift close to the optimum fuel economy line c.

Referring to FIG. 6, when the gear position is sequentially shifted up from 1st gear to 2nd gear, from 2nd gear to 3rd gear, and from 3rd gear to 4th gear, the driving region at the 4th gear is close to the optimum specific fuel consumption line c. Therefore, it is desirable to sequentially issue the instructions for an upshift from 1st to 2nd gear, an upshift from 2nd to 3rd gear, and an upshift from 3rd to 4th gear. On the other hand, the upshift from 4th to 5th gear causes the driving region to be deviated from the optimum specific fuel consumption line c, resulting in a worsened fuel economy; therefore, it is necessary not to issue an instruction to make an upshift from 4th to 5th gear. Incidentally, in FIG. 6, there is shown the case where the change in engine operation is made along an equi-horse-power line by regulating the depression amount of the accelerator pedal, in order to obtain the same acceleration even after the upshift.

In addition, as shown in FIG. 7, also in the case of accelerating from a low speed of 1st gear speed to a certain vehicle speed of, for example, 60 km/h by gradually depressing the accelerator pedal, it is desirable to sequentially make upshifts from 1st to 2nd gear, from 2nd to 3rd gear, from 3rd to 4th gear, from 4th to 5th gear, and from 5th to 6th gear so that the driving region approaches the optimum specific fuel consumption line c.

FIG. 8A is a diagram showing the relationship between throttle position (throttle opening) and engine torque at a certain engine speed in a standard condition (for example, on a level land (1 atm), at 25°C). As shown in FIG. 8A, when the throttle position (throttle opening) is in the range of 0 to TH0, the engine torque increases linearly with the throttle position, at a constant inclination. When the throttle position exceeds TH0, the inclination of the engine torque decreases, and, thereafter, the engine torque increases little even when the throttle position (throttle opening) is increased.

The throttle position range from 0 to TH0 in which the engine torque increases linearly with the throttle position (throttle opening) is a region where engine response is good. Therefore, at the throttle position TH0, an engine torque of Te0 can be produced with good engine response, without giving a sense of incompatibility to the driver. On the other hand, if the maximum engine torque at which the linearity can be maintained is set to be higher than the optimum specific fuel consumption line, an upshift may not necessarily lead to an improvement in fuel economy; therefore, the maximum engine torque is set to be lower than the optimum specific fuel consumption line. If a region where the response is bad is also allowed, the driver must largely depress the accelerator pedal in order to obtain a minimum expected acceleration (to be described later), which may produce a sense of incompatibility, and, in addition, fuel economy may be worsened.

Thus, at each engine speed, the maximum engine torque at which the linearity is maintained and the engine torque on the optimum specific fuel consumption line are compared with each other, and the engine torque with a lower value is taken to form a TH-TRQ linearity line. For example, as shown in FIG. 8B, the TH-TRQ linearity line e is so set that it is close to the optimum specific fuel consumption line c and it has engine torque values lower than those on the optimum specific fuel consumption line c. As shown in FIG. 8C, the relationship between each engine speed and the engine torque on the TH-TRQ linearity line e at the engine speed is stored in a TH-TRQ linearity line table 220.

The post-upshift torque estimating means 202 calculates an uncorrected engine torque in a standard condition (for example, on a level land (atmospheric pressure is 1 atm), at an intake air temperature of 25°C), by searching the TH-TRQ linearity line map 230 in which the relationship between each engine speed and the engine torque on the TH-TRQ linearity line in the standard condition is stored, based on an upshift engine speed calculated by the post-upshift engine speed calculating means 200.

The engine torque depends on environmental parameters (for example, the intake air temperature and the atmospheric pressure). For instance, at a highland where the atmospheric pressure is comparatively low, as shown in FIG. 8A, the maximum engine torque Te0 h at which the linearity with respect to the throttle position (throttle opening) is maintained is lower than the maximum engine torque Te0 at a level land. Therefore, when the intake air temperature and/or the atmospheric pressure is changed from that in the standard condition, the engine torque is changed; accordingly, the engine torque calculated by the post-upshift engine torque estimating means 202 must be corrected on the basis of the intake air temperature detected by the intake air temperature sensor 30 and the atmospheric pressure detected by the atmospheric pressure sensor 34.

The post-upshift engine torque correcting means 204 corrects the engine torque as follows. A table storing the relationship between intake air temperature and correction factor is searched, whereby a first correction factor relevant to the intake air temperature detected by the intake air temperature sensor 30 is calculated. A table storing the relationship between atmospheric pressure and correction factor is searched, whereby a second correction factor relevant to the atmospheric pressure detected by the atmospheric pressure sensor 34 is calculated. Then, the engine torque estimated by the post-upshift engine torque estimating means 202 is corrected according to the following formula (7):

$$\text{Corrected engine torque} = (\text{Uncorrected engine torque}) \times (\text{First correction factor}) \times (\text{Second correction factor}) \quad \ldots(7)$$

Therefore, the corrected engine torque can be given while enhancing the fuel economy after an upshift and while securing a good engine response, irrespectively of running environments.

When the driver depresses an accelerator pedal according to the vehicle speed, he is expecting an acceleration according to the accelerator position and the vehicle speed. For example, the minimum acceleration expected by the driver (minimum expected acceleration) increases as the accelerator position (opening) increases, and the minimum expected acceleration decreases as the vehicle speed increases. An instruction to make an upshift is issued so that the driver does not get a sense of incompatibility with regard to the acceleration characteristics until the minimum expected acceleration is obtained, since the minimum expected acceleration after the upshift can be obtained within the engine torque on the TH-TRQ linearity line which corresponds to the engine speed after the upshift. The engine torque on the TH-TRQ linearity line is not always produced after the upshift; in other words, if intended, a set torque can be produced in a good response range, by depressing the accelerator pedal. Naturally, if the driver sets a cruising mode after the upshift, the throttle position (throttle opening) is reduced, and the engine torque is lowered below the set value.

As shown in FIG. 9A, with regard to accelerator position AP, minimum expected accelerations a are stored in minimum expected acceleration maps 230 on a vehicle speed basis. FIG. 9A shows an example of the case where the accelerator pedal position is predetermined. Symbol AR1 denotes a region of accelerator pedal position where, for each vehicle speed, the acceleration is not more than the minimum expected acceleration and the driver gets a sense of incompatibility relating to acceleration. Symbol AR2 denotes a region of acceleration to be used at the time of AP depression where, for each vehicle speed, the acceleration is not less than the minimum expected acceleration and the driver gets a sense of satisfaction and no incompatibility relating to acceleration. Incidentally, the minimum expected acceleration is set while taking fuel economy and EM regulations into account so that fuel economy and EM will not be worsened.

For example, when an upshift is made at b1, b3, b5, an acceleration at b2, b4, b6 can be produced within the range of TH-TRQ linearity after the upshift; in this case, the acceleration is greater than the minimum expected acceleration, and is in the region of acceleration to be used at the time of AP depression, AR2. Therefore, an instruction to make this upshift is issued.

On the other hand, when an upshift is made at c1, c3, c5, an acceleration at c2, c4, c6 can be produced within the range of TH-TRQ linearity after the upshift; in this case, however, the acceleration is less than the minimum expected acceleration, and is in the region of acceleration where the driver gets a sense of incompatibility relating to acceleration. Therefore, an instruction to make this upshift is not issued.

Here, at points b1 to b6, c1 to c6, the accelerator pedal position is constant, but an engine torque such as to overcome the running resistance is secured even at the same accelerator pedal position, and, accordingly, the engine speed is raised and the vehicle speed is increased.

FIG. 9B is a diagram showing the relation between accelerator position AP and minimum expected acceleration which is stored in the minimum expected acceleration map 230 for a certain vehicle speed. As shown in FIG. 9B, in the minimum expected acceleration map 230, there is stored a relation such that the minimum expected acceleration is constant while the accelerator position corresponds to a small opening (for example, up to 30%) and that the minimum expected acceleration increases when the accelerator position corresponds to a greater opening. The minimum expected acceleration is thus set to be constant in small-opening running, in order to suppress dispersion of the timing of upshift by the accelerator pedal in the small-opening running.

Incidentally, in an auto-cruising mode, the accelerator pedal position corresponds to full closure. Therefore, a throttle command value is used in place of the accelerator pedal position (opening), and, for each throttle command value, the minimum expected acceleration is calculated from the current throttle command value and the current vehicle speed, using a map showing the relation between vehicle speed and minimum expected acceleration. This ensures that, even in an auto-cruising mode, upshift/downshift instructions according to embodiments of the present invention which will be described later can be applied.

The post-upshift minimum expected acceleration calculating means 206 calculates a minimum expected acceleration corresponding to a current vehicle speed and a current accelerator position, from the current vehicle speed detected by the vehicle speed sensor 40 and the current accelerator position detected by the accelerator position sensor 36, by searching the minimum expected acceleration map 230.

The minimum expected acceleration corresponding tire end driving force calculating means 208 calculates a tire end driving force [N] necessary for producing a minimum expected acceleration (minimum expected acceleration corresponding tire end driving force), from a running resistance [N] calculated by the running resistance arithmetic means 156, a vehicle weight [kg], and a minimum expected acceleration [m/sec$^2$] calculated by the post-upshift minimum expected acceleration calculating means 206, according to the following formula (8) :

$$\text{Minimum expected acceleration corresponding tire end driving force} = (\text{Vehicle weight}) \times (\text{Minimum expected acceleration}) + (\text{Running resistance}) \quad \ldots(8)$$

The post-upshift tire end driving force calculating means 210 calculates a post-upshift tire end driving force [N], from a corrected engine torque [Nm] calculated by the post-upshift engine torque correcting means 204, a gear ratio of a gear after an upshift, a transmission efficiency, and a dynamic loaded radius [m], according to the following formula (9):

engine torque after upshift) × (Gear ratio after upshift) × (Final gear ratio) × (Transmission efficiency)/(Dynamic loaded radius) ...(9)

The upshift determining means 212 determines whether or not the upshift instruction conditions are fulfilled, in the manner as described below, and instructs an upshift when the upshift instruction conditions are determined to be fulfilled.

(1) No instruction to make an upshift is issued when the brake switch 42 is ON, when a VSA control is being performed, when a predetermined period of time has not passed after a VAS control, when an engine alarm lamp at the meter 18 is ON and a failure relating to the engine 2 is present, when a shift change is being made, when a predetermined period of time necessary for clutch engagement has not passed after a shift change, when the clutch switch 38 is faulty, or when the vehicle is not running (for example, when the vehicle speed is not more than 5 km/h).
(2) No instruction to make an upshift is issued when the engine speed after an upshift is not more than a predetermined engine speed (for example, 1100 rpm) at which driveability is worsened (vehicle body vibration, booming noise, or the like is generated). In view of the fact that an upshift would cause a lowering in engine speed and a worsening in driveability, an instruction to make an upshift is inhibited, in order to prevent driveability from being worsened.
(3) In principle, no instruction to make an upshift is issued when the accelerator pedal position corresponds to full closure. In view of the fact that full closure of the accelerator pedal is accompanied by a deceleration, an instruction to make an upshift is unnecessary. It is to be noted here, however, that in the case where an instruction to make an upshift is being present at the time when the accelerator pedal comes to full closure, the upshift is inhibited after a predetermined lapse of time from that time point.
(4) An instruction to make an upshift is issued when the situation is other than (1) to (3) above and the engine speed is not less than an over-rev preventive engine speed (for example, 4500 rpm). In addition, the upshift leads to a lowered engine speed and, hence, to an improved fuel economy. The over-rev engine speed is an upper limit engine speed such that a further increase in engine speed does not produce an increased engine torque but, instead, leads to a lowered engine torque. When the engine speed after a downshift exceeds the over-rev engine speed, an instruction to make a downshift is inhibited so as to prevent over-revving. With regard to upshift, also, an upshift instruction is determined based on the over-rev engine speed, so as to obviate the situation in which an instruction to make an upshift is issued immediately upon a downshift made in response to a downshift instruction.
(5) An instruction to make an upshift is issued when the situation is other than (1) to (3) above and the minimum expected acceleration corresponding tire end driving force is less than a post-upshift tire end driving force. For example, as shown in FIG. 10, when the transmission during running at 2nd gear speed is shifted up to 3rd gear speed in relation to an equi-horsepower line (minimum expected equi-horsepower line) f corresponding to a minimum expected acceleration corresponding tire end driving force corresponding to the accelerator position and the vehicle speed, a minimum expected acceleration can be produced with an engine torque lower than the engine torque on a TH-TRQ linearity line at the engine speed after the upshift. In view of this, an instruction to make the upshift to 3rd gear speed is issued. Further, when an upshift from 3rd to 4th gear speed is made, an engine torque in excess of the engine torque on the TH-TRQ linearity line e at the engine speed after the upshift is needed to produce a minimum expected acceleration. In view of this, an instruction to make the upshift from 3rd to 4th gear speed is not issued. Here, the minimum expected acceleration is calculated by use of the accelerator position AP. Therefore, even if the driver thinks he is keeping the accelerator position constant, the accelerator position may be varying due to a slight inclination of the road, the distance between the vehicle and a vehicle ahead, etc. In such a case, it is necessary to prevent, as securely as possible, hunting of determination due to fluctuations of the minimum expected acceleration (minimum expected acceleration corresponding tire end driving force). Thus, for example, when the upshift conditions have not been fulfilled in the last run of determination, a predetermined value for upshift (hysteresis threshold) is subtracted from the post-upshift tire end driving force.

Incidentally, in place of the condition that (minimum expected acceleration corresponding tire end driving force) < (post-upshift tire end driving force), the condition that (minimum expected acceleration) < (acceleration after upshift) may be used for determination, by calculating the acceleration after upshift according to the formula: [(post-upshift tire end driving force) - (running resistance)]/(vehicle weight), using the post-upshift acceleration calculating means. If the just-mentioned condition is being satisfied, an instruction to make an upshift is issued even during a cruising mode, so that fuel economy is further improved.

As shown in FIG. 11, the downshift control means 104 includes post-downshift engine speed calculating means 250, current-gear engine torque estimating means 252, current-gear engine torque correcting means 254, post-downshift minimum expected acceleration calculating means 256, minimum expected acceleration corresponding tire end driving force calculating means 258, current-gear tire end driving force calculating means 260, effective TH position determining means 262, and downshift determining means 264.

The post-downshift engine speed calculating means 250 calculates the gear after one-gear downshift from the current gear determined from the ratio between a vehicle speed detected by the vehicle speed sensor 40 and an engine speed detected by the engine speed sensor 32, and calculates a gear ratio (downshift gear ratio) from the gear after the one-gear downshift. An engine speed (downshift engine speed) [rpm] after the one-gear downshift is calculated from the downshift gear ratio, the final gear ratio, the vehicle speed [km/h] detected by the vehicle speed sensor 40, and the dynamic loaded radius [m], according to the following formula (10):

$$\text{Downshift engine speed} = (\text{Vehicle speed}) \times (\text{Downshift gear ratio}) \times (\text{Final gear ratio}) \times 1000\,[\text{m/km}]/2 \times \pi \times (\text{Dynamic loaded radius}) \times 60\,[\text{min/h}] = (\text{Vehicle speed}) \times (\text{Upshift gear ratio}) \times (\text{Final gear ratio}) \times 2.6526/(\text{Dynamic loaded radius}) \quad \ldots(10)$$

FIG. 12A is a diagram showing the relationship between throttle position (opening) and engine torque at a certain engine speed in a standard condition (for example, on a level land (1 atm), at a temperature of 25°C). As shown in FIG. 12A, the engine torque increases linearly, at a constant inclination, with the throttle position (opening) in a throttle position range of up to a certain value, and the inclination of the engine torque decreases when the throttle position exceeds the upper limit of the range; beyond a throttle position TH1, the engine torque increases little even when the throttle position increases. In other words, when the throttle position is at or beyond TH1, the ratio of the engine torque variation rate to the throttle position variation rate is not more than a predetermined value. The throttle position TH1 at the lower limit of the range where the engine torque increases little even when the throttle position increases is referred to as effective TH position. In addition, the engine torque Te1 at the effective TH position TH1 is referred to as effective TH corresponding engine torque. As shown in FIG. 12B, the locus of the effective TH position plotted against engine speed is referred to as effective TH corresponding engine torque line f. As shown in FIG. 12C, the effective TH corresponding engine torque on the effective TH corresponding engine torque line f at each engine speed and in a standard condition (for example, at an intake air temperature of 25°C and an atmospheric pressure is that at a level land (1 atm)) is stored in an effective TH corresponding engine torque map 280.

The current-gear engine torque estimating means 252 calculates an engine torque corresponding to a current engine speed (uncorrected current-gear effective TH corresponding engine torque) from a current engine speed detected by the engine speed sensor 32, by searching the effective TH corresponding engine torque map 280.

Besides, the engine torque depends on environmental parameters (for example, intake air temperature and atmospheric pressure). For example, as shown in FIG. 12A, the effective TH position TH1_h at a highland is smaller than the effective TH position TH1 at a level land, and the effective TH corresponding engine torque Te1_h at the effective TH position TH1_h is smaller than the effective TH corresponding engine torque Te1 at the effective TH position TH1. Therefore, the effective TH corresponding engine torque must be corrected according to intake air temperature and atmospheric pressure.

The current-gear engine torque correcting means 254 corrects the current-gear effective TH corresponding engine torque in the manner as follows. A first correction factor relevant to an intake air temperature detected by the intake air temperature sensor 30 is calculated by searching a table storing the relation between intake air temperature and correction factor. A second correction factor relevant to an atmospheric pressure detected by the atmospheric pressure sensor 34 is calculated by searching a table storing the relation between atmospheric pressure and correction factor. The effective TH corresponding engine torque estimated by the current-gear engine torque estimating means 252 is corrected according to the following formula (11):

engine torque = (Uncorrected current-gear effective TH corresponding engine torque) × (First correction factor) × (Second correction factor) ...(11)

The post-downshift minimum expected acceleration calculating means 256 calculates a minimum expected acceleration from a current vehicle speed detected by the vehicle speed sensor 40 and an accelerator position detected by the accelerator position sensor 36, by searching the minimum expected acceleration map 230.

The minimum expected acceleration corresponding tire end driving force calculating means 258 calculates a tire end driving force [N] necessary for producing a minimum expected acceleration (minimum expected acceleration corresponding tire end driving force) from a running resistance [N] calculated by the running resistance arithmetic means 156, a vehicle weight [kg], and a minimum expected acceleration [m/sec$^2$] calculated by the post-downshift minimum expected acceleration calculating means 256, according to the following formula (12) :

Minimum expected acceleration corresponding tire end driving force = (Vehicle weight) × (Minimum expected acceleration) + Running resistance ...(12)

The current-gear tire end driving force calculating means 260 calculates a current-gear tire end driving force [N] from a corrected effective TH corresponding engine torque [Nm] calculated by the current-gear engine torque correcting means 254, a current-gear gear ratio, a final gear ratio, a transmission efficiency, and a dynamic loaded radius [m], according to the following formula (13):

Current-gear effective TH corresponding tire end driving force = (current-gear corrected effective TH corresponding engine torque) × (Gear ratio) × (Final gear ratio) × (transmission efficiency)/(dynamic loaded radius) ...(13)

The effective TH position determining means 262 calculates an effective TH position lower limit corresponding to a current engine speed detected by the engine speed sensor 32, by searching a table storing the effective TH position lower limit at each engine speed, and determines whether or not the TH command value as a throttle position command value for the throttle driving device 26 is greater than the effective TH position lower limit. Here, the TH command value is adopted because it is desirable to determine the driver's intention.

The downshift determining means 264 determines whether downshift instruction conditions are fulfilled or not, and, when the downshift instruction conditions are fulfilled, it gives an instruction to make a downshift, in the manner as described below.

(1) If the TH command value is not more than the effective TH position lower limit, no instruction to make a downshift is issued. Incidentally, if the last TH command value is greater than the effective TH position lower limit, a predetermined value (hysteresis threshold) is subtracted from the effective TH position lower limit. As has been abovementioned, even if the driver thinks he is keeping the accelerator position constant, the accelerator position may be varying. If the accelerator position varies, the engine speed would vary, and the effective TH position lower limit would vary. Therefore, the just-mentioned treatment is needed to prevent, as securely as possible, hunting of the determination of downshift.

(2) No instruction to make a downshift is issued when a VSA control is being performed, when a predetermined period of time has not passed after a VSA control, when an engine alarm lamp at the meter 18 is ON and a failure relating to the engine 2 is present, when a shift change is being made, when a predetermined period of time necessary for clutch engagement after a shift change has not yet passed, when the clutch switch 38 is faulty, or when the vehicle is not running (for example, when the vehicle speed is not more than 5 km/h).

(3) No instruction to make a downshift is issued when an instruction to make an upshift is present.

(4) No instruction to make a downshift is issued when the engine speed after a downshift is not less than an over-rev engine speed. This is for preventing an over-revving from being caused by an increase in engine speed due to the downshift.

(5) An instruction to make a downshift is issued when the situation is other than (1) to (4) above and the current-gear effective TH corresponding tire end driving force is smaller than the minimum expected acceleration corresponding tire end driving force. As a result, an instruction to make a downshift is issued in the case where the driver is depressing the accelerator pedal more than an effective throttle and where the current-gear effective TH corresponding engine torque is not satisfactory for obtaining the minimum expected acceleration. Examples of such a case include a situation in which the minimum expected acceleration cannot be fulfilled even if the driver depresses the accelerator pedal more than the effective TH position during uphill running, and a situation in which an acceleration is needed due to a large running resistance notwithstanding a level road (in the case where the vehicle is loaded with heavy cargo, a large electric load is present, or an adverse wind is blowing). In such a situation, where the minimum expected acceleration cannot be obtained, the amount of fuel would only be increased in a THWOT region, resulting in a loss on a fuel economy basis, and it is desirable to prompt a downshift. Therefore, an instruction to make a downshift is issued in such a situation. In addition, as shown in FIG. 12A, the THWOT region is located at a deeper position than the effective TH position, and the minimum expected acceleration here is set to be higher than that in the case of a low position (small opening). Therefore, in the case where the timing of an upshift instruction is delayed as compared with the case of a low position (small opening) and where a predetermined acceleration cannot be obtained, an instruction to make a downshift is issued. This is because the fuel economy would be worsened in the WOT condition notwithstanding the vehicle does not run. When the driver makes a downshift according to the downshift instruction, the tire end driving force is increased, and the vehicle is accelerated more. In the case where the downshift condition of (5) above is fulfilled even after the downshift, an instruction to make a downshift is issued. This ensures that issuing of a downshift instruction is carried out until the minimum expected acceleration is obtained at an engine torque with the effective TH position at the current gear. As above-mentioned, when for example the downshift conditions have been fulfilled in the last run of determination, a predetermined value for downshift (hysteresis threshold) is subtracted from the current-gear effective TH corresponding tire end driving force, in order to prevent, as securely as possible, hunting of determination of downshift.

As shown in FIG. 13, in order to obtain a minimum expected acceleration corresponding tire end driving force corresponding to the accelerator position and the vehicle speed under the condition where the vehicle is running at a 5th gear speed and where the TH command value is greater than the effective TH position lower limit, an engine torque on an equi-horsepower line (minimum expected equi-horsepower line) g indicated by (1) in the figure is needed. However, this engine torque is greater than the maximum engine torque, and, at the current gear, the minimum expected acceleration cannot be obtained with the effective TH position. In view of this, an instruction to make a downshift to 4th gear is issued.

Besides, in order to obtain a minimum expected acceleration corresponding tire end driving force corresponding to the accelerator position and the vehicle speed in the condition where the TH command value is greater than the effective TH position lower limit after the downshift to the 4th gear, an engine torque on the minimum expected equi-horsepower line g indicated by (2) in the figure is needed. However, this engine torque is greater than the maximum engine torque, and, at the current gear, the minimum expected acceleration cannot be obtained with the effective TH position. In view of this, an instruction to make a downshift to 3rd gear is issued.

Incidentally, in place of the condition that (current-gear effective TH corresponding tire end driving force) < (minimum expected acceleration corresponding tire end driving force), the condition that (current-gear acceleration) < (minimum expected acceleration) may be adopted for determination, by calculating the current-gear acceleration according to the formula: [(current-gear effective TH corresponding tire end driving force) - (running resistance)]/(vehicle weight), by the current-gear acceleration calculating means.

As shown in FIG. 14, the indicator control means 106 has upshift lamp turning-on control means 300, downshift lamp turning-on control means 302, and lamp turning-off control means 304. The upshift lamp turning-on control means 300 controls the turning-on of an upshift instruction lamp at the meter 18 (upshift instruction lamp turning-on) according to an upshift instruction from the upshift control means 102, in the manner as described below.

(1) In the case where an upshift instruction is given from the upshift control means 102 while the lamps are OFF, the upshift lamp is turned ON and a non-instruction delay timer and a downshift instruction redisplay delay timer are set, after the time-out of an upshift instruction redisplay delay timer which has been set to start counting time by the turning-off control means 304 immediately before the turning-off of the lamps. In the case where the time when neither an upshift nor a downshift is instructed is finished in a short time and where an instruction to make an upshift is issued, the upshift lamp is turned ON after the time-out of the upshift instruction redisplay delay timer. Therefore, hunting can be prevented from occurring.

(2) In the case where an upshift instruction is given by the upshift control means 102 while the downshift lamp is ON, the downshift lamp is kept ON until the time-out of the non-instruction delay timer which has been set to start counting time while the downshift lamp is ON according to a downshift instruction, and the upshift instruction redisplay timer is set, by the downshift lamp turning-on control means 302. In addition, the upshift instruction redisplay timer is set, and, upon the time-out of the non-instruction delay timer, the lamp is turned OFF. Thereafter, the upshift lamp is turned ON and the non-instruction delay timer and the downshift instruction redisplay delay timer are set, after the time-out of the upshift redisplay delay timer which has been set to start counting time immediately before the turning-off of the downshift lamp. Even in the case where a downshift instruction is canceled in a short time and where an instruction to make an upshift is issued, the downshift lamp is kept ON until the time-out of the non-instruction delay timer, and the upshift lamp is turned ON after the time-out of the upshift instruction redisplay delay timer, whereby hunting can be prevented from occurring.

The downshift lamp turning-on control means 302 controls the turning-on of a downshift instruction lamp at the meter 18 according to a downshift instruction from the downshift control means 104, in the manner as described below.

(1) In the case where a downshift instruction is given from the downshift control means 104 and an upshift instruction from the upshift control means 102 is canceled while the lamps are OFF, the downshift lamp is turned ON and the non-instruction delay timer and the upshift instruction redisplay delay timer are set, after the time-out of the downshift instruction redisplay delay timer which has been set to start counting time by the turning-off control means 304 immediately before the turning-off of the lamps. In the case where the time when neither upshift nor downshift is instructed is finished in a short time and where an instruction to make a downshift is issued, the downshift lamp is turned ON after the time-out of the upshift instruction redisplay delay timer. Therefore, hunting can be prevented from occurring.

(2) In the case where a downshift instruction is given by the downshift control means 104 and an upshift instruction from the upshift control means 102 is canceled while the upshift lamp is ON, the upshift lamp is kept ON until the time-out of the non-instruction delay timer which has been set to start counting time while the upshift lamp is ON according to an upshift instruction, by the upshift lamp turning-on control means 300. In addition, the downshift instruction redisplay delay timer is set, and, upon the time-out of the non-instruction delay timer, the lamp is turned OFF. Thereafter, the downshift lamp is turned ON and the non-instruction delay timer and the upshift instruction redisplay delay timer are set, after the time-out of the downshift instruction redisplay delay timer which has been set to start counting time immediately before the turning-off of the upshift lamp. Even in the case where an upshift instruction is canceled in a short time and where an instruction to make a downshift is issued, the upshift lamp is kept ON until the time-out of the non-instruction delay timer, and the downshift lamp is turned ON after the time-out of the downshift instruction redisplay delay timer, whereby hunting can be prevented from occurring.

The lamp turning-off control means 304 controls the turning-off of the lamps according to upshift and downshift non-instructions from the upshift control means 102 and the downshift control means 104, in the manner as follows.

When a shift change is being made and when neither upshift nor downshift is being instructed, the upshift lamp or the downshift lamp is kept ON until the time-out of the non-instruction delay timer which is set by the upshift lamp turning-on control means 300 or the downshift lamp turning-on control means 302; in addition, a downshift reinstruction delay timer or an upshift reinstruction delay timer is set. Thereafter, upon the time-out of the non-instruction delay timer, if the lamp(s) is ON, the upshift reinstruction delay timer and the downshift reinstruction delay timer are set, and the lamp(s) is turned OFF. When the lamp(s) has already been turned OFF, the OFF state is continued.

FIGS. 15 to 30 are flowcharts showing a shift controlling method according to an embodiment of the present invention, and the method is carried out repeatedly at a constant cycle time of, for example, 100 ms. Now, the shift controlling method will be described below, referring to the drawings. In step S2 in FIG. 15, the following parameters are acquired.

In step S20 in FIG. 16, a clutch switch signal F_CLSWSIL is substituted for a last-run value F_CLSWSILZ. In step S22, a switch signal F_CLSW2 from the clutch switch 38 is substituted for the current-run value F_CLSWSIL. In step S26, a current-gear gear position NGR calculated from the ratio between an engine speed detected by the engine speed sensor 32 and a vehicle speed detected by the vehicle speed sensor 40 is assigned to NGRSIL. In this case, a limiting process is carried out so that the gear position is located within the range of from 1st gear speed (min) to a maximum gear position #NGRSILLM (5th gear speed in the case of 5-speed MT, 6th gear speed in the case of 6-speed MT) of a maximum (max).

In step S28, a vehicle speed VP [km/h] detected by the vehicle sensor 40 is assigned to a vehicle speed VPSIL. In step S30, a vehicle speed VPSILW[i-1] (i = 1 to 10) is substituted for a vehicle speed VPSILW[i]. In step S32, a vehicle speed VLVNCW (for example, 1/256 km/h) which is a vehicle speed detected by the vehicle speed sensor 40 and is of higher resolution than the vehicle speed used in step S28 is substituted for a vehicle speed VPSILW[0].

In step S34, the value of vehicle speed VPSILW[0] minus vehicle speed VPSILW[10] is assigned to a differential vehicle speed DVPSILW [km/h]. Here, since a sampling interval is set to 100 msec, a vehicle speed difference per 1 second, that is, acceleration (hereinafter DVPSILW will be referred to as acceleration) is obtained in the DVPSILW. In step S36, an engine torque TRQGAIRSL [Nm] is assigned to a current-gear engine torque TRQGIRSIL [Nm].

In step S38, the engine speed detected by the engine speed sensor 32 is assigned to a current-gear engine speed NE100MSL. In step S40, a cylinder intake air amount GAIRCYL detected by the air flow sensor 20 is assigned to a cylinder intake air amount GAIRCYL100MSL.

In step S4 in FIG. 15, the current-gear engine torque TRQGAIRSL is calculated in the following manner. In step S42 in FIG. 17, an in-F/C engine torque TRQGAIRFCSLMX is calculated from the current-gear engine speed NE100MSL and the current-gear cylinder intake air amount GAIRCY100MSL, by searching an in-F/C fundamental engine torque map #TRQGAIRFCSLM 310 shown in FIG. 18A which stores the relations between engine speed and cylinder intake air amount and engine torque at the time of F/C. In FIG. 18A, XTRQGAIRFCSLM is the engine speed during the FC cut, and YTRQGAIRFCSLM is the cylinder intake air amount during the FC cut. In step S44, it is determined whether or not F_FC = 1 (in F/C). When the determination is negative (NO), step S46 is entered. When the determination is affirmative (YES), the control process goes to step S52.

In step S46, since the F/C is not being performed, an engine torque TRQGAIRSLMX at other time than F/C is calculated from the current-gear engine speed NE100MSL and the current-gear cylinder intake air amount GAIRCYL100MSL, by searching a non-F/C-time fundamental engine torque map #TRQGAIRSLM 312 shown in FIG. 18B which stores the relations between engine speed and cylinder intake amount and engine torque at other time than F/C. In FIG. 18B, XTRQGAIRSLM is the engine speed at other time than F/C, and YTRQGAIRSLM is the cylinder intake air amount at other time than FC cut.

In step S50, the engine torque TRQGAIRSLMX at other time than F/C is assigned to the current-gear engine torque TRQGAIRSL.

In step S52, since the F/C is being performed, the in-F/C engine torque TRQGAIRFCSLMX is assigned to the current-gear engine torque TRQGAIRSL. In this way, the engine torque is accurately calculated from the engine speed detected by the engine speed sensor 32 and the cylinder intake air amount detected by the air flow sensor 20, according to the case where F/C is being performed and the other case.

In step S6 in FIG. 15, a post-smoothing running resistance FOCRNRSTPSL is calculated in the manner as follows. First, in step S60 in FIG. 19, a pre-smoothing running resistance FOCRRTSL is calculated in the following manner. In step S80 in FIG. 20, a current-gear gear ratio value calculated from the current-gear gear position NGRSIL by searching a gear ratio table GRRATIOSL 330 shown in FIG. 21A which stores the relation between gear position and gear ratio is assigned to a current-gear gear ratio GRRATIOSL. In FIG. 21A, the axis of abscissas represents gear position, and the axis of ordinates represents gear ratio.

In step S82, a driving system transmission efficiency value, calculated from the current-gear engine speed NE100MSL and the current-gear gear position NGRSIL by searching a driving system transmission efficiency table #KTRSMSSLn 332 shown in FIG. 21B which stores driving system transmission efficiency values on the basis of each gear position in 1st to 6th gears and each engine speed, is assigned to a driving system transmission efficiency KTRSMSSL corresponding to the current-gear engine speed NE100MSL and the current-gear gear position NGRSIL. In FIG. 21B, #KTRSMSSLi (i = 1 to 6) is a table storing the driving system transmission efficiency values at each gear position of 1st to 6th gear speeds, the X-axis represents engine speed, and Z-axis represents each gear position of 1st to 6th gear speeds.

In step S84, the value of current-gear engine torque TRQGIRSIL [Nm] × current-gear gear ratio GRRATIOSL × final gear ratio #GRRATIOFSL × driving system transmission efficiency KTRSMSSL is assigned to a current-gear tire end driving torque TRQTRSILP [Nm].

In step S86, the value of current-gear tire end driving torque TRQTRSILP [Nm] / dynamic loaded radius #LTIRRADSL [m] is assigned to a current-gear tire end driving force FOCTRSL [N]. In step S88, a pre-last-filtering current-gear tire end driving force FOCTRSLWZ in the last run of processing is assigned to a pre-filtering-before-last current-gear tire end driving force FOCTRSLWZZ. In step S90, a pre-current-filtering current-gear tire end driving force FOCTRSLW in the last run of processing is assigned to a pre-last-filtering current-gear tire end driving force FOCTRSLWZ. In step S92, a current-gear tire end driving force FOCTRSL is assigned to a pre-current-filtering current-gear tire end driving force FOCTRSLW.

In step S94, a post-last-filtering current-gear tire end driving force FOCTRFPSLWZ in the last run of processing is assigned to a post-filtering-before-last current-gear tire end driving force FOCTRFPSLWZZ. In step S96, a post-current-filtering current-gear tire end driving force FOCTRFPSLW in the last run of processing is assigned to a post-last-filtering current-gear tire end driving force FOCTRFPSLWZ.

In step S98, the value of (first filter coefficient #KFLTA1SL × pre-filtering-before-last current-gear tire end driving force FOCTRSLWZZ + second filter coefficient #KFLTA2SL × pre-filtering-before-last current-gear tire end driving force FOCTRSLWZ + third filter coefficient #KFLTA3SL × pre-current-filtering current-gear tire end driving force FOCTRSLW) - (fourth filter coefficient #KFLTB2SL × post-last-filtering current-gear tire end driving force FOCTRFPSLWZ + fifth filter coefficient #KFLTB1SL × post-filtering-before-last current-gear tire end driving force FOCTRFPSLWZZ) is assigned to a post-current-filtering current-gear tire end driving force FOCTRFPSLW.

Here, the filter coefficients #KFLTA1SL, #KFLTA2SL, #KFLTA3SL, #KFLTB1SL, and #KFLTB2SL are tap coefficients of FIR filters having a cutoff frequency of 4 to 5 Hz in a driving system from a torque as input to the tire end.

In step S100, a post-current-filtering current-gear tire end driving force FOCTRFPSLW is assigned to a post-filtering current-gear tire end driving force FOCTRFPSL. In step S102, the value of (acceleration DVPSILW × 1000 × vehicle weight #WTCRSL [kg])/3600 is assigned to an acceleration resistance FOCACCVPSL [N]. In step S104, the value of post-filtering current-gear tire end driving force FOCTRFPSL - acceleration resistance FOCACCVPSL is assigned to a pre-smoothing running resistance FOCRRTSL.

In step S62 in FIG. 19, it is determined whether or not a standstill flag F_VAIC = 1, that is, whether or not the vehicle is not at standstill (the vehicle speed is not less than 5 km/h). When the determination is affirmative (YES), step S64 is entered; on the other hand, when the determination is negative (NO), the control process goes to step S74.

In step S64, since the vehicle is not at standstill, it is determined whether or not the current-gear gear position NGRSIL is not less than an estimated running resistance calculation lower limit #NGFOCRNRSTL (2nd gear speed). When the determination is affirmative (YES), step S66 is entered. When the determination is negative (NO), FOCRNRSTPSL in the last run of processing is held.

In step S66, it is determined whether or not VSAMODE indicating that a VSA control is being performed is other than 0. When the determination is affirmative (YES), it means that the VSA control is being conducted, and the control process returns. Under the condition where the VSA is effective, the engine torque would vary independently from the vehicle speed, so that the running resistance value may be deviated from the true value, and an erroneous instruction may be issued. When the determination is negative (NO), it means that the VSA control is not being executed, and step S68 is entered.

In step S68, it is determined whether or not a shift instruction inhibition flag F_SILOFF = 1, namely, whether or not shift instruction is inhibited. When the determination is affirmative (YES), it means that shift instruction is inhibited, and the control process returns. When the determination is negative (NO), it means that shift instruction is not inhibited, and step S70 is entered.

In step S70, it is determined whether or not a brake switch signal outputted from the brake switch 42 is F_BKSW = 1, namely, whether or not the brake pedal is being depressed. When the determination is affirmative (YES), it means that the brake pedal is being depressed, and the control process returns, like in the case of the VSA control under way. If the determination is negative (NO), it means that the brake pedal is not being depressed, and step S72 is entered.

In step S72, the value of (1 - smoothing coefficient #KFOCRNRSTPSL) × post-last-smoothing running resistance FOCRNRSTPSL + smoothing coefficient #KFOCRNRSTPSL × pre-current-smoothing running resistance FOCRRTSL is assigned to a post-current-smoothing running resistance FOCRNRSTPSL. In step S74, since the vehicle is at standstill, the post-current-smoothing running resistance FOCRNRSTPSL is initialized (for example, set to a running resistance in a low-vehicle-speed region).

In step S8 in FIG. 15, it is determined whether or not shift instruction is to be inhibited, in the manner as follows. In step S120 in FIG. 22, it is determined whether or not F_MILON = 1 which means misfire, a failure of the throttle driving device 26 or the like relevant to the case where an engine alarm lamp is turned ON. When the determination is negative (NO), step S122 is entered. When the determination is affirmative (YES), it means the occurrence of misfire, a failure of the throttle driving device 26 or the like relevant to the case where the engine alarm lamp is turned ON, the control process goes to step S134 so as to inhibit shift instructions.

In step S122, it is determined whether or not a shift change is being performed, in the following manner. Upon transition from the last-run clutch signal F_CLSWSILZ = 0 to the current-run clutch signal F_CLSWSIL = 1, a setting of in-shift-change flag F_SILCHG = 1 is made. When transition from the last-run clutch signal F_CLSWSILZ = 1 to the current-run clutch signal F_CLSWSIL = 0 is made, a setting of F_SILCHG = 0 is made after the lapse of a predetermined period of time (in other words, after the time-out of a timer provided for absorbing a discrepancy between a contact of the clutch switch 38 and the point at which the clutch 4 is actually connected to the engine 2). In addition, when a condition where there is no difference between the last-run clutch signal value F_CLSWSILZ and the current-run value F_CLSWSIL = 1 and where a change is made in gear position is successively generated a predetermined number of times, it is determined that there is a failure relating to the clutch switch 38, and a setting of the in-shift-change flag F_SILCHG = 1 is made.

In step S124, it is determined whether or not the in-shift-change flag F_SILCHG = 1. When the determination is affirmative (YES), it means that a shift change is being made, so the control process goes to step S134 so as to inhibit shift instructions. While the clutch pedal 12 is kept depressed, an accurate gear determination is impossible, and, therefore, a new shift instruction is inhibited; the new shift instruction is permitted when the clutch pedal 12 is released.

In step S126, it is determined whether or not VSA_MODE ≠ 0, which indicates whether or not a VSA control is being performed. When the determination is affirmative, the control process goes to step S128 so as to set a timer provided for canceling a shift instruction inhibition after the lapse of a predetermined period of time (post- VSA shift instruction inhibition time #TMSILDVSA) after completion of a VSA control. When the determination is negative (NO), step S130 is entered.

In step S128, a post-VSA shift instruction inhibition time #TMSILDVSA is assigned to a post-VSA shift instruction inhibition timer TSILDVSA, and the control process goes to step 134. In step S130, it is determined whether or not the post-VSA shift instruction inhibition timer TSILDVSA = 0 (the post-VSA shift instruction inhibition timer TSILDVSA has come to time-out). When the determination is affirmative (YES), the control process goes to step S132. When the determination is negative (NO), the control process goes to step S134. In step S132, 0 is assigned to a shift inhibition flag F_SILOFF so as to permit shift instructions.

In step S134, 1 is assigned to the shift inhibition flag F_SILOFF so as to inhibit shift instructions. In this manner, in the case of misfire or failure of the throttle driving device 26, shift instructions are inhibited irrespectively of whether a shift change is being performed, a VSA is being performed, or a VSA has been performed, the inhibition being kept until the time-out of the post-VSA shift instruction inhibition timer TSILDVSA.

In step S10 in FIG. 15, it is determined whether or not an instruction to make an upshift is to be issued. First, in step S150 in FIG. 23, it is detected whether or not it is possible to obtain a driving force necessary for the upshift instruction at the time of displaying an upshift, in the manner as follows. In step S200 in FIG. 24, in the case where an auto-cruising mode is not being adopted, based on an accelerator position APSPDRB obtained upon such correction that the position obtained by removing a play of the accelerator pedal from the accelerator position detected by the accelerator position sensor 36 is set to 0%, and a vehicle speed VPSIL, a minimum expected acceleration value corresponding to the accelerator position APSPDRB and the vehicle speed VPSIL is obtained by searching a minimum expected acceleration map #GSILLMTLM 350 for other time than auto-cruising in FIG. 25A which stores the relations between accelerator pedal and vehicle speed and minimum expected acceleration, and the thus obtained value is assigned to the minimum expected acceleration GSILLMTLMX [m/sec$^2$]. In the minimum expected acceleration map #GSILLMTLM 350 for other time than auto-cruising in FIG. 25A, the axis of abscissas represents accelerator position, the axis of ordinates represents vehicle speed, the minimum expected acceleration does not depend on accelerator position but is determined according only to vehicle speed, until the accelerator position reaches a certain value (for example, 30%).

In the case where auto-cruising is being adopted, based on a throttle command value THO and a vehicle speed VPSIL, a minimum expected acceleration value corresponding to the throttle command value and the vehicle speed VPSIL is obtained by searching a minimum expected acceleration map 351 for auto-cruising in FIG. 25A which stores relations between throttle command value and vehicle speed and minimum expected acceleration, and the thus obtained value is assigned to the minimum expected acceleration GSILLMTLMX [m/sec$^2$]. In the minimum expected acceleration map 351 for auto-cruising in FIG. 25A, the axis of abscissas represents throttle command value, and the axis of ordinates represents vehicle speed.

In step S202, the value of vehicle weight #WTCRSL [kg] × minimum expected acceleration GSILLMTLMX [m/sec$^2$] is assigned to an acceleration resistance (minimum expected acceleration resistance) FOCACCAPSL [N] corresponding to the minimum expected acceleration. In step S204, the value of minimum expected acceleration resistance FOCACCAPSL + post-smoothing running resistance FOCRNRSTPSL is assigned to a minimum expected acceleration corresponding tire end driving force FDLMTL. In step S206, the value of current-gear gear position NGR + 1 [gear speed] is assigned to a post-upshift gear position NGRNXTUSL.

In step S208, based on the post-upshift gear position NGRNXTUSL, a gear ratio value corresponding to the post-upshift gear position NGRNXTUSL is obtained by searching a gear ratio table #GRRATIOSL 330 shown in FIG. 25B which stores the relation between gear position and gear ratio, and the thus obtained value is assigned to a post-upshift gear ratio GRRATIONXTU.

In step S210, the value of vehicle speed VPSIL × post-upshift gear ratio GRRATIONXTU × final gear ratio #GRRATIOFSL / dynamic loaded radius #LTIRRADSL × 2.6526 is assigned to a post-upshift estimated engine speed NENXTSILU [rpm].

In step S212, based on the post-upshift estimated engine speed NENXTSILU, a linear portion maximum engine torque TRQSILUPX corresponding to the post-upshift estimated engine speed NENXTSILU is obtained by searching a TH-TRQ linearity line map #TRQSILUP 354 shown in FIG. 25C which stores the relation between engine speed and TH-TRQ linear portion maximum torque. In FIG. 25C, the axis of abscissas represents engine speed, and the axis of ordinates represents linear portion maximum engine torque located on a TH-TRQ linearity line corresponding to each engine speed.

In step S214, based on an atmospheric pressure PA detected by the atmospheric pressure sensor 34, a linear portion maximum engine torque correction factor #KPASILX for the atmospheric pressure PA is obtained by searching a PA correction factor table #KPASIL 356 shown in FIG. 25D which stores values of linear portion maximum engine torque correction factor for values of atmospheric pressure PA. In FIG. 25D, the axis of abscissas represents atmospheric pressure, and the axis of ordinates represents linear portion maximum engine torque correction factor.

In step S216, based on an intake air temperature TA detected by the intake air temperature sensor 30, a linear portion maximum engine torque correction factor #KTASILX for the intake air temperature TA is obtained by searching a TA correction factor table #KTASIL 358 shown in FIG. 25E which stores values of linear portion maximum engine torque correction factor for values of intake air temperature TA. In FIG. 25E, the axis of abscissas represents intake air temperature, and the axis of ordinates represents linear portion maximum engine torque correction factor.

In step S218, the value of linear portion maximum engine torque TRQSILUPX × linear portion maximum engine torque correction factor #KPASILX × linear portion maximum engine torque correction factor #KTASILX is assigned to a linear portion maximum engine torque (after environmental correction) TRQSILUF at next-gear engine speed. In step S220, based on the post-upshift estimated engine speed NENXTSILU and the post-upshift gear position NGRNXTUSL, a post-upshift driving system transmission efficiency KTRSMSUSL corresponding to the post-upshift estimated engine speed NENXTSILU and the post-upshift gear position NGRNXTUSL is obtained by searching a driving system transmission efficiency table #KTRSMSSLn 332 shown in FIG. 25F.

In step S222, the value of next-gear engine speed linear portion maximum engine torque TRQSILUF × post-upshift gear ratio GRRATIONXTU × final gear ratio #GRRATIOFSL × post-upshift driving system transmission efficiency KTRSMSUSL / dynamic loaded radius #LTIRRADSL is assigned to a post-upshift tire end driving force FDSILUP.

In step S224, it is determined whether or not a post-upshift realizability flag F_FDSILUP = 1, the flag indicating whether or not it is possible to realize a minimum expected acceleration at a TH-TRQ linear portion after last upshift. When the determination is negative (NO), step S226 is entered. When the determination is affirmative, the control process goes to step S228. In step S226, since the last-run value of post-upshift realizability flag F_FDSILUP is 0, the value of post-upshift tire end driving force FDSILUP - upshift determining hysteresis data #DFDSILU is assigned to an upshift driving force determining threshold FDSILUPG.

Since the accelerator position is used in calculating the minimum expected acceleration, even if the driver thinks he is keeping the accelerator pedal position constant, the accelerator pedal position may be varying. In this case, in order to prevent hunting of determination from occurring due to fluctuations of minimum expected acceleration, a value corresponding to the hysteresis data #DFDSILU is subtracted from the post-upshift tire end driving force FDSILUP so that the post-upshift realizability flag will be easily maintained in the last-run state. In step S228, the post-upshift tire end driving force FDILUP is assigned to the upshift driving force determining threshold FDSILUPG.

In step S230, it is determined whether or not minimum expected acceleration corresponding tire end driving force FDLMTL ≤ upshift driving force determining threshold FDSILUPG. When the determination is affirmative (YES), step S232 is entered. When the determination is negative (NO), the control process goes to step S234. In step S232, since it is possible to obtain a minimum expected acceleration at the TH-TRQ linear portion after upshift, a setting of post-upshift realizability flag F_FDSILUP = 1 is made, so as to improve fuel economy. In step S234, since it is impossible to obtain the minimum expected acceleration at the TH-TRQ linear portion after the upshift, response would be bad in obtaining the minimum expected acceleration; in view of this, a setting of post-upshift realizability flag F_FDSILUP = 0 is made.

In step S152 in FIG. 23, it is determined whether or not a shift instruction inhibition flag F_SILOFF = 1. When the determination is negative (NO), it means that shift instructions are not inhibited, and step S154 is entered. When the determination is affirmative (YES), it means that shift instructions are inhibited, so the control process goes to step S174. In step S154, it is determined whether or not current-gear gear position NGRSIL ≥ fastest gear position #NGRSILLM (for example, 5th gear position in the case of 5-speed MT, 6th gear position in the case of 6-speed MT). When the determination is negative (NO), step S156 is entered. When the determination is affirmative (YES), it means that the current-gear gear position NGRSIL is the fastest gear position #NGRSILLM and it is impossible to make an upshift, so the control process goes to step S174.

In step S156, it is determined whether or not a standstill flag F_VAIC = 1 (for example, the vehicle speed ≥ 5 km/h). When the determination is affirmative (YES), it means that the vehicle is running, and step S158 is entered. When the determination is negative (NO), it means that the vehicle is at standstill, so the control process goes to step S174. In step S158, it is determined whether or not a brake switch F_BKSW = 1. When the determination is negative (NO), it means that the brake pedal is not being depressed, and step S160 is entered. When the determination is affirmative (YES), it means that the brake pedal is being depressed, so the control process goes to step S174.

In step S160, it is determined whether or not current-gear engine speed NE100MSL ≥ forced upshift instruction determining speed #NESILUP (for example, 4500 rpm). When the determination is affirmative (YES), the control process goes to step S166 so as to make an upshift, to lower the engine speed and to improve fuel economy (driving force conditions being satisfied). When the determination is negative (NO), step S162 is entered. In step S162, it is determined whether or not post-upshift engine speed NENXTSILU ≥ vehicle body vibration obviating engine speed #NENXSILUL (for example, 1100 rpm). When the determination is affirmative (YES), there is no possibility of worsened driveability such as vehicle body vibration after the upshift, so step S164 is entered. When the determination is negative (NO), there is a fear of worsened driveability such as vehicle body vibration upon an upshift, so the control process goes to step S174.

In step S164, it is determined whether or not the post-upshift realizability flag F_FDSILUP = 1. When the determination is affirmative (YES), it is possible to obtain a minimum expected acceleration at the TH-TRQ linear portion after an upshift (driving force conditions being satisfied), and step S166 is entered. When the determination is negative (NO), the control process goes to step S174.

In step S166, it is determined whether or not an accelerator pedal full closure flag F_APOPEN = 1. When the determination is negative (NO), it means that the accelerator pedal is at a position for full closure, and step S168 is entered so as to inhibit an upshift in principle. When the determination is affirmative (YES), it means that the accelerator pedal is not in the position for full closure, so the control process goes to step S178.

In step S168, it is determined whether or not a shift indicator command value SHIFTIND = 02h (upshift lamp being ON). When the determination is affirmative (YES), it means that the upshift lamp has been ON at the time of the accelerator pedal being set in the position for full closure, and step S170 is entered. When the determination is negative (NO), it means that the upshift lamp has been OFF at the time of the accelerator pedal being set in the position for full closure, so the control process goes to step S174.

In step S170, it is determined whether or not an upshift inhibition delay timer TSILUAPD = 0. When the determination is negative (NO), it means that the accelerator pedal has been set in the position for full closure when the upshift lamp has been ON, step S179 is entered so as to turn off the upshift lamp after the time-out of the upshift inhibition delay timer TSILUAPD.

In step S178, since the accelerator pedal is not in the position for full closure, an accelerator pedal full closure time upshift inhibition delay timer #TMSILUPD is assigned to the upshift inhibition delay timer TSILUAPD, and step S179 is entered. In step S179, a setting of an upshift instruction flag F_SILUP = 1 is made. This ensures that, in the case where the upshift lamp has been ON at the time of the accelerator pedal being set in the position for full closure, the upshift lamp is kept ON until the time-out of the upshift inhibition delay timer TSILUAPD. At the time of entering an upshift operation according to an upshift instruction, also, it is possible for the accelerator pedal to be set in the position for full closure. If the upshift lamp is turned OFF as soon as the accelerator pedal is set into the position for full closure, the instruction would be lost before the clutch pedal 12 is depressed. To avoid this problem, a delay is provided here.

In step S174, 0 is assigned to an upshift inhibition delay timer TSILUAPD. In step S176, a setting of the upshift instruction flag F_SILUP = 0 is made, whereby upshift is inhibited.

In step S12 in FIG. 15, it is determined whether or not a downshift instruction is to be issued, in the manner as follows. First, in step S250 in FIG. 26, at the time of displaying a downshift, it is determined whether or not it is possible to exhibit a minimum expected acceleration within an effective TH at the current gear, in the following manner.

In step S300 in FIG. 28, the value of current-gear gear position NGR - 1 [gear speed] is assigned to a post-downshift gear position NGRNXTDSL. In step S302, based on the post-downshift gear position NGRNXTDSL, a gear ratio corresponding to the post-downshift gear position NGRNXTDSL is obtained by searching a gear ratio table #GRRATIOSL 330 shown in FIG. 29A which stores the relation between gear position and gear ratio, and the thus obtained gear ratio is assigned to the post-downshift gear position GRRATIONXTD. In step S304, the value of vehicle speed VPSIL × post-downshift gear ratio GRRATIONXTD × final gear ratio #GRRATIOFSL / dynamic loaded radius #LTIRRADSL × 2.6526 is assigned to a post-downshift estimated engine speed NENXTSILD [rpm].

In step S306, based on an engine speed NE100MSL detected by the engine speed sensor 32, an effective TH corresponding engine torque TRQSILDNX corresponding to the engine speed NE100MSL is obtained by searching an effective TH corresponding engine torque map #TRQSILDN 372 shown in FIG. 29B which stores values of engine torque corresponding to values of effective TH.

In step S308, the value of current-gear effective TH corresponding engine torque TRQSILDNX × engine torque correction factor #KPASILX × engine torque correction factor #KTASILX is assigned to a downshift time effective TH corresponding engine torque (after environmental correction) TRQSILDF. Incidentally, the engine torque correction factor #KPASILX is the correction factor calculated in step S214 in FIG. 24, whereas the engine torque correction factor #KTASILX is the correction factor calculated in step S216 in FIG. 24.

In step S310, the value of current-gear effective TH corresponding engine torque TRQSILDF × current-gear gear ratio GRRATIOSL × final gear ratio #GRRATIOFSL × current-gear driving system transmission efficiency KTRSMSSL / dynamic loaded radius #LTIRRADSL is assigned to a current-gear effective TH corresponding tire end driving force FDSILDN. The current-gear driving system transmission efficiency KTRSMSSL is the transmission efficiency calculated in step S82 in FIG. 20.

In step S312, it is determined whether or not (last-run value of within-effective-TH-position minimum expected acceleration realizability flag F_FDSILDN) = 1, the flag indicating whether or not it is possible to realize a minimum expected acceleration in the effective TH position at current gear. Incidentally, the expression of F_FDSILDN = 1 indicates that it is impossible to realize a minimum expected acceleration within the effective TH position at the current gear. When the determination is affirmative (YES), step S314 is entered. When the determination is negative (NO), the control process goes to step S315.

In step S314, the value of current-gear effective TH corresponding tire end driving force FDSILDN - downshift hysteresis data #DFDSILD is assigned to a downshift driving force determining threshold FDSILDNG. This is for preventing hunting of downshift determination from occurring due to fluctuations of the minimum expected acceleration arising from variations in the accelerator pedal position, as above-mentioned.

In step S315, a current-gear effective TH corresponding tire end driving force FDSILDN is assigned to the downshift driving force determining threshold FDSILDNG.

In step S316, it is determined whether or not minimum expected acceleration corresponding tire end driving force FDLMTL ≥ downshift driving force determining threshold FDSILDNG. When the determination is affirmative (YES), step S318 is entered. When the determination is negative (NO), the control process goes to step S320. In step S318, since it is impossible to obtain a minimum expected acceleration within the effective TH position at the current gear, a setting of within-effective-TH-position minimum expected acceleration realizability flag F_FDSILDN = 1 is made. In step S320, since it is possible to obtain a minimum expected accelerator within the effective TH position at the current gear, it is unnecessary to issue a downshift instruction, so a setting of within-effective-TH-position minimum expected acceleration realizability flag F_FDSILDN = 0 is made.

In step S252 in FIG. 26, based on an engine speed NE100MSL detected by the engine speed sensor 32, an effective TH position determining value THSILDNHX corresponding to the engine speed NE100MSL is obtained by searching an effective TH position determining table #THSILDNH 370 shown in FIG. 27 which stores an effective TH position upper limit at each engine speed. In FIG. 27, the axis of abscissas represents engine speed, and the axis of ordinates represents effective TH position upper limit for engine speed.

In step S254, it is determined whether or not (last-run value of effective TH flag F_SILDNTH) = 1. When the determination is affirmative (YES), step S256 is entered. When the determination is negative (NO), the control process goes to step S257. In step S256, the value of effective TH position determining value THSILDNHX - downshift hysteresis data #DTHSILDN is assigned to an effective TH position determining threshold THSILDN. This is for preventing hunting of downshift determination from occurring due to fluctuations of TH command value (THO) arising from variations of accelerator pedal position, as above-mentioned. In step S257, the effective TH position determining value THSILDNHX is assigned to an effective TH position determining threshold THSILDN.

In step S258, it is determined whether or not final target TH position value (command value) THO > effective TH position determining threshold THSILDN. When the determination is affirmative (YES), step S260 is entered. When the determination is negative (NO), the control process goes to step S276.

In step S260, since the throttle position (opening) THO exceeds the effective TH position determining threshold THSILDN, 1 is assigned to the effective TH flag F_SILDNTH. In step S262, it is determined whether or not shift instruction inhibition flag F_SILOFF = 1. When the determination is negative (NO), it means that shift instructions are not inhibited, and step S264 is entered. When the determination is affirmative (YES), it means that shift instructions are inhibited, so the control process goes to step S278.

In step S264, it is determined whether or not the upshift instruction flag F_SILUP = 1. When the determination is negative (NO), step S266 is entered. When the determination is affirmative (YES), it means that an upshift is being instructed, so the control process goes to step S278.

In step S266, it is determined whether or not the current-gear gear position NGRSIL ≤ downshift execution lower limit gear #NGRSILDN (for example, 2nd gear). When the determination is negative (NO), step S268 is entered. When the determination is affirmative (YES), the control process goes to step S278. In step S268, it is determined whether or not the standstill flag F_VAIC = 1 (the vehicle is not at standstill, i.e., the vehicle speed is, for example, not less than 5 km/h). When the determination is affirmative (YES), it means that the vehicle is not at standstill, and step S270 is entered. When the determination is negative (NO), it means that the vehicle is at standstill, so the control process goes to step S278.

In step S270, it is determined whether or not a post-downshift estimated engine speed NENTSILD ≥ over-rev avoiding upper limit engine speed #NENXSILDH. When the determination is negative (NO), step S272 is entered. When the determination is affirmative (YES), the control process goes to step S278 so as to avoid an over-revving after a downshift. Incidentally, the over-rev avoiding upper limit engine speed #NENXSILDH is set to be equal to the forced upshift instruction determining speed #NESILUP.

In step S272, it is determined whether or not a within-effective-TH-position minimum expected acceleration realizability flag F_FDSILDN = 1. When the determination is affirmative (YES), step S274 is entered. When the determination is negative (NO), the control process goes to step S278. In step S274, since a final target TH position value has exceeded an effective TH upper limit and it is impossible to realize a minimum expected acceleration with a maximum engine torque within the effective TH at the current gear, a setting of the downshift instruction flag F_SILDN = 1 is made so as to instruct a downshift and to increase the tire end driving force.

In step S276, since the final target TH position value THO is not more than the effective TH position determining threshold THSILDN, a setting of the effective TH flag F_SILDNTH = 0 is made, and the control process goes to step S278. In step S278, a setting of the downshift instruction flag F_SILDN = 0 is made so as to inhibit an instruction to make a downshift.

In step S14 in FIG. 15, turning-on of the upshift lamp, turning-on of the downshift lamp, and turning-off of the lamps at the meter 18 are controlled in the manner as follows. FIG. 31 is a time chart relating to the turning-on of the upshift lamp, turning-on of the downshift lamp, and turning-off of the lamps.

In step S350 in FIG. 30, it is determined whether or not an in-shift-change flag F_SILCHG = 1. When the determination is negative (NO), step S352 is entered. When the determination is affirmative (YES), the control process goes to S356 so as to hold a last-run value of the shift indicator command value SHIFTIND until the time-out of a non-instruction delay timer TSILOFFD, and to turn OFF the shift lamps upon the time-out.

In step S352, it is determined whether or not the upshift instruction flag F_SILUP = 1. When the determination is affirmative (YES), the control process goes to step S370. When the determination is negative (NO), step S354 is entered. In step S370, it is determined whether or not an upshift instruction redisplay delay timer TSILUPOND = 0. When the determination is affirmative (YES), step S372 is entered. When the determination is negative (NO), step S376 is entered.

For example, when the condition of the upshift instruction flag F_SILUP = 1 is generated at time t4 in FIG. 31, the upshift instruction redisplay delay timer #TSILUPOND, having been set when the shift indicator command value SHIFTIND = 1 (downshift lamp being ON) during the period of time t1 to t3 and having started counting time at time t3 simultaneously with the attainment of the condition of the shift indicator command value SHIFTIND = 0 (lamps turned OFF), has not yet come to time-out, so the control process goes to step S376.

In step S376, it is determined whether or not the non-instruction delay timer TSILOFFD = 0. When the determination is negative (NO), the control process goes to step S392. When the determination is affirmative (YES), step S378 is entered. In step S378, a setting of the shift indicator command value SHIFTIND = 0 (lamps turned OFF) is made, and the control process returns.

In step S372, a downshift instruction redisplay delay time #TMSILDNOND is assigned to a downshift instruction redisplay delay timer TSILDNOND. This is for ensuring that the downshift lamp is turned ON after the time-out of the downshift instruction redisplay delay timer TSILDNOND is reached. In step S374, a setting of the shift indicator command value SHIFTIND = 02h is made, and the upshift lamp is turned ON. For example, the upshift lamp is turned ON at time t5 when the upshift instruction redisplay delay timer TMSILUPON comes to time-out.

In step S386, a non-instruction delay time #TMSILOFFD is assigned to the non-instruction delay timer TSILOFFD, and the control process returns.

In step S354, it is determined whether or not the downshift instruction flag F_SILDN = 1. When the determination is affirmative (YES), the control process goes to step S380. When the determination is negative (NO), step S356 is entered. For example, the condition of the downshift instruction flag F_SILDN = 1 is attained at time t1, so the control process goes to step S380.

In step S380, it is determined whether or not the downshift instruction redisplay delay timer TSILDNOND = 0. When the determination is affirmative (YES), step S382 is entered. When the determination is negative (NO), the control process goes to step S388. For example, the downshift instruction redisplay delay timer TSILDNOND is in a time-out state at time t1, so step S382 is entered.

In step S382, an upshift instruction redisplay delay time #TMSILUPOND is assigned to the upshift instruction redisplay delay timer TSILUPOND. This is for ensuring that the upshift lamp is turned OFF after the time-out of the upshift instruction redisplay delay timer TMSILUPOND is reached. In step S384, a setting of the shift indicator command value SHIFTIND = 01h is made, and the downshift lamp is turned ON. For example, the downshift lamp is turned ON at time t1. In step S386, a non-instruction delay time #TMSILOFFD is assigned to the non-instruction delay timer TSILOFFD, and the control process returns.

In step S388, it is determined whether or not the non-instruction delay timer TSILOFFD = 0. When the determination is negative (NO), the control process goes to step S392. When the determination is affirmative (YES), step S390 is entered. In step S390, a setting of the shift indicator command value SHIFTIND = 0 (lamps turned OFF) is made, and the control process returns.

In step S356, it is determined whether or not the non-instruction delay timer TSILOFFD = 0. When the determination is affirmative (YES), step S358 is entered. When the determination is negative (NO), the control process goes to step S392. During the periods of time t3 to t4 and t7 to t9, step S358 is entered, whereas during the periods of time t2 to t3 and t6 to t7, the control process goes to step S392.

In step S392, it is determined whether or not the shift indicator command value SHIFTIND = 02h (upshift lamp ON). When the determination is affirmative (YES), the control process goes to step S398. When the determination is negative (NO), step S394 is entered.

In step S398, a downshift instruction redisplay delay time #TMSILDNOND is assigned to the downshift instruction redisplay delay timer TSILDNOND, and the control process returns. For example, even if the condition of the upshift instruction flag F_SILUP = 0 is attained and an upshift instruction is canceled at time t6, the upshift lamp is kept ON until time t7 when the time-out of the non-instruction delay timer TSILOFFD is reached, whereby hunting is prevented from occurring.

In step S394, it is determined whether or not the shift indicator command value SHIFTIND = 01h (downshift lamp ON). When the determination is affirmative (YES), step S396 is entered. When the determination is negative (NO), the control process returns. In step S396, an upshift instruction redisplay delay time #TMSILUPOND is assigned to the upshift instruction redisplay delay timer TSILUPOND, and the control process returns.

For example, even if the condition of the downshift instruction flag F_SILDN = 0 is attained and a downshift instruction is canceled at time t2, the downshift lamp is kept ON until time t3 when the time-out of the non-instruction delay timer TSILOFFD is reached, whereby hunting is prevented from occurring.

In step S358, it is determined whether or not the shift indicator command value SHIFTIND = 00h. When the determination is affirmative (YES), it means that the lamps were OFF at the last run of processing, so the control process goes to step S364. When the determination is negative (NO), step S360 is entered.

In step S360, a downshift instruction redisplay delay time #TMSILDNOND is assigned to the downshift instruction redisplay delay timer TSILDNOND. In step S362, an upshift instruction redisplay delay time #TMSILUPOND is assigned to the upshift instruction redisplay delay timer TSILUPOND.

For example, when the time-out of the non-instruction delay timer TSILOFFD is reached at time t3, t7, the downshift instruction redisplay delay time #TMSILDNOND is assigned to the downshift instruction redisplay delay timer TSILDNOND, and the upshift instruction redisplay delay time #TMSILUPOND to the upshift instruction redisplay delay timer TSILUPOND, in step S360, S362, so that turning-on of lamp(s) is inhibited until time t5, t8 when the time-out of the upshift instruction redisplay delay timer TSILUPOND, the downshift instruction redisplay delay timer TSILDNOND is reached, whereby the lamps are kept OFF and hunting is prevented from occurring.

In step S364, a setting of the shift indicator command value SHIFTIND = 00h (lamps turned OFF) is made, and the control process returns. When the condition of the upshift instruction flag F_SILUP = 1 is attained at time t9, the upshift lamp is turned ON, since the upshift instruction redisplay delay timer TSILUPOND is in a time-out state.

According to steps S350-S398 as above, the control process proceeds as follows.

(1) When the condition where the upshift instruction flag F_SILUP = 0 and the downshift instruction flag F_SILDN = 0 is generated under the condition where the upshift instruction flag F_SILUP = 1 and the upshift lamp is ON, the lamp is turned OFF after the time-out of the non-instruction delay timer TSILOFFD is obtained in step S356. Therefore, even if the upshift instruction flag F_SILUP turns to be 0 in a short time, the upshift lamp is kept ON until the non-instruction delay timer TSILOFFD comes to time-out, whereby hunting is prevented from occurring. In addition, when the condition of the upshift instruction flag F_SILUP = 1 is attained after the lamp is turned OFF, the upshift lamp is turned ON after the time-out of the upshift instruction redisplay delay timer TSILUPOND is obtained in step S370. Therefore, even when the condition of the upshift instruction flag F_SILUP = 1 is generated in a short time starting from the condition where the upshift instruction flag F_SILUP = 0 and the downshift instruction flag F_SILDN = 0, the upshift lamp is turned ON after the upshift instruction redisplay delay timer TSILUPOND comes to time-out, and, accordingly, hunting can be prevented from occurring.

(2) When the conditions of the upshift instruction flag F_SILUP = 0 and the downshift instruction flag F_SILDN = 0 are attained in the condition where the upshift instruction flag F_SILUP = 0 and the downshift instruction flag F_ SILDN = 1 with the downshift lamp being ON, the lamp is turned OFF after the time-out of the non-instruction delay timer TSILODFFD is obtained in step S356. Therefore, even if the downshift instruction flag F_SILDN turns to be 0 in a short time, the downshift lamp is kept ON until the non-instruction delay timer TSILOFFD comes to time-out, whereby hunting is prevented from occurring. Besides, when the conditions of the upshift instruction flag F_SILUP = 0 and the downshift instruction flag F_SILDN = 1 are attained after the lamps are turned OFF, the downshift lamp is turned ON after the time-out of the downshift instruction redisplay delay timer TSILDNOND is obtained in step S380. Therefore, even when the condition where the upshift instruction flag F_SILUP = 0 and the downshift instruction flag F_SILDN = 1 is generated in a short time starting from the condition where the upshift instruction flag F_SILUP = 0 and the downshift instruction flag F_SILDN = 0, the downshift lamp is turned ON after the downshift instruction redisplay delay timer TSILDNOND comes to time-out, and, accordingly, hunting can be prevented from occurring.

(3) When the condition where the upshift instruction flag F_SILUP = 0 and the downshift instruction flag F_SILDN = 1 is generated under the condition where the upshift instruction flag F_SILUP = 1 and the upshift lamp is ON, the upshift lamp is kept ON until the time-out of the non-instruction delay timer TSILOFFD is obtained in step S388, and the lamp is turned OFF when the non-instruction delay timer TSILOFFD reaches time-out. Thereafter, the downshift lamp is turned ON after the time-out of the downshift instruction redisplay delay timer TSILDNOND is obtained in step S380, since the downshift instruction redisplay delay timer TSILDNOND has been set in step S398. When the condition where the upshift instruction flag F_SILUP = 0 and the downshift instruction flag F_SILDN = 1 is generated after the condition where the upshift instruction flag F_SILUP = 1 and the upshift lamp is ON has continued for a short period of time, the upshift lamp is kept ON until, and turned OFF upon, the time-out of the non-instruction delay timer TSILOFFD. After the turning-off of the upshift lamp, the downshift lamp is turned ON upon the time-out of the downshift instruction redisplay delay timer TSILDNOND. Accordingly, hunting can be prevented from occurring.

(4) When the condition where the upshift instruction flag F_SILUP = 1 is generated under the condition where the upshift instruction flag F_SILUP = 0 and the downshift instruction flag F_SILDN = 1 with the downshift lamp being ON, the downshift lamp is kept ON until the time-out of the non-instruction delay timer TSILOFFD is obtained in step S376, and the lamp is turned OFF when the non-instruction delay timer TSILOFFD reaches time-out. Thereafter, the upshift lamp is turned ON after the time-out of the upshift instruction redisplay delay timer TSILUPOND is obtained in step S370, since the upshift instruction redisplay delay timer TSILUPOND has been set in step S396. When the condition where the upshift instruction flag F_SILUP = 1 is generated after the condition where the upshift instruction flag F_SILUP = 0 and the downshift instruction flag F_SILDN = 1 with the downshift lamp being ON has continued for a short period of time, the downshift lamp is kept ON until, and turned OFF upon, the time-out of the non-instruction delay timer TSILOFFD. After the turning-off of the downshift lamp, the upshift lamp is turned ON upon the time-out of the upshift instruction redisplay delay timer TSILUPOND. Accordingly, hunting can be prevented from occurring.

As has been described above, according to this embodiment of the present invention, a minimum expected acceleration corresponding to accelerator pedal position and vehicle speed is ensured after an upshift within such a range that engine torque and throttle position (opening) are in a linear relationship. Therefore, running with good fuel economy can be realized in a good response range, without spoiling convenience in use. In addition, since a tire end driving force corresponding to a minimum expected acceleration for realizing the minimum expected acceleration is calculated by estimating the running resistance, it is possible to calculate a tire end driving force based on the running according to the driving conditions. This makes it possible to issue such an instruction that the same running after an upshift can be realized irrespectively of whether the vehicle is running uphill or on a level land. The running resistance, even on a level road, would be increased also in the case where the actual torque is lowered due to other factors than environmental parameters such as intake air temperature, atmospheric pressure, etc., the other factors including an air conditioner being operated, an increase in vehicle weight (due to heavy cargo), traction of a trailer, an alternator (electric load), etc. For example, the running resistance is increased when an air conditioner is operated. As a result, the minimum expected acceleration corresponding tire end driving force as shown in formulas (8) and (12) is increased, so that an instruction to make an upshift or downshift can be issued in such a manner as not to cause the driver to get a sense of incompatibility.

Conventionally, in the system wherein an upshift instruction is issued based only on the vehicle speed, the instruction is not issued, notwithstanding good fuel economy, during a cruising mode. On the other hand, if a minimum expected acceleration corresponding tire end driving force can be obtained after an upshift in such a range that engine torque and throttle position (opening) are in linear relationship, an instruction to make an upshift can be issued even during cruising, whereby fuel economy is further improved.

In addition, according to the embodiment, an instruction to make a downshift is given in the case where a minimum expected acceleration cannot be obtained even when the accelerator pedal is depressed to an effective TH position close to the full opening. Not only during driving uphill but also during driving on a level road, the downshift instruction is issued, so that the driver can grasp the necessity for a downshift, which is favorable for practical use.

Besides, in the related art, if the minimum expected acceleration cannot be satisfied at or above an effective TH, the driver may depress the accelerator pedal more to bring the throttle into the wide open throttle (THWOT) region. As a result, an increase in fuel quantity relating to WOT is made although acceleration is absent, whereby fuel economy is worsened. In the present embodiment, on the other hand, if the minimum expected acceleration cannot be satisfied at or above an effective TH, a downshift instruction is issued before the throttle is brought into the THWOT region. This permits the driver to make a downshift according to the downshift instruction. Consequently, not only the acceleration characteristics can be enhanced, but also the throttle can be prevented from being brought into the THWOT region, and fuel economy can be prevented from being worsened.

In the case where an engine speed after a downshift exceeds an over-rev avoiding engine speed, an instruction to make the downshift is not issued. This makes it possible to obviate an over-revving. As for the turning-on of the upshift lamp, the turning-on of the downshift lamp and the turning-off the lamps, the ON state and the OFF state of the lamps are each kept for a predetermined time, so that hunting can be prevented from occurring.

While the case of a manual transmission has been described as an example in the embodiment above, the present invention is applicable not only to manual transmissions but also to automatic transmissions which permit manual running.

The present invention is not limited to the details of the above described preferred embodiments. The scope of the invention is defined by the appended claims and all changes and modifications as fall within the equivalence of the scope of the claims are therefore to be embraced by the invention.

## Claims

1. A shift indicator system for making a shift determination based on an operating condition of a vehicle having an engine (2), and a transmission (6) for transmitting a driving torque to a wheel or wheels on the basis of an input shaft torque transmitted to a main shaft on the basis of an engine torque outputted from a crankshaft of said engine (2), said shift indicator system comprising:

    engine torque storing means for storing engine torques according to engine speeds;
    post-upshift engine speed calculating means for calculating an engine speed after an upshift, based on the current vehicle speed and a gear position after the upshift;
    post-upshift engine torque estimating means for calculating the engine torque after the upshift corresponding to said engine speed calculated by said post-upshift engine speed calculating means from said engine torque storing means;
    upshift display control means for controlling a display means for giving a driver an instruction to make the upshift based on the determination result by a upshift determining means, **characterized in that** said indicator system comprises :

        running resistance calculating means (100) for calculating a running resistance of said vehicle in running;
        target acceleration storing means for storing a target acceleration according to the vehicle speed and the accelerator position;
        target acceleration calculating means for calculating a target acceleration according to a current vehicle speed and a current accelerator position from said target acceleration storing means;
        post-upshift acceleration calculating means for calculating an acceleration after the upshift, based on said engine torque calculated by said post-upshift engine torque estimating means and said running resistance calculated by said running resistance calculating means (100) ;
        said upshift determining means for determining whether or not upshift instruction conditions are fulfilled, said upshift instruction conditions including a condition where said acceleration after the upshift calculated by said post-upshift acceleration calculating means is greater than said target acceleration calculated by said target acceleration calculating means.

2. A shift indicator system for making a shift determination based on an operating condition of a vehicle having an engine (2), and a transmission (6) for transmitting a driving torque to a wheel or wheels on the basis of an input shaft torque transmitted to a main shaft on the basis of an engine torque outputted from a crankshaft of said engine (2), said shift indicator system comprising:

    engine torque storing means for storing engine torques according to engine speeds;
    current-gear engine torque estimating means for calculating an engine torque corresponding to the engine speed at the current gear from said engine torque storing means;
    downshift display control means for controlling a display means for giving a driver an instruction to make the downshift based on the determination result by a downshift determining means, **characterized in that** said shift indicator system comprises :

        running resistance calculating means (100) for calculating a running resistance of said vehicle in running;
        target acceleration storing means for storing a target acceleration according to the vehicle speed and the accelerator position;
        target acceleration calculating means for calculating a target acceleration according to a current vehicle speed and a current accelerator position from said target acceleration storing means;
        current-gear acceleration calculating means for calculating the acceleration at the current gear, based on said engine torque calculated by said current-gear engine torque calculating means (150) and said running resistance calculated by said running resistance calculating means (100);
        said downshift determining means for determining whether or not downshift instruction conditions are fulfilled, said downshift instruction conditions including a condition where the throttle position is not less than a predetermined value and said acceleration at the current gear calculated by said current-gear acceleration calculating means is smaller than said target acceleration calculated by said target acceleration calculating means.

3. The shift indicator system as set forth in claim 1 or 2, further comprising post-downshift engine speed calculating means for calculating the engine speed after the downshift, based on said current vehicle speed and the gear position after the downshift, wherein said downshift determining means compares said post-downshift engine speed calculated by said post-downshift engine speed calculating means with an over-rev preventive threshold and determines said downshift instruction conditions to be not fulfilled in the case where said post-downshift engine speed is not less than said over-rev preventive threshold.

4. The shift indicator system as set forth in any of the preceding claims, wherein said running resistance calculating means (100) calculates a driving force acting on said wheel on the basis of the engine torque obtained in the current gear and the gear position in the current gear, calculates an acceleration resisting force acting on said wheel on the basis of the current vehicle acceleration, and calculates the running resistance on the basis of said driving force and said acceleration resisting force.

5. The shift indicator system as set forth in any of the preceding claims, wherein said running resistance calculating means (100) calculates a driving force acting on said wheel on the basis of the engine torque obtained in the current gear and the gear position in the current gear, calculates an acceleration resisting force acting on said wheel on the basis of the current vehicle acceleration, and calculates the running resistance on the basis of said driving force and said acceleration resisting force.

6. The shift indicator system as set forth in any of the preceding claims, wherein said upshift determining means determines said upshift instruction conditions to be not fulfilled when said post-upshift engine speed calculated by said post-upshift engine speed calculating means is less than a predetermined engine speed such as to worsen the driveability.

7. The shift indicator system as set forth in any of the preceding claims, wherein the engine torques according to said engine speeds stored in said engine torque storing means are engine torques within such a range that engine torque varies linearly with throttle position at each engine speed.

8. The shift indicator system as set forth in any of the preceding claims, wherein the engine torques according to said engine speeds stored in said engine torque storing means are engine torques greater than an engine torque within such a range that engine torque varies linearly with throttle position at each engine speed, and are engine torques at an effective throttle position such that the ratio of the engine torque variation rate to the throttle position variation rate is less than a predetermined value.

9. The shift indicator system as set forth in any of the preceding claims, wherein even after said upshift instruction conditions come to be not fulfilled, said upshift display control means continues displaying an upshift on said display means until a predetermined time elapses, and, in the case of a condition where upshift and downshift displays are not made on said display means when said upshift instruction conditions are fulfilled, said upshift display control means displays the upshift on said display means after this condition has continued for a predetermined time.

10. The shift indicator system as set forth in any of the preceding claims, wherein even after said downshift instruction conditions come to be not fulfilled, said downshift display control means continues displaying a downshift on said display means until a predetermined time elapses, and, in the case of a condition where upshift and downshift displays are not made on said display means when said downshift instruction conditions are fulfilled, said downshift display control means displays the downshift on said display means after this condition has continued for a predetermined time.

## Patentansprüche

1. Schaltungsanzeigesystem, um basierend auf einem Betriebszustand eines Fahrzeugs mit einem Motor (2) und einem Getriebe (6) zum Übertragen eines Antriebsdrehmoments auf ein Rad oder Räder auf der Basis eines Eingangsdrehmoments, das auf der Basis eines von einer Kurbelwelle des Motors (2) ausgegebenen Motordrehmoments auf eine Hauptwelle übertragen wird, eine Schaltentscheidung zu treffen, wobei das Schaltungsanzeigesystem aufweist:

eine Motordrehmomentspeichereinrichtung zum Speichern von Motordrehmomenten gemäß Motordrehzahlen;
eine Nachhochschalt-Motordrehzahlberechnungseinrichtung zum Berechnen einer Motordrehzahl nach dem Hochschalten basierend auf der aktuellen Fahrzeuggeschwindigkeit und einer Schaltungsstellung nach dem Hochschalten;
eine Nachhochschalt-Motordrehmomentschätzeinrichtung zum Berechnen des Motordrehmoments nach dem Hochschalten, das der Motordrehzahl entspricht, die von der Nachhochschalt-Motordrehzahlberechnungseinrichtung aus der Motordrehzahlspeichereinrichtung berechnet wird,
eine Hochschaltanzeigesteuereinrichtung zum Steuern einer Anzeigeeinrichtung, um einem Fahrer eine Anweisung zu geben, um das Hochschalten basierend auf dem Bestimmungsergebnis durch eine Hochschaltbestimmungseinrichtung zu steuern,
**dadurch gekennzeichnet, dass** das Anzeigesystem aufweist:

eine Fahrwiderstandsberechnungseinrichtung (100) zum Berechnen eines Fahrwiderstands des Fahrzeugs beim Fahren;
eine Zielbeschleunigungsspeichereinrichtung zum Speichern einer Zielbeschleunigung gemäß der Fahrzeuggeschwindigkeit und der Gaspedalposition;
eine Zielbeschleunigungsberechnungseinrichtung zum Berechnen einer Zielbeschleunigung gemäß einer aktuellen Fahrzeuggeschwindigkeit und einer aktuellen Gaspedalposition aus der Zielbeschleunigungsspeichereinrichtung;
eine Nachhochschalt-Beschleunigungsberechnungseinrichtung zum Berechnen einer Beschleunigung nach dem Hochschalten basierend auf dem von der Nachhochschalt-Motordrehmomentschätzeinrichtung berechneten Motordrehmoment und dem von der Fahrwiderstandsberechnungseinrichtung (100) berechneten Fahrwiderstand;
wobei die Hochschaltbestimmungseinrichtung dazu dient, zu bestimmen, ob die Hochschaltanweisungsbedingungen erfüllt sind, wobei die Hochschaltanweisungsbedingungen einen Zustand umfassen, in dem die von der Nachhochschalt-Beschleunigungsberechnungseinrichtung berechnete Beschleunigung nach dem Hochschalten größer als die von der Zielbeschleunigungsberechnungseinrichtung berechnete Zielbeschleunigung ist.

**2.** Schaltungsanzeigesystem, um basierend auf einem Betriebszustand eines Fahrzeugs mit einem Motor (2) und einem Getriebe (6) zum Übertragen eines Antriebsdrehmoments auf ein Rad oder Räder auf der Basis eines Eingangsdrehmoments, das auf der Basis eines von einer Kurbelwelle des Motors (2) ausgegebenen Motordrehmoments auf eine Hauptwelle übertragen wird, eine Schaltentscheidung zu treffen, wobei das Schaltungsanzeigesystem aufweist:

eine Motordrehmomentspeichereinrichtung zum Speichern von Motordrehmomenten gemäß Motordrehzahlen;
eine Aktuelle-Gang-Motordrehmomentschätzeinrichtung zum Berechnen eines Motordrehmoments, das der Motordrehzahl in dem aktuellen Gang entspricht, aus der Motordrehzahlspeichereinrichtung;
eine Herunterschaltanzeigesteuereinrichtung zum Steuern einer Anzeigeeinrichtung, um einem Fahrer eine Anweisung zu geben, um das Herunterschalten basierend auf dem Bestimmungsergebnis durch eine Herunterschaltbestimmungseinrichtung zu steuern,
**dadurch gekennzeichnet, dass** das Schaltungsanzeigesystem aufweist:

eine Fahrwiderstandsberechnungseinrichtung (100) zum Berechnen eines Fahrwiderstands des Fahrzeugs beim Fahren;
eine Zielbeschleunigungsspeichereinrichtung zum Speichern einer Zielbeschleunigung gemäß der Fahrzeuggeschwindigkeit und der Gaspedalposition;
eine Zielbeschleunigungsberechnungseinrichtung zum Berechnen einer Zielbeschleunigung gemäß einer aktuellen Fahrzeuggeschwindigkeit und einer aktuellen Gaspedalposition aus der Zielbeschleunigungsspeichereinrichtung;
eine Aktuelle-Gang-Beschleunigungsberechnungseinrichtung zum Berechnen der Beschleunigung in dem aktuellen Gang basierend auf dem von der Aktuelle-Gang-Motordrehmomentberechnungseinrichtung (150) berechneten Motordrehmoment und dem von der Fahrwiderstandsberechnungseinrichtung (100) Fahrwiderstand;
wobei die Herunterschaltbestimmungseinrichtung dazu dient, zu bestimmen, ob die Herunterschaltanweisungsbedingungen erfüllt sind, wobei die Herunterschaltanweisungsbedingungen einen Zustand umfassen, in dem die Drosselposition nicht geringer als ein vorgegebener Wert ist und die von der Aktuelle-Gang-Beschleunigungsberechnungseinrichtung berechnete Beschleunigung in dem aktuellen Gang kleiner als die von der Zielbeschleunigungsberechnungseinrichtung berechnete Zielbeschleunigung ist.

**3.** Schaltungsanzeigesystem nach Anspruch 1 oder 2, das ferner aufweist:

eine Nachhherunterschalt-Motordrehzahlberechnungseinrichtung zum Berechnen einer Motordrehzahl nach dem Herunterschalten basierend auf der aktuellen Fahrzeuggeschwindigkeit und einer Schaltungsstellung nach dem Herunterschalten;
wobei die Herunterschaltbestimmungseinrichtung die von der Nachhherunterschalt-Motordrehzahlberechnungseinrichtung berechnete Motordrehzahl nach dem Herunterschalten mit einem Überdrehungsschutz-Schwellwert vergleicht und bestimmt, dass die HerunterschaltAnweisungsbedingungen in dem Fall, in dem die Motordrehzahl nach dem Herunterschalten nicht niedriger als der Überdrehungsschutz-Schwellwert ist, nicht erfüllt sind.

**4.** Schaltungsanzeigesystem nach einem der vorhergehenden Ansprüche, wobei die Fahrwiderstandsberechnungseinrichtung (100) eine auf das Rad wirkende Antriebskraft basierend auf dem Motordrehmoment, das in dem aktuellen Gang erhalten wird, und der Gangposition in dem aktuellen Gang berechnet,
eine auf das Rad wirkende Beschleunigungswiderstandskraft auf der Basis der aktuellen Fahrzeugbeschleunigung berechnet, und den Fahrwiderstand auf der Basis der Antriebskraft und der Beschleunigungswiderstandskraft berechnet.

**5.** Schaltungsanzeigesystem nach einem der vorhergehenden Ansprüche, wobei die Fahrwiderstandsberechnungseinrichtung (100) eine auf das Rad wirkende Antriebskraft basierend auf dem Motordrehmoment, das in dem aktuellen Gang erhalten wird, und der Gangposition in dem aktuellen Gang berechnet,
eine auf das Rad wirkende Beschleunigungswiderstandskraft auf der Basis der aktuellen Fahrzeugbeschleunigung berechnet, und den Fahrwiderstand auf der Basis der Antriebskraft und der Beschleunigungswiderstandskraft berechnet.

**6.** Schaltungsanzeigesystem nach einem der vorhergehenden Ansprüche, wobei die Hochschaltbestimmungseinrichtung bestimmt, dass die Hochschaltanweisungsbedingungen nicht erfüllt sind, wenn die von der Nachhochschalt-Motordrehzahlberechnungseinrichtung berechnete Motordrehzahl nach dem Hochschalten niedriger als eine vorgegebene Motordrehzahl ist, so dass die Fahrbarkeit verschlechtert ist.

**7.** Schaltungsanzeigesystem nach einem der vorhergehenden Ansprüche, wobei die Motordrehmomente gemäß den Motordrehzahlen, die in der Motordrehzahlspeichereinrichtung gespeichert sind, Motordrehmomente innerhalb eines derartigen Bereichs sind, dass das Motordrehmoment sich bei jeder Motordrehzahl linear mit der Drosselposition ändert.

**8.** Schaltungsanzeigesystem nach einem der vorhergehenden Ansprüche, wobei die Motordrehmomente gemäß den Motordrehzahlen, die in der Motordrehzahlspeichereinrichtung gespeichert sind, Motordrehmomente sind, die größer als ein Motordrehmoment innerhalb eines derartigen Bereichs sind, in dem das Motordrehmoment sich bei jeder Motordrehzahl linear mit der Drosselposition ändert, und Motordrehmomente bei einer effektiven Drosselposition sind, so dass das Verhältnis der Motordrehmomentänderungsrate zu der Drosselpositionsänderungsrate geringer als ein vorgegebener Wert ist.

**9.** Schaltungsanzeigesystem nach einem der vorhergehenden Ansprüche, wobei die Hochschaltanzeigesteuereinrichtung, selbst nachdem die Hochschaltanweisungsbedingungen nicht erfüllt werden, weiterhin ein Hochschalten auf der Anzeigeeinrichtung anzeigt, bis eine vorgegebene Zeit vergangen ist, und die Hochschaltanzeigesteuereinrichtung in dem Fall eines Zustands, in dem die Hochschalt- und Herunterschaltanzeigen auf der Anzeigeeinrichtung nicht durchgeführt werden, wenn die Hochschaltanweisungsbedingungen erfüllt sind, das Hochschalten auf der Anzeigeeinrichtung anzeigt, nachdem diese Bedingung eine vorgegebene Zeit lang erfüllt war.

**10.** Schaltungsanzeigesystem nach einem der vorhergehenden Ansprüche, wobei die Herunterschaltanzeigesteuereinrichtung, selbst nachdem die Herunterschaltanweisungsbedingungen nicht erfüllt werden, weiterhin ein Herunterschalten auf der Anzeigeeinrichtung anzeigt, bis eine vorgegebene Zeit vergangen ist, und die Herunterschaltanzeigesteuereinrichtung in dem Fall eines Zustands, in dem die Hochschalt- und Herunterschaltanzeigen auf der Anzeigeeinrichtung nicht durchgeführt werden, wenn die Herunterschaltanweisungsbedingungen erfüllt sind, das Herunterschalten auf der Anzeigeeinrichtung anzeigt, nachdem diese Bedingung eine vorgegebene Zeit lang erfüllt war.

## Revendications

1. Système indicateur de changement de vitesse pour réaliser une détermination de changement de vitesse basée sur une condition de fonctionnement d'un véhicule ayant un moteur (2) et une transmission (6) pour la transmission d'un couple d'entraînement à une roue ou à des roues sur la base d'un couple d'arbre primaire transmis à un arbre principal sur la base d'un couple moteur sorti d'un vilebrequin dudit moteur (2), ledit système indicateur comprenant :

   des moyens d'enregistrement de couples moteur pour enregistrer des couples moteur selon des vitesses de moteur ;
   des moyens de calcul de la vitesse du moteur post-passage de la vitesse supérieure pour calculer une vitesse du moteur après un passage de la vitesse supérieure, basés sur la vitesse actuelle du véhicule et une position de boîte après le passage de la vitesse supérieure ;
   des moyens d'estimation de couple moteur post-passage de la vitesse supérieure pour calculer le couple moteur après le passage de la vitesse supérieure correspondant à ladite vitesse de moteur calculée par lesdits moyens de calcul de la vitesse du moteur post-passage de la vitesse supérieure à partir desdits moyens d'enregistrement de couples moteur ;
   des moyens de commande de l'affichage de passage de la vitesse supérieure pour commander des moyens d'affichage afin de donner une instruction au conducteur consistant à réaliser le passage de la vitesse supérieure basé sur le résultat de la détermination par des moyens de détermination de passage de la vitesse supérieure, **caractérisé en ce que** ledit système indicateur comprend :

      des moyens de calcul de la résistance propre du véhicule (100) pour calculer une résistance propre dudit véhicule en roulement ;
      des moyens d'enregistrement de l'accélération cible pour enregistrer une accélération cible selon la vitesse du véhicule et la position de l'accélérateur ;
      des moyens de calcul de l'accélération cible pour calculer une accélération cible selon une vitesse actuelle du véhicule et une position actuelle de l'accélérateur à partir desdits moyens d'enregistrement de l'accélération cible ;
      des moyens de calcul de l'accélération post-passage de la vitesse supérieure pour calculer une accélération après le passage de la vitesse supérieure basé sur ledit couple moteur calculé par desdits moyens d'estimation du couple moteur post-passage de la vitesse supérieure et ladite résistance propre du véhicule calculée par lesdits moyens de calcul de la résistance propre du véhicule (100) ;
      lesdits moyens de détermination du passage de la vitesse supérieure pour déterminer si des conditions d'instruction de passage de la vitesse supérieure sont satisfaites ou pas, lesdites conditions d'instruction de passage de la vitesse supérieure comprenant une condition dans laquelle ladite accélération après le passage de la vitesse supérieure calculée par lesdits moyens de calcul de l'accélération post-passage de la vitesse supérieure est supérieure à ladite accélération cible calculée par lesdits moyens de calcul de l'accélération cible.

2. Système indicateur de changement de vitesse pour réaliser une détermination de changement de vitesse basée sur une condition de fonctionnement d'un véhicule ayant un moteur (2) et une transmission (6) pour la transmission d'un couple d'entraînement à une roue ou à des roues sur la base d'un couple d'arbre primaire transmis à un arbre principal sur la base d'un couple moteur sorti d'un vilebrequin dudit moteur (2), ledit système indicateur de changement de vitesse comprenant :

   des moyens d'enregistrement de couples moteur pour enregistrer des couples moteur selon les vitesses de moteur ;
   des moyens d'estimation de couples moteur de boîte actuelle pour calculer un couple moteur correspondant à la vitesse du moteur sur la boîte actuelle à partir desdits moyens d'enregistrement de couples moteur ;
   des moyens de commande de l'affichage du rétrogradage pour commander des moyens d'affichage afin de donner une instruction au conducteur consistant à réaliser le rétrogradage basé sur le résultat de la détermination par des moyens de détermination de rétrogradage, **caractérisé en ce que** ledit système indicateur de passage de vitesse comprend :

des moyens de calcul de la résistance propre du véhicule (100) pour calculer une résistance propre dudit véhicule en roulement ;
des moyens d'enregistrement de l'accélération cible pour enregistrer une accélération cible selon la vitesse de véhicule et la position de l'accélérateur ;
des moyens de calcul de l'accélération cible pour calculer une accélération cible selon une vitesse actuelle du véhicule et une position actuelle de l'accélérateur à partir des moyens d'enregistrement de l'accélération cible ;
des moyens de calcul de l'accélération de boîte actuelle pour calculer l'accélération sur la boîte actuelle, basés sur ledit couple moteur calculé par lesdits moyens de calcul de couples moteur de boîte actuelle (150) et ladite résistance propre du véhicule calculée par lesdits moyens de calcul de la résistance propre du véhicule (100) ;
desdits moyens de détermination du rétrogradage pour déterminer si des conditions d'instruction de rétrogradage sont satisfaites ou pas, lesdites conditions d'instruction de rétrogradage comprenant une condition dans laquelle la position du papillon des gaz n'est pas inférieure à une valeur prédéterminée et ladite accélération sur la boîte actuelle calculée par lesdits moyens de calcul de l'accélération de boîte actuelle est plus petite que ladite accélération cible calculée par lesdits moyens de calcul de l'accélération cible.

**3.** Système indicateur de changement de vitesse selon la revendication 1 ou 2, comprenant en outre
des moyens de calcul de la vitesse du moteur post-rétrogradage pour calculer la vitesse du moteur après le rétrogradage, basés sur ladite vitesse actuelle du véhicule et la position de boîte après le rétrogradage,
dans lequel lesdits moyens de détermination du rétrogradage comparent ladite vitesse du moteur post-rétrogradage calculée par lesdits moyens de calcul de la vitesse du moteur post-rétrogradage avec un seuil préventif de survitesse et déterminent lesdites conditions d'instruction de rétrogradage ne devant pas être satisfaites au cas où ladite vitesse du moteur de post-rétrogradage n'est pas inférieure audit seuil préventif de survitesse.

**4.** Système indicateur de changement de vitesse selon l'une quelconque des revendications précédentes,
dans lequel lesdits moyens de calcul de la résistance propre du véhicule (100) calculent une force d'entraînement agissant sur ladite roue sur la base du couple moteur obtenu dans la boîte actuelle et la position de boîte dans la boîte actuelle, calculent une force résistant à l'accélération agissant sur ladite roue sur la base de l'accélération actuelle du véhicule et calculent la résistance propre du véhicule sur la base de ladite force d'entraînement et ladite force résistant à l'accélération.

**5.** Système indicateur de changement de vitesse selon l'une quelconque des revendications précédentes,
dans lequel lesdits moyens de calcul de la résistance propre du véhicule (100) calculent une force d'entraînement agissant sur ladite roue sur la base du couple moteur obtenu dans la boîte actuelle et la position de boîte dans la boîte actuelle, calculent une force résistant à l'accélération agissant sur ladite roue sur la base de l'accélération actuelle du véhicule, et calculent la résistance propre du véhicule sur la base de ladite force d'entraînement et ladite force résistant à l'accélération.

**6.** Système indicateur de changement de vitesse selon l'une quelconque des revendications précédentes,
dans lequel lesdits moyens de détermination du passage de la vitesse supérieure déterminent lesdites conditions d'instruction du passage de la vitesse supérieure ne devant pas être satisfaites lorsque ladite vitesse de moteur de post-passage de la vitesse supérieure calculée par lesdits moyens de calcul de vitesse de moteur de post-passage de la vitesse supérieure est inférieure à une vitesse de moteur prédéterminée de sorte à détériorer la motricité.

**7.** Système indicateur de changement de vitesse selon l'une quelconque des revendications précédentes,
dans lequel les couples moteur selon lesdites vitesses de moteur enregistrées dans lesdits moyens d'enregistrement de couples moteur sont des couples moteur avec une telle plage que le couple moteur varie linéairement avec une position de papillon de gaz à chaque vitesse de moteur.

**8.** Système indicateur de changement de vitesse selon l'une quelconque des revendications précédentes,
dans lequel les couples moteur selon lesdites vitesses de moteur enregistrées dans lesdits moyens d'enregistrement de couples moteur sont des couples moteur supérieurs à un couple moteur dans une telle plage que le couple moteur varie linéairement avec une position du papillon de gaz à chaque vitesse de moteur, et sont des couples moteur à une position effective de papillon de gaz de sorte que le rapport entre le taux de variation du couple moteur et le taux de variation de la position du papillon de gaz soit inférieur à une valeur prédéterminée.

**9.** Système indicateur de changement de vitesse selon l'une quelconque des revendications précédentes,

dans lequel même après que lesdites conditions d'instruction de passage de la vitesse supérieure ne soient pas satisfaites, lesdits moyens de commande de l'affichage de passage de la vitesse supérieure continuent d'afficher un passage de la vitesse supérieure sur lesdits moyens d'affichage jusqu'à ce qu'un temps prédéterminé s'écoule et dans le cas d'une condition dans laquelle les affichages de passage de la vitesse supérieure et de rétrogradage ne sont pas réalisés sur lesdits moyens d'affichage lorsque lesdites conditions d'instruction de passage de la vitesse supérieure sont satisfaites, lesdits moyens de commande de l'affichage de passage de la vitesse supérieure affichent le passage de la vitesse supérieure sur lesdits moyens d'affichage après que cette condition ait continué pendant un temps prédéterminé.

**10.** Système indicateur de changement de vitesse selon l'une quelconque des revendications précédentes,
dans lequel même après que lesdites conditions d'instruction de rétrogradage ne soient pas satisfaites, lesdits moyens de commande de l'affichage du rétrogradage continuent d'afficher un rétrogradage sur lesdits moyens d'affichage jusqu'à ce qu'un temps prédéterminé s'écoule et dans le cas d'une condition dans laquelle les affichages de passage de la vitesse supérieure et de rétrogradage ne sont pas réalisés sur lesdits moyens d'affichage lorsque lesdites conditions d'instruction de rétrogradage sont satisfaites, lesdits moyens de commande de l'affichage de rétrogradage affichent le rétrogradage sur lesdits moyens d'affichage après que cette condition ait continué pendant un temps prédéterminé.

FIG. 1

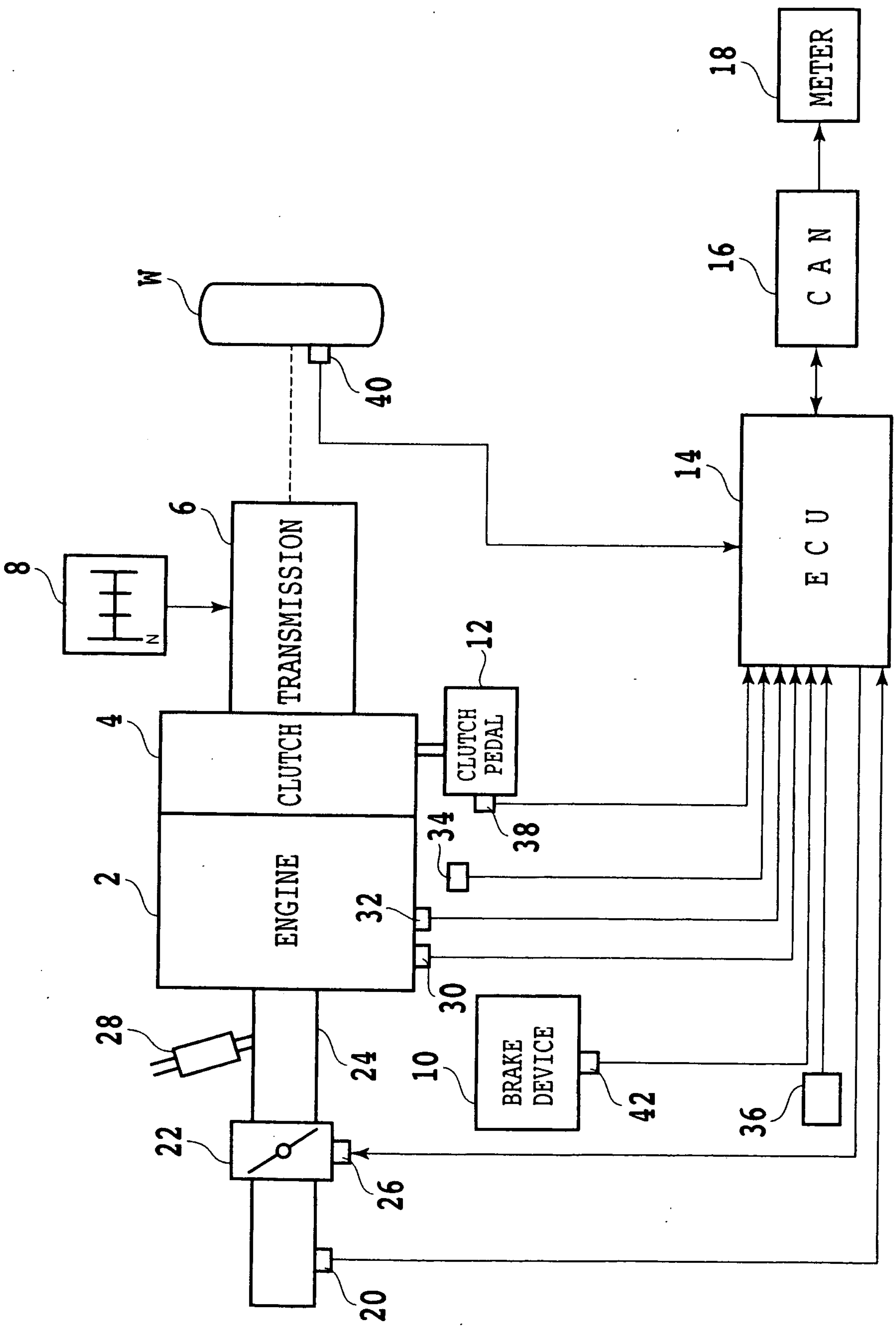
ENGINE
CLUTCH
TRANSMISSION
CLUTCH PEDAL
BRAKE DEVICE
E C U
C A N
METER
W
2
4
6
8
10
12
14
16
18
20
22
24
26
28
30
32
34
36
38
40
42

FIG. 2

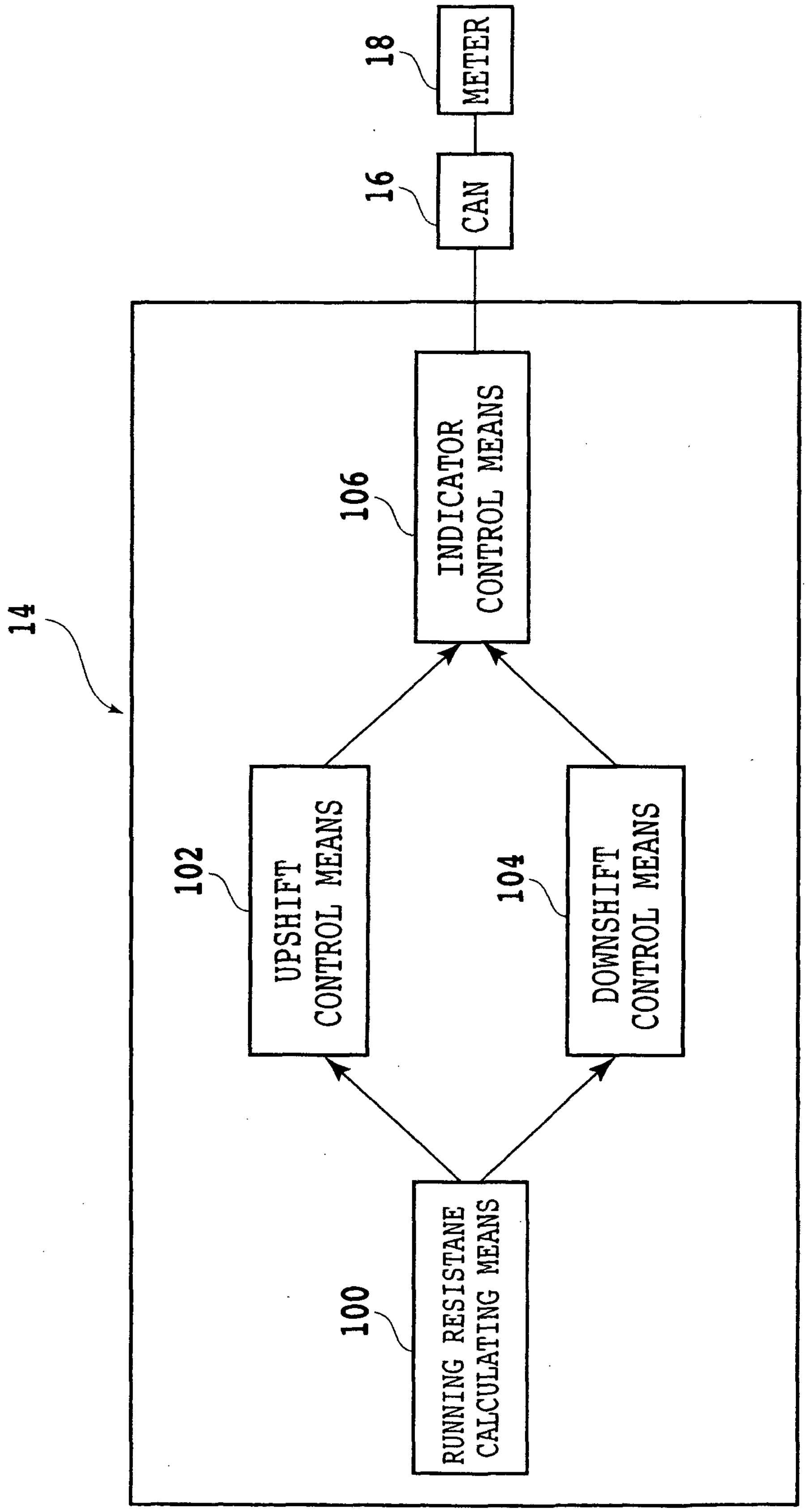
14
18
METER
16
CAN
106
INDICATOR CONTROL MEANS
102
UPSHIFT CONTROL MEANS
104
DOWNSHIFT CONTROL MEANS
100
RUNNING RESISTANE CALCULATING MEANS

FIG.3

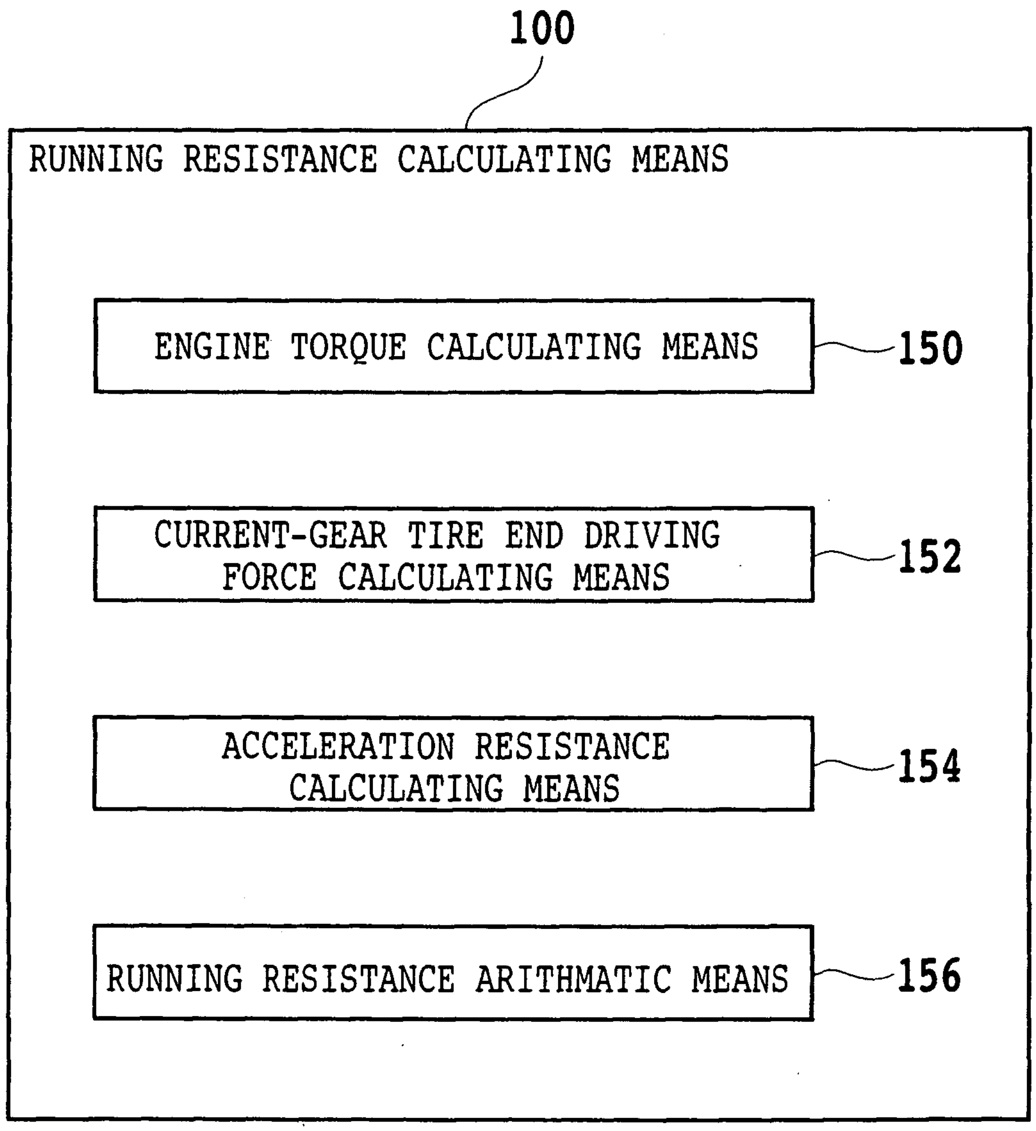
100
RUNNING RESISTANCE CALCULATING MEANS
ENGINE TORQUE CALCULATING MEANS
150
CURRENT-GEAR TIRE END DRIVING FORCE CALCULATING MEANS
152
ACCELERATION RESISTANCE CALCULATING MEANS
154
RUNNING RESISTANCE ARITHMATIC MEANS
156

FIG. 4

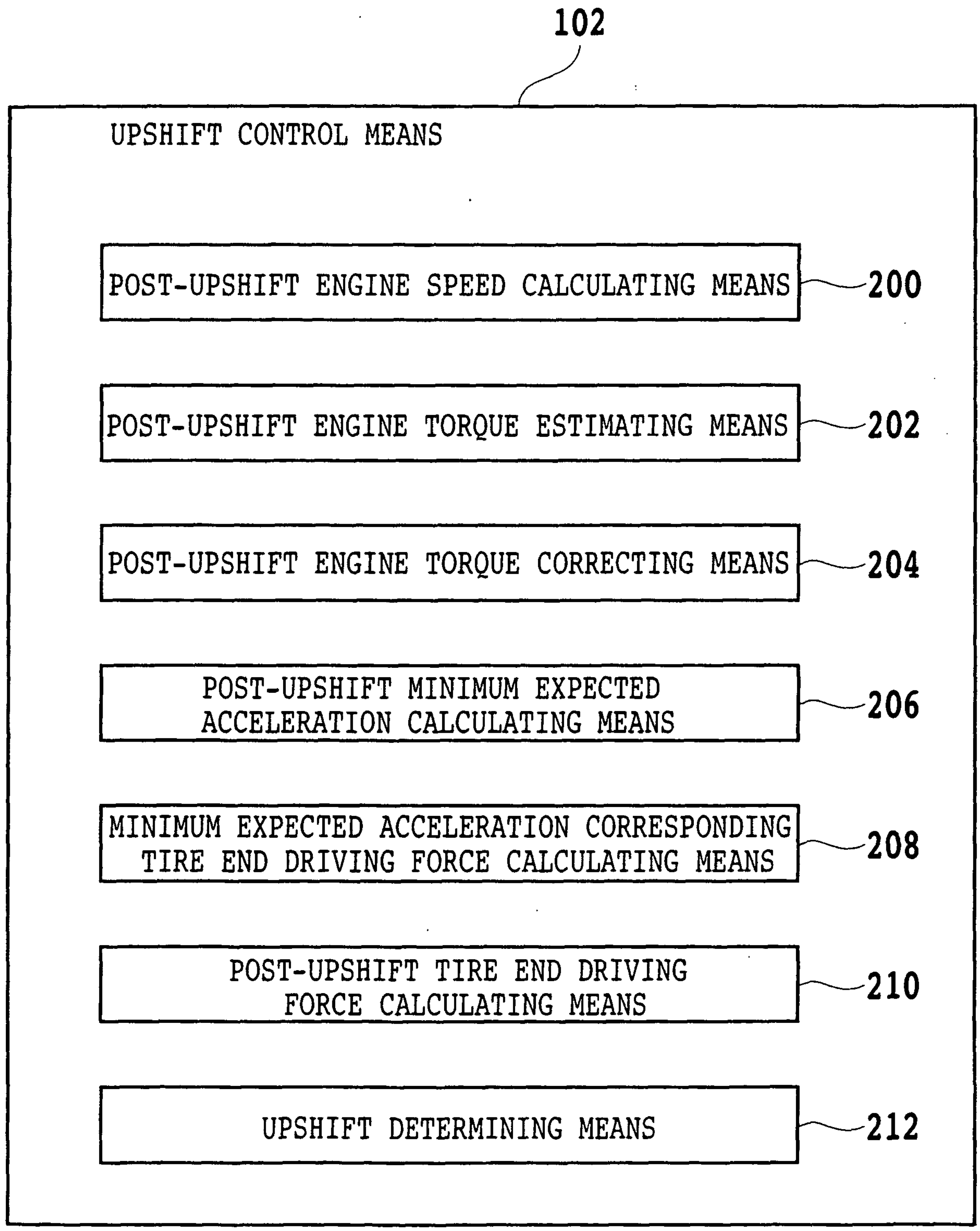
102
UPSHIFT CONTROL MEANS
POST-UPSHIFT ENGINE SPEED CALCULATING MEANS
200
POST-UPSHIFT ENGINE TORQUE ESTIMATING MEANS
202
POST-UPSHIFT ENGINE TORQUE CORRECTING MEANS
204
POST-UPSHIFT MINIMUM EXPECTED ACCELERATION CALCULATING MEANS
206
MINIMUM EXPECTED ACCELERATION CORRESPONDING TIRE END DRIVING FORCE CALCULATING MEANS
208
POST-UPSHIFT TIRE END DRIVING FORCE CALCULATING MEANS
210
UPSHIFT DETERMINING MEANS
212

FIG. 5

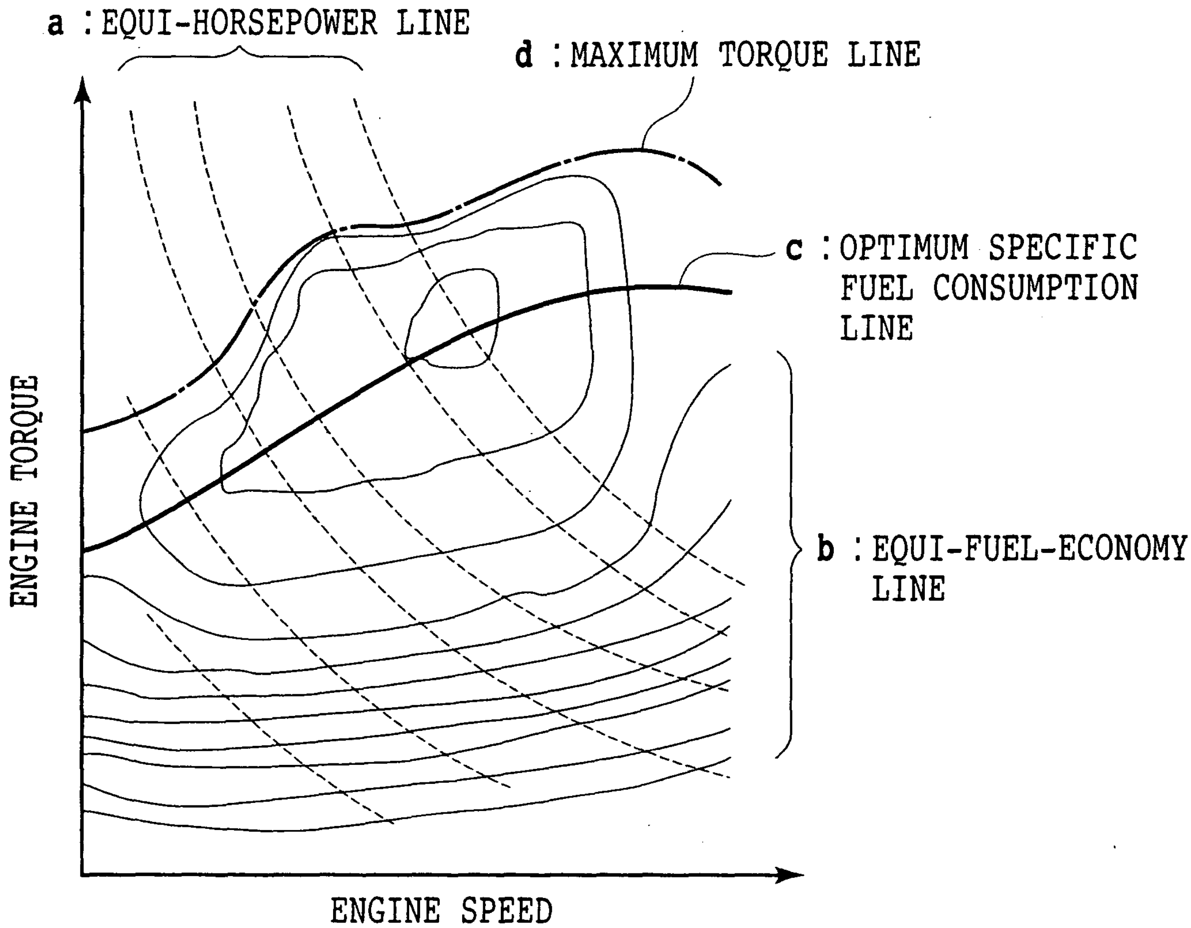
a : EQUI-HORSEPOWER LINE
d : MAXIMUM TORQUE LINE
c : OPTIMUM SPECIFIC FUEL CONSUMPTION LINE
b : EQUI-FUEL-ECONOMY LINE
ENGINE TORQUE
ENGINE SPEED

FIG.6

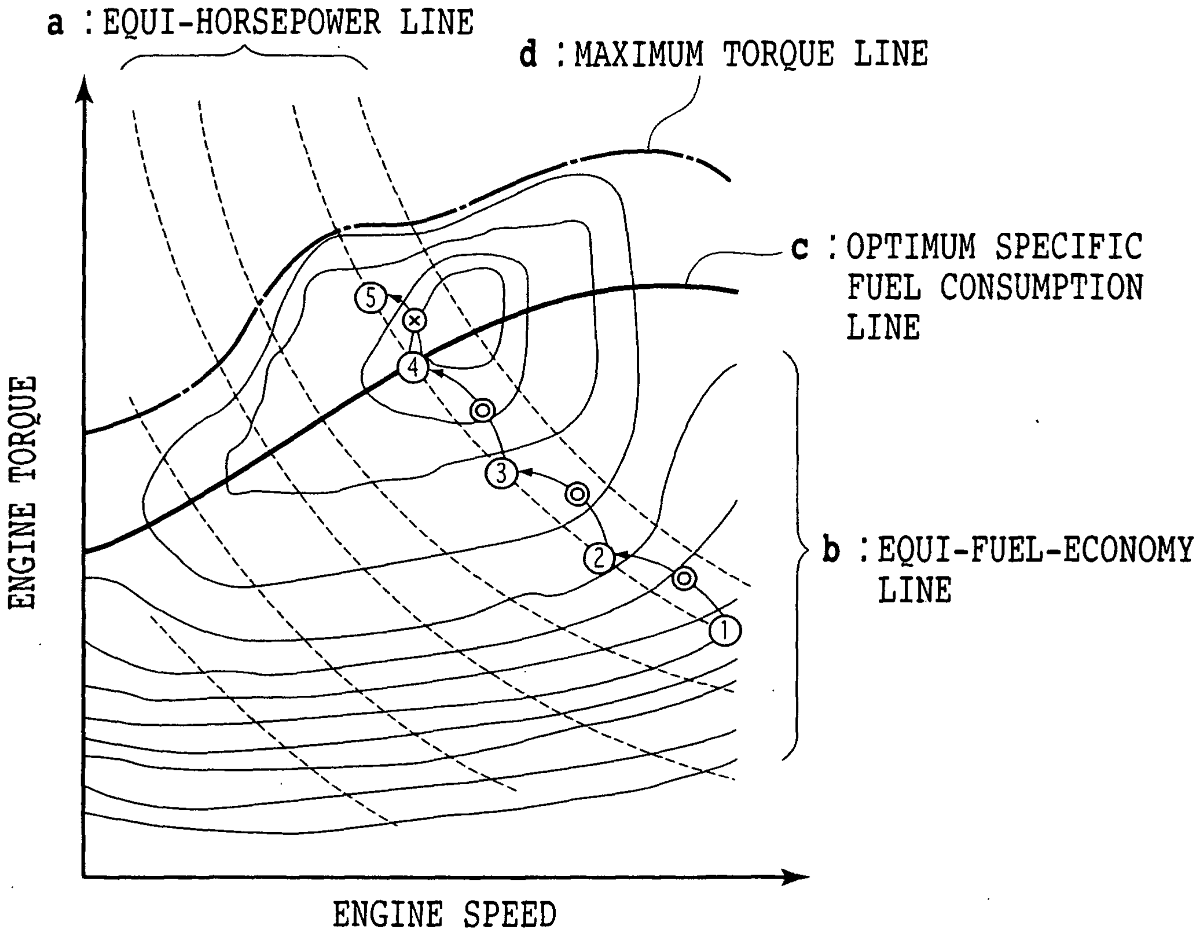
a : EQUI-HORSEPOWER LINE
d : MAXIMUM TORQUE LINE
c : OPTIMUM SPECIFIC FUEL CONSUMPTION LINE
b : EQUI-FUEL-ECONOMY LINE
ENGINE TORQUE
ENGINE SPEED
1
2
3
4
5

FIG.7

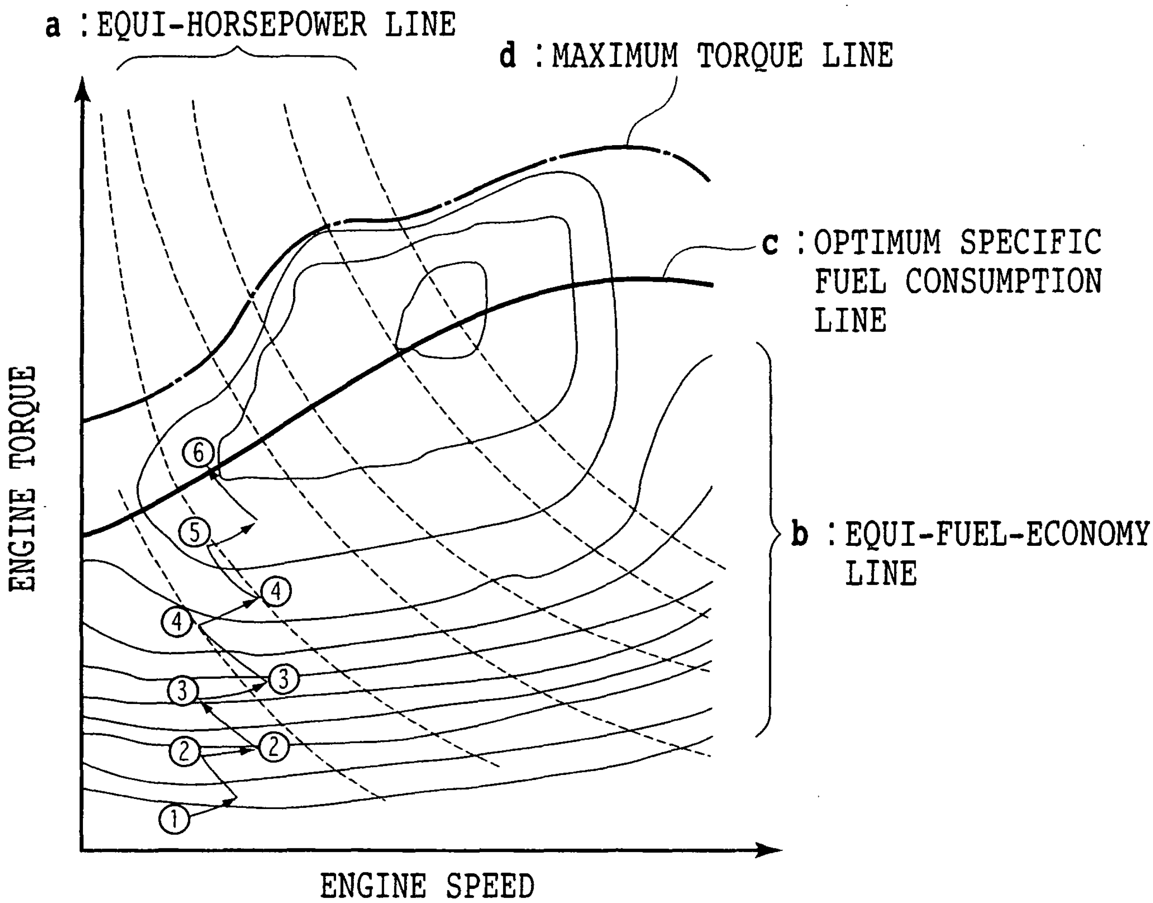
a : EQUI-HORSEPOWER LINE
d : MAXIMUM TORQUE LINE
c : OPTIMUM SPECIFIC FUEL CONSUMPTION LINE
b : EQUI-FUEL-ECONOMY LINE
ENGINE TORQUE
ENGINE SPEED
1
2
2
3
3
4
4
5
6

FIG.8A

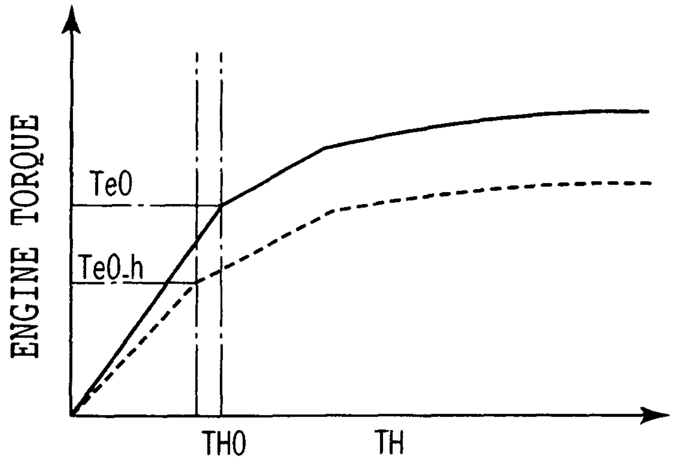


FIG.8B

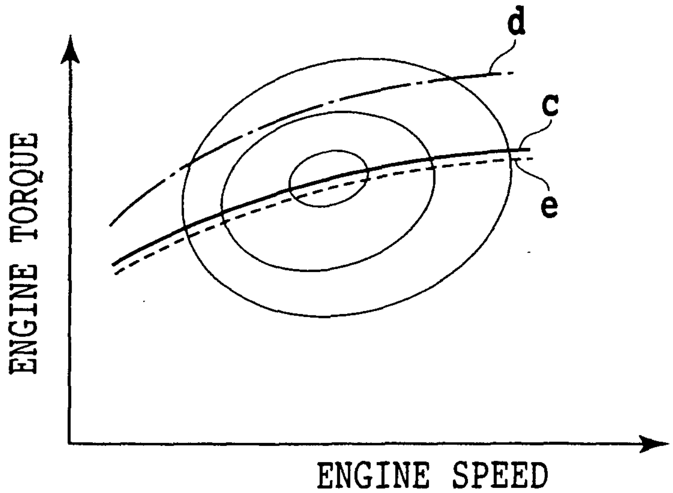


FIG.8C

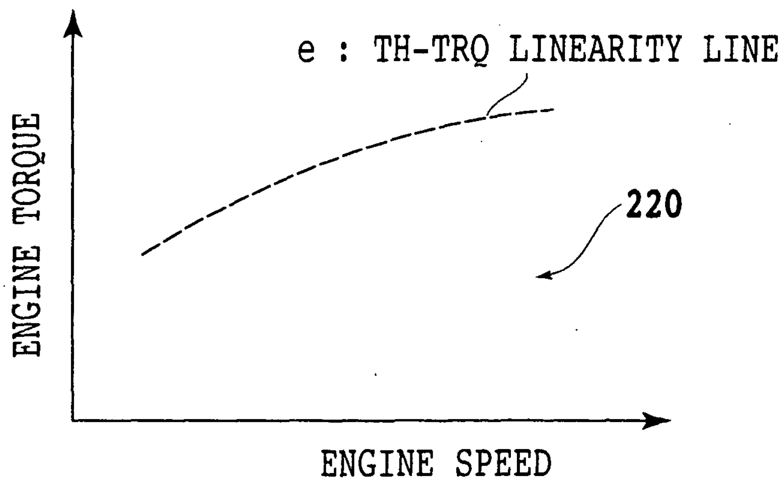

FIG. 9A

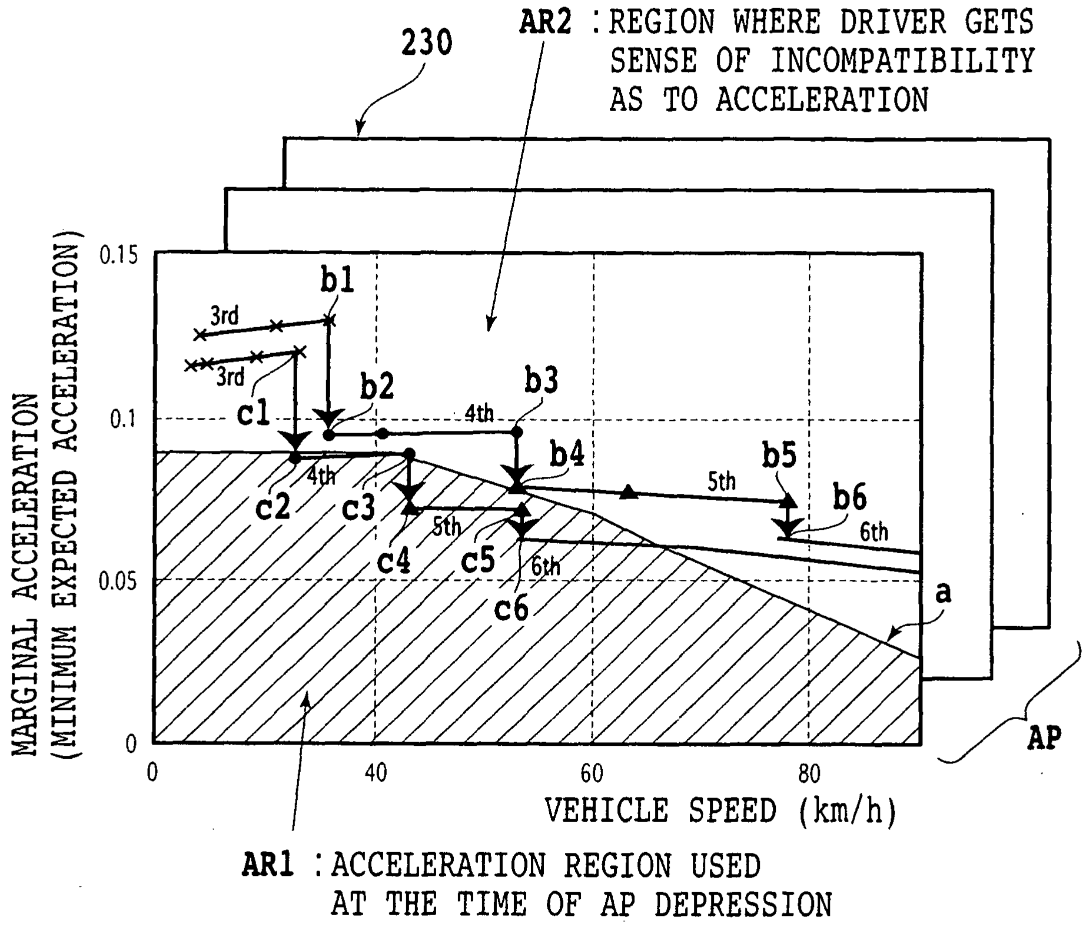
230
AR2 : REGION WHERE DRIVER GETS SENSE OF INCOMPATIBILITY AS TO ACCELERATION
MARGINAL ACCELERATION (MINIMUM EXPECTED ACCELERATION)
0.15
0.1
0.05
0
b1
b2
b3
b4
b5
b6
c1
c2
c3
c4
c5
c6
3rd
3rd
4th
4th
5th
5th
6th
6th
a
AP
0
40
60
80
VEHICLE SPEED (km/h)
AR1 : ACCELERATION REGION USED AT THE TIME OF AP DEPRESSION

FIG. 9B

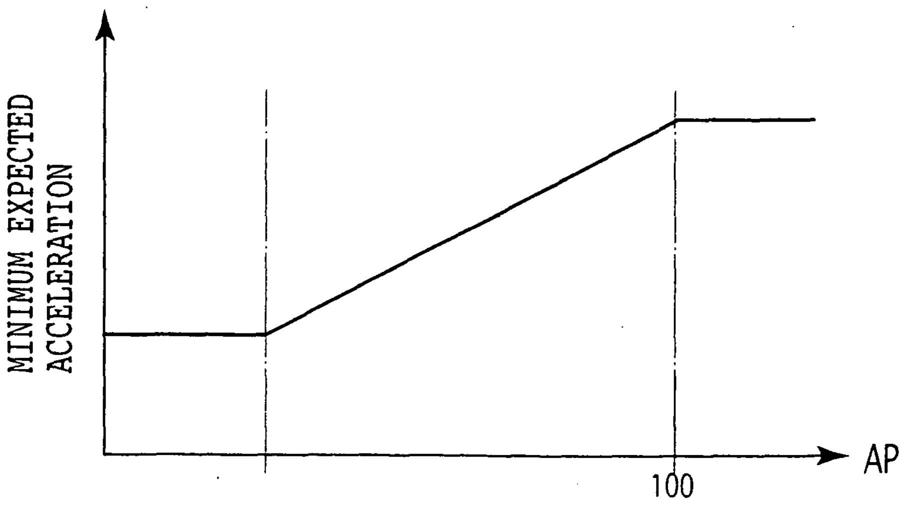
MINIMUM EXPECTED ACCELERATION
AP
100

FIG.10

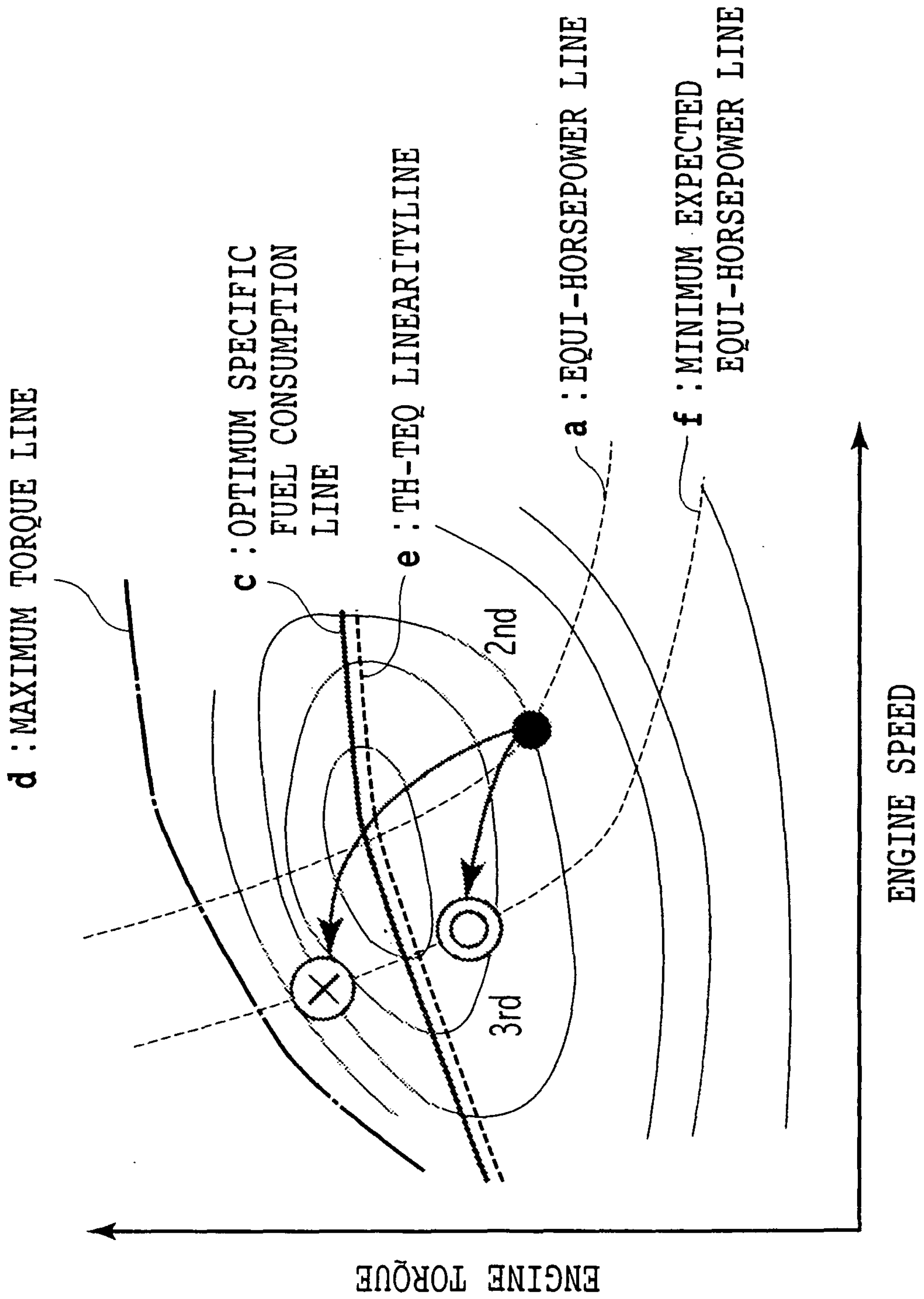
d : MAXIMUM TORQUE LINE
c : OPTIMUM SPECIFIC FUEL CONSUMPTION LINE
e : TH-TEQ LINEARITYLINE
a : EQUI-HORSEPOWER LINE
f : MINIMUM EXPECTED EQUI-HORSEPOWER LINE
2nd
3rd
ENGINE SPEED
ENGINE TORQUE

FIG. 11

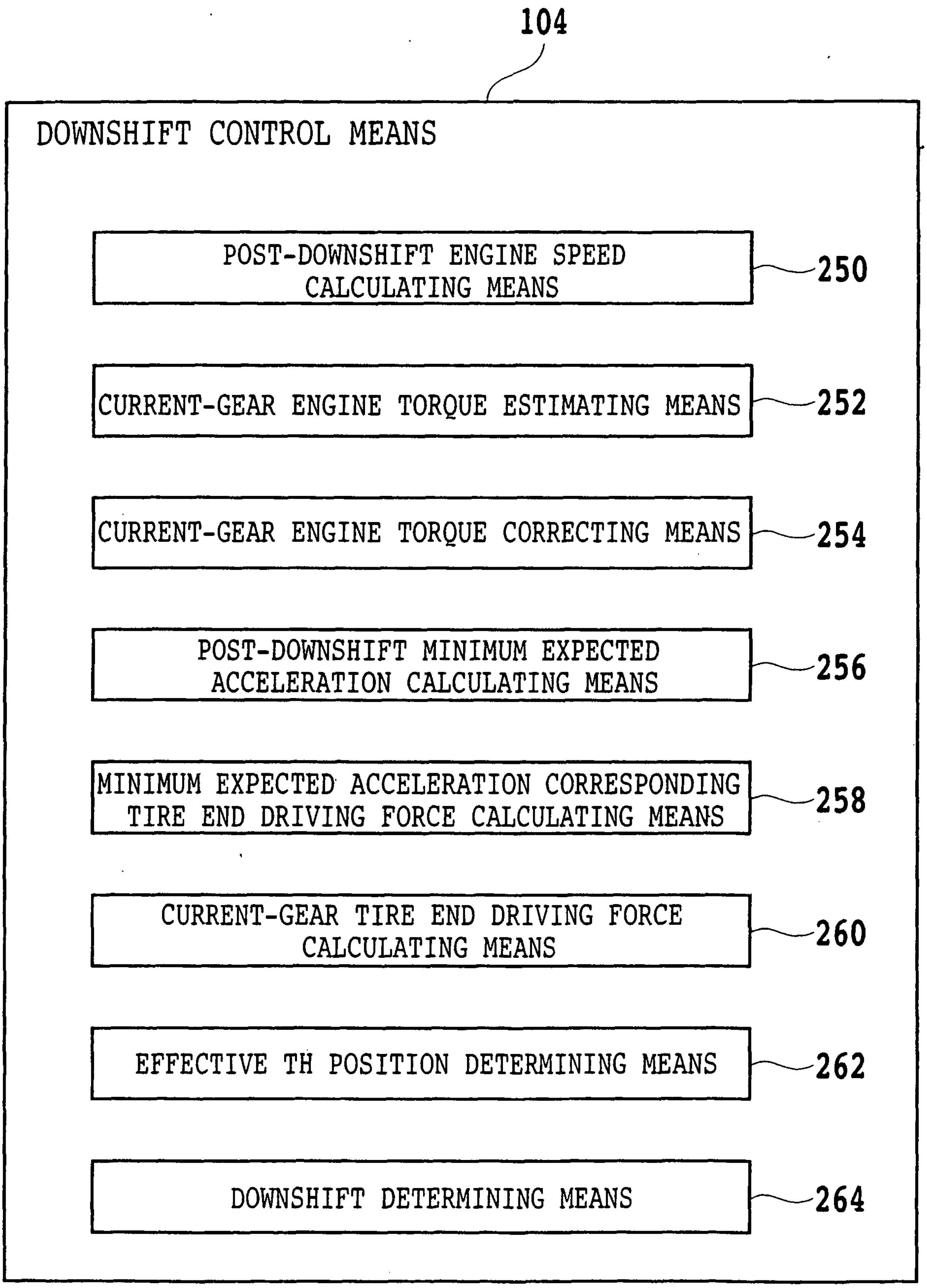
104
DOWNSHIFT CONTROL MEANS
POST-DOWNSHIFT ENGINE SPEED CALCULATING MEANS
250
CURRENT-GEAR ENGINE TORQUE ESTIMATING MEANS
252
CURRENT-GEAR ENGINE TORQUE CORRECTING MEANS
254
POST-DOWNSHIFT MINIMUM EXPECTED ACCELERATION CALCULATING MEANS
256
MINIMUM EXPECTED ACCELERATION CORRESPONDING TIRE END DRIVING FORCE CALCULATING MEANS
258
CURRENT-GEAR TIRE END DRIVING FORCE CALCULATING MEANS
260
EFFECTIVE TH POSITION DETERMINING MEANS
262
DOWNSHIFT DETERMINING MEANS
264

FIG.12A

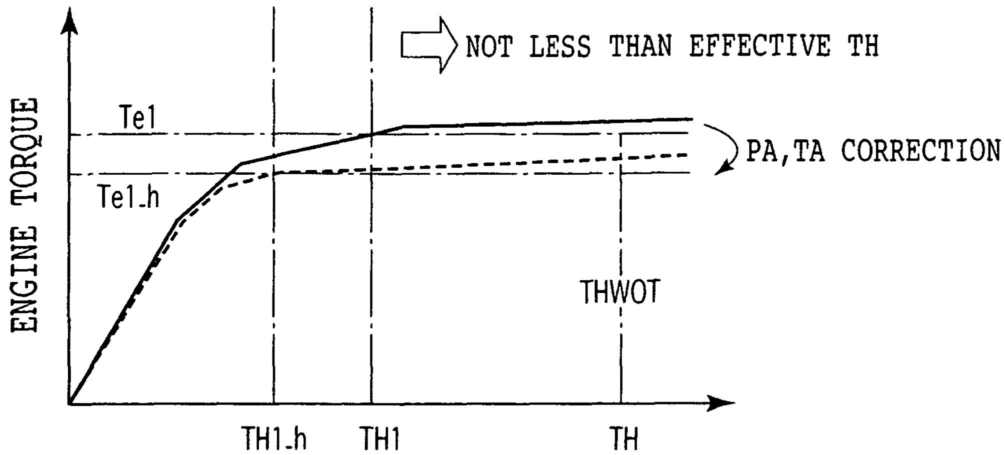


FIG.12B

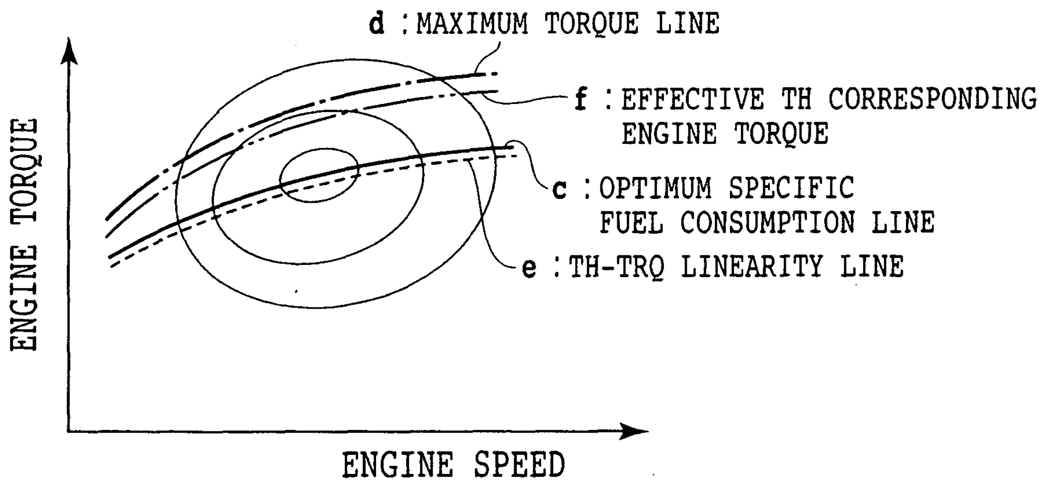


FIG.12C

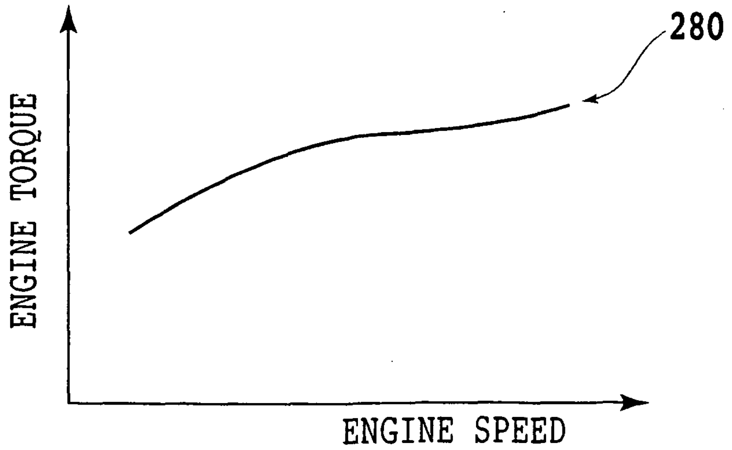

FIG.13

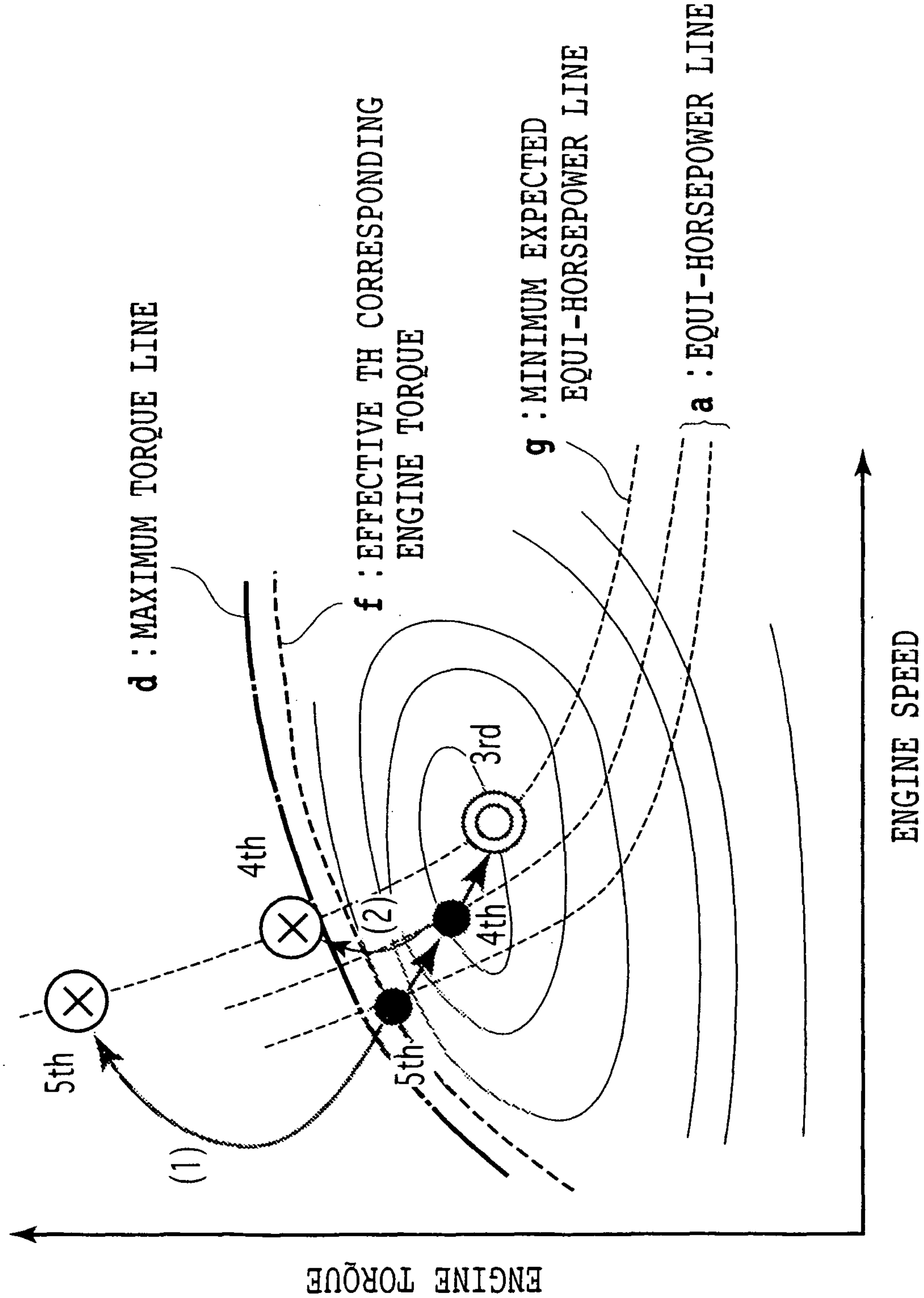
d : MAXIMUM TORQUE LINE
f : EFFECTIVE TH CORRESPONDING ENGINE TORQUE
g : MINIMUM EXPECTED EQUI-HORSEPOWER LINE
a : EQUI-HORSEPOWER LINE
5th
4th
3rd
4th
5th
(1)
(2)
ENGINE TORQUE
ENGINE SPEED

FIG.14

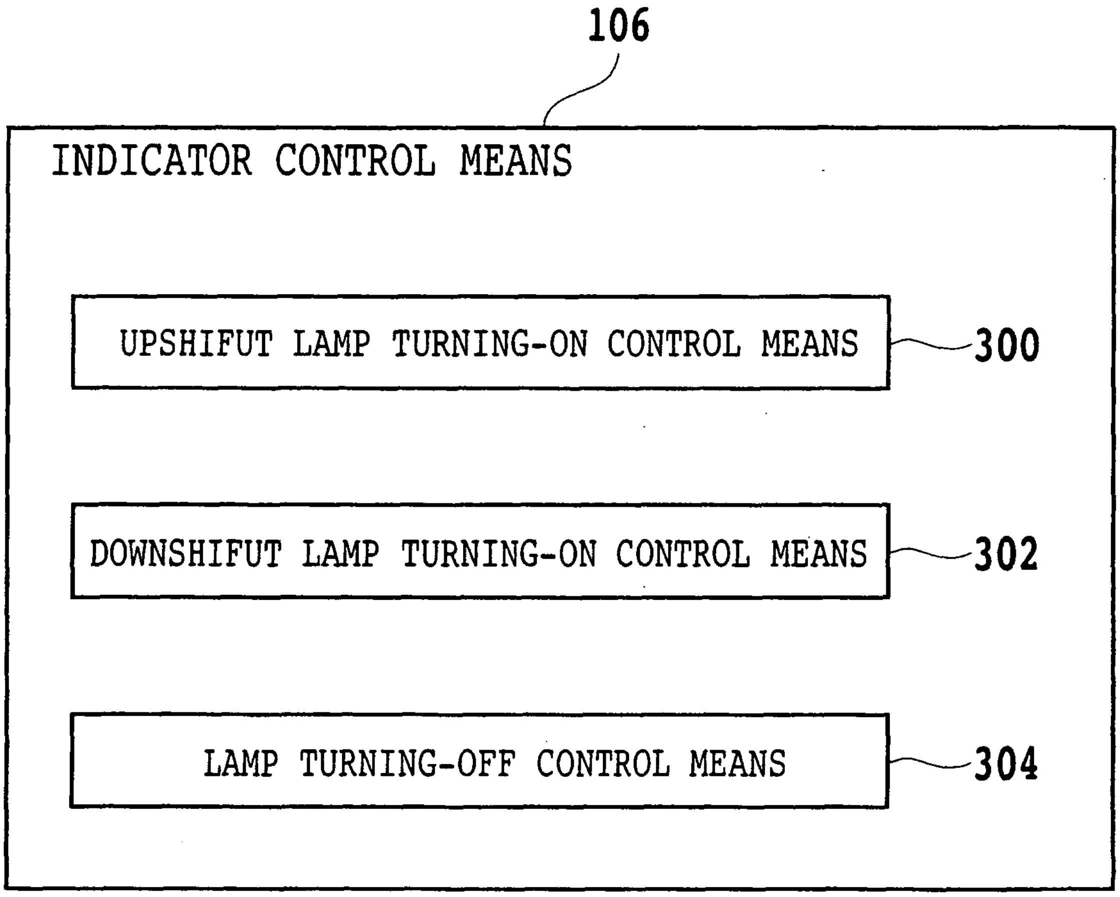
106
INDICATOR CONTROL MEANS
UPSHIFUT LAMP TURNING-ON CONTROL MEANS
300
DOWNSHIFUT LAMP TURNING-ON CONTROL MEANS
302
LAMP TURNING-OFF CONTROL MEANS
304

FIG.15

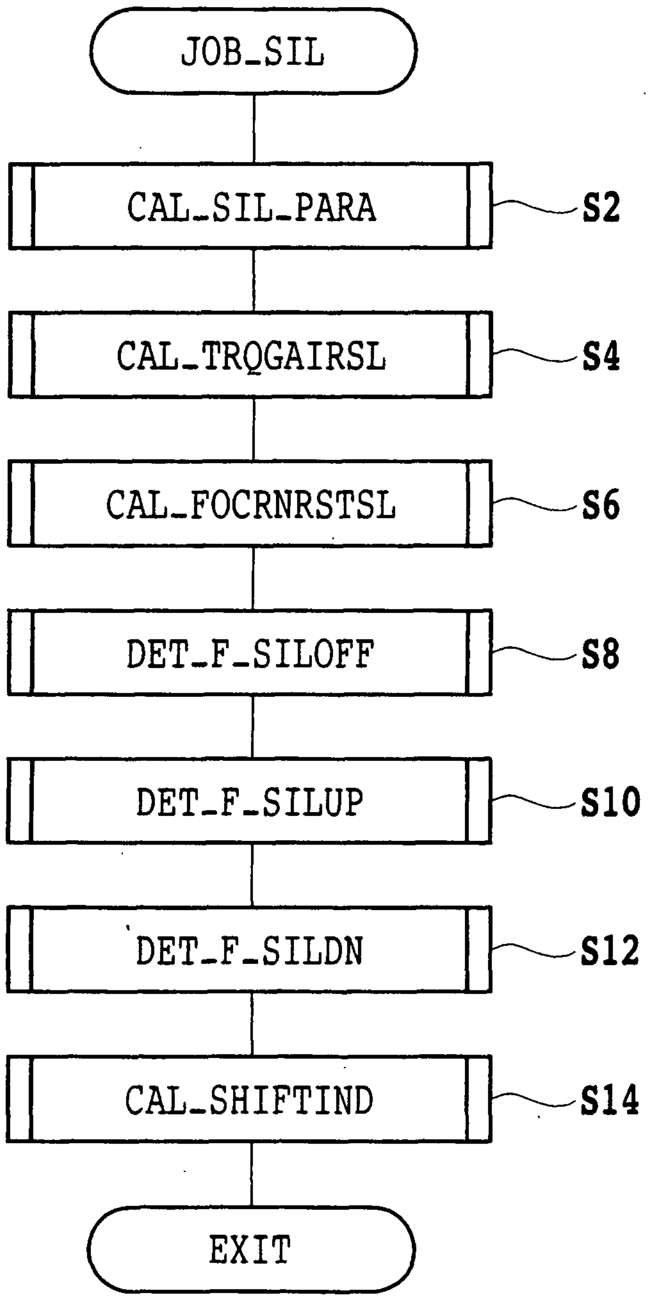
JOB_SIL
CAL_SIL_PARA
S2
CAL_TRQGAIRSL
S4
CAL_FOCRNRSTSL
S6
DET_F_SILOFF
S8
DET_F_SILUP
S10
DET_F_SILDN
S12
CAL_SHIFTIND
S14
EXIT

FIG.16

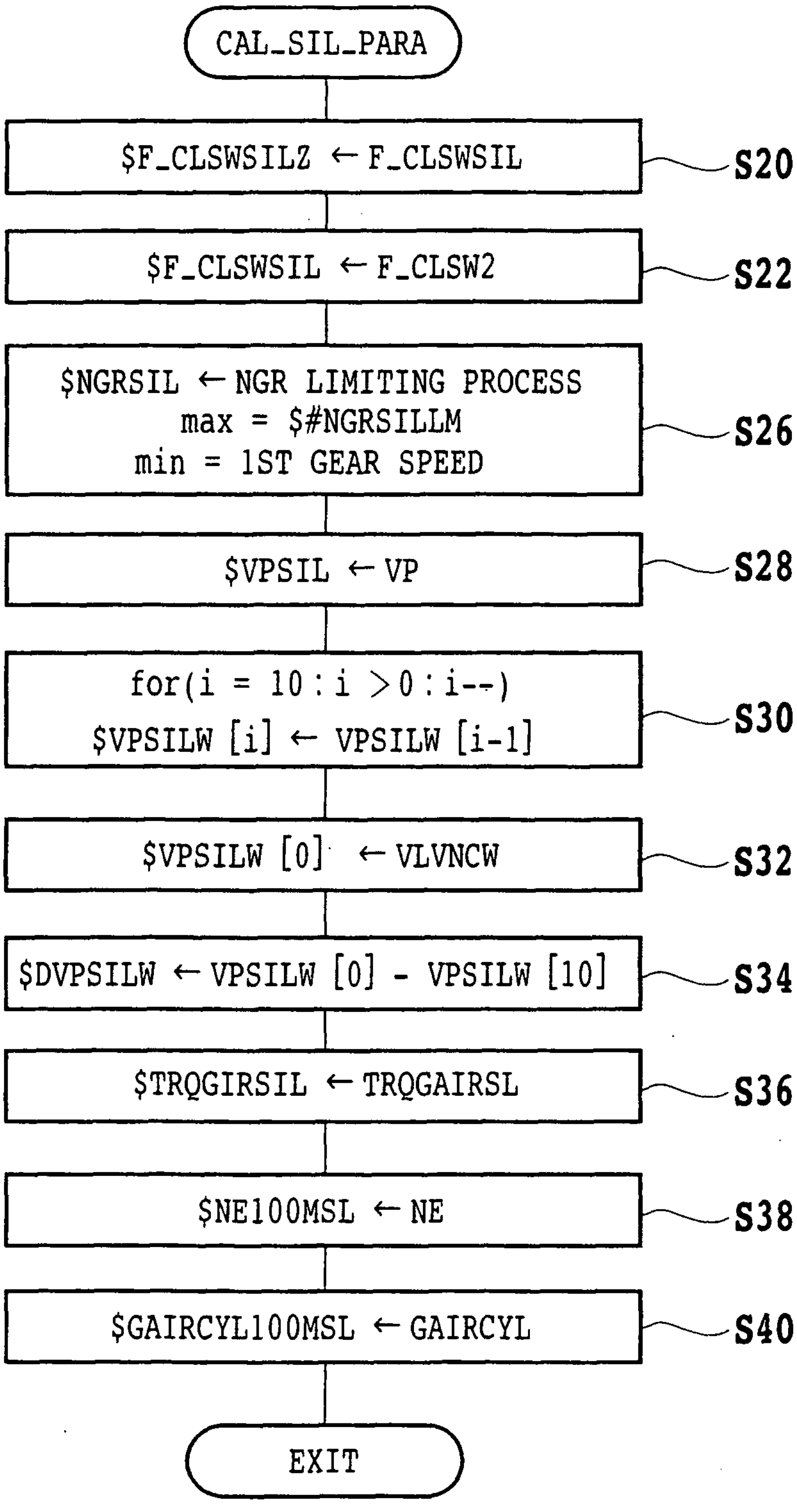
CAL_SIL_PARA
$F_CLSWSILZ ← F_CLSWSIL
S20
$F_CLSWSIL ← F_CLSW2
S22
$NGRSIL ← NGR LIMITING PROCESS
max = $#NGRSILLM
min = 1ST GEAR SPEED
S26
$VPSIL ← VP
S28
for(i = 10 : i > 0 : i--)
$VPSILW [i] ← VPSILW [i-1]
S30
$VPSILW [0] ← VLVNCW
S32
$DVPSILW ← VPSILW [0] - VPSILW [10]
S34
$TRQGIRSIL ← TRQGAIRSL
S36
$NE100MSL ← NE
S38
$GAIRCYL100MSL ← GAIRCYL
S40
EXIT

FIG. 17

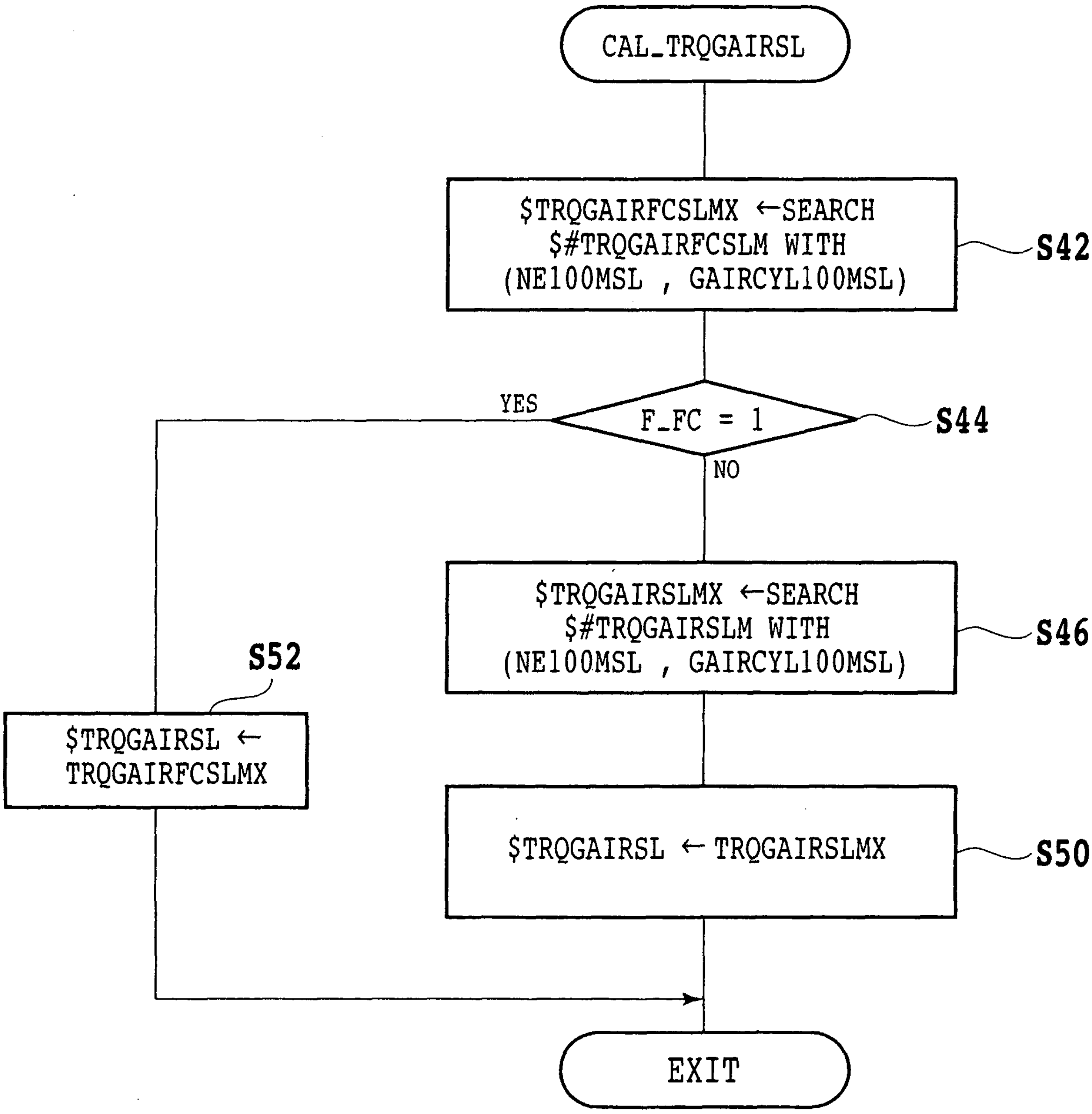
CAL_TRQGAIRSL
$TRQGAIRFCSLMX ←SEARCH $#TRQGAIRFCSLM WITH (NE100MSL , GAIRCYL100MSL)
S42
F_FC = 1
S44
YES
NO
$TRQGAIRSLMX ←SEARCH $#TRQGAIRSLM WITH (NE100MSL , GAIRCYL100MSL)
S46
S52
$TRQGAIRSL ← TRQGAIRFCSLMX
$TRQGAIRSL ← TRQGAIRSLMX
S50
EXIT

# FIG. 18A

310

| | | XTRQGAIRFCSLM | |
|---|---|---|---|
| | 1.1 | ...... | 15.1 |
| YTRQGAIRFCSLM | ... | ...... | ... |
| | 1.15 | ...... | 15.15 |

# FIG. 18B

312

| | | XTRQGAIRSLM | |
|---|---|---|---|
| | 1.1 | ...... | 15.1 |
| YTRQGAIRSLM | ... | ...... | ... |
| | 1.15 | ...... | 15.15 |

# FIG.19

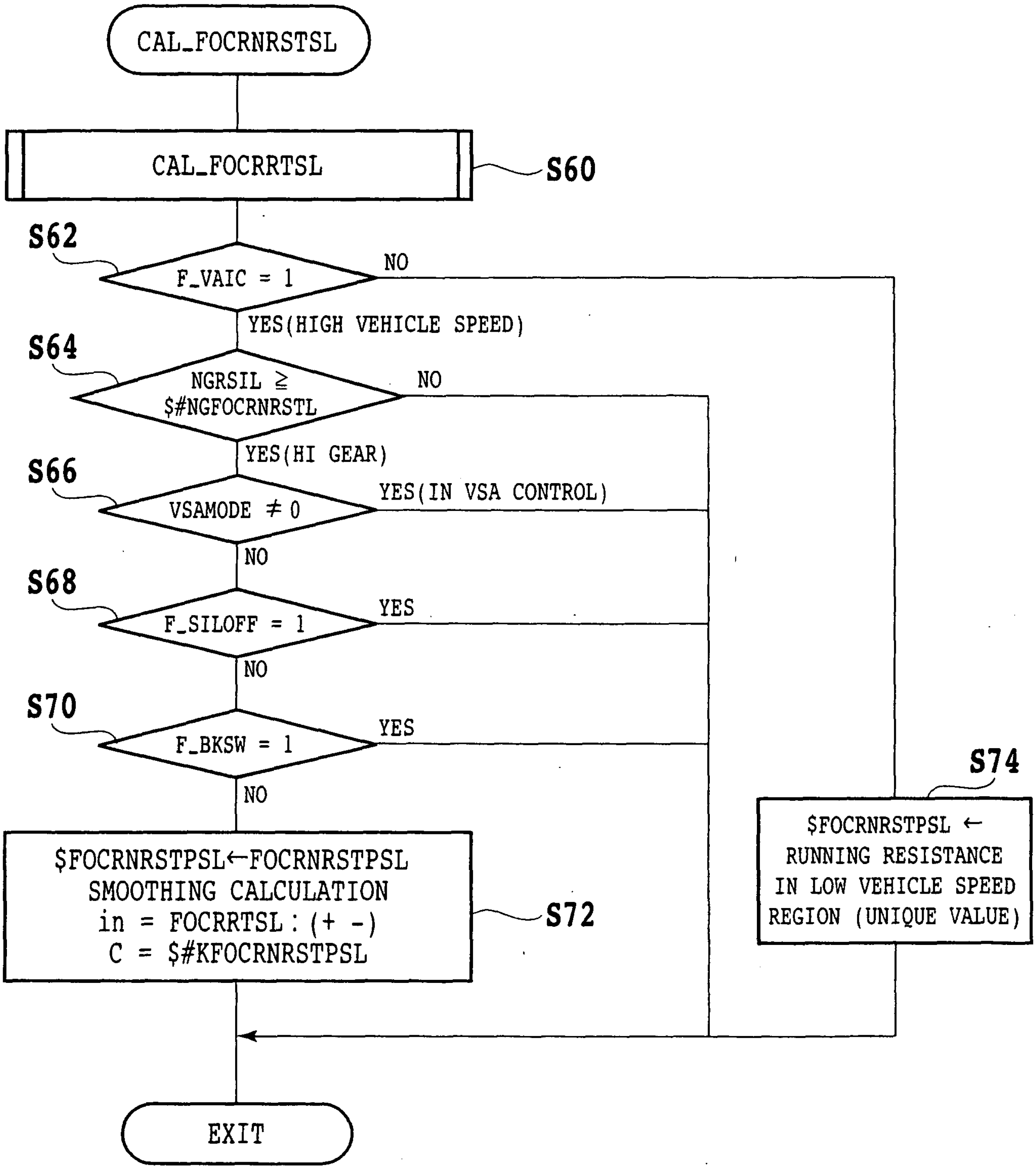
CAL_FOCRNRSTSL
CAL_FOCRRTSL
S60
S62
F_VAIC = 1
NO
YES(HIGH VEHICLE SPEED)
S64
NGRSIL ≧ $#NGFOCRNRSTL
NO
YES(HI GEAR)
S66
VSAMODE ≠ 0
YES(IN VSA CONTROL)
NO
S68
F_SILOFF = 1
YES
NO
S70
F_BKSW = 1
YES
NO
$FOCRNRSTPSL←FOCRNRSTPSL
SMOOTHING CALCULATION
in = FOCRRTSL : (+ -)
C = $#KFOCRNRSTPSL
S72
S74
$FOCRNRSTPSL ←
RUNNING RESISTANCE
IN LOW VEHICLE SPEED
REGION (UNIQUE VALUE)
EXIT

FIG.20

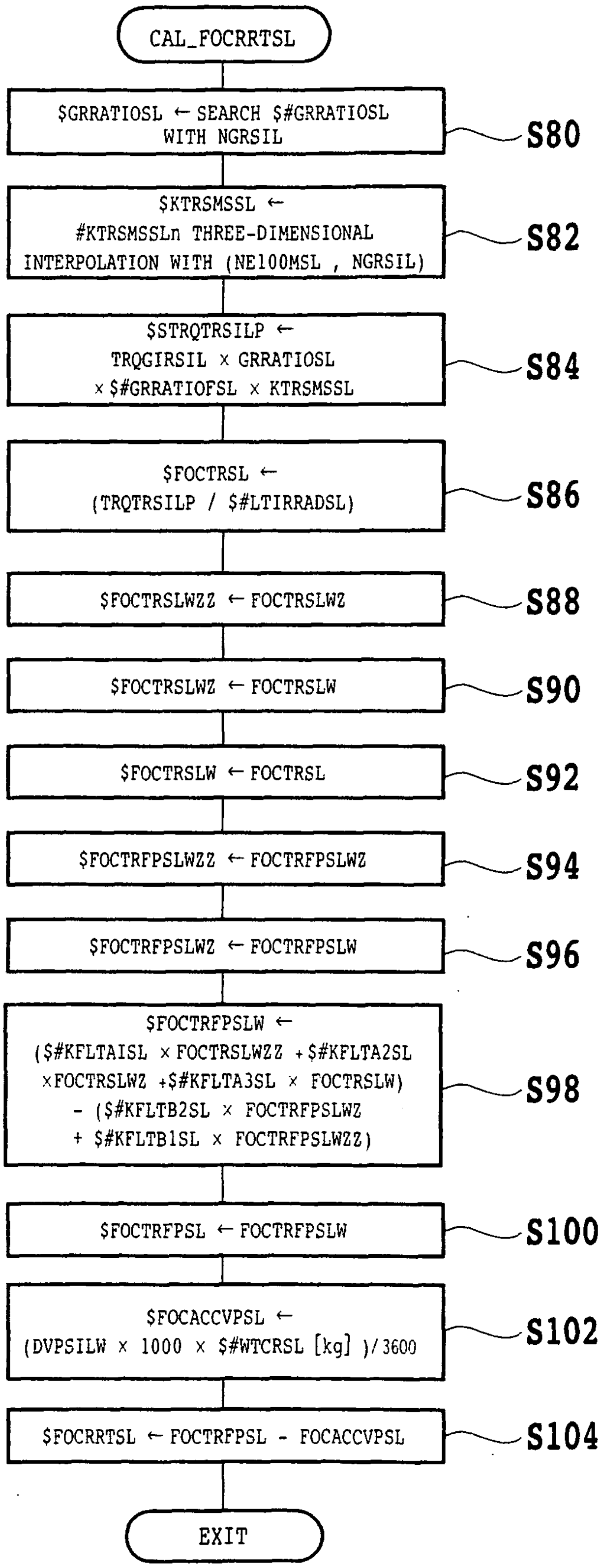
CAL_FOCRRTSL
$GRRATIOSL ← SEARCH $#GRRATIOSL WITH NGRSIL
S80
$KTRSMSSL ← #KTRSMSSLn THREE-DIMENSIONAL INTERPOLATION WITH (NE100MSL , NGRSIL)
S82
$STRQTRSILP ← TRQGIRSIL × GRRATIOSL × $#GRRATIOFSL × KTRSMSSL
S84
$FOCTRSL ← (TRQTRSILP / $#LTIRRADSL)
S86
$FOCTRSLWZZ ← FOCTRSLWZ
S88
$FOCTRSLWZ ← FOCTRSLW
S90
$FOCTRSLW ← FOCTRSL
S92
$FOCTRFPSLWZZ ← FOCTRFPSLWZ
S94
$FOCTRFPSLWZ ← FOCTRFPSLW
S96
$FOCTRFPSLW ← ($#KFLTA1SL × FOCTRSLWZZ + $#KFLTA2SL ×FOCTRSLWZ +$#KFLTA3SL × FOCTRSLW) - ($#KFLTB2SL × FOCTRFPSLWZ + $#KFLTB1SL × FOCTRFPSLWZZ)
S98
$FOCTRFPSL ← FOCTRFPSLW
S100
$FOCACCVPSL ← (DVPSILW × 1000 × $#WTCRSL [kg] )/3600
S102
$FOCRRTSL ← FOCTRFPSL - FOCACCVPSL
S104
EXIT

# FIG.21A

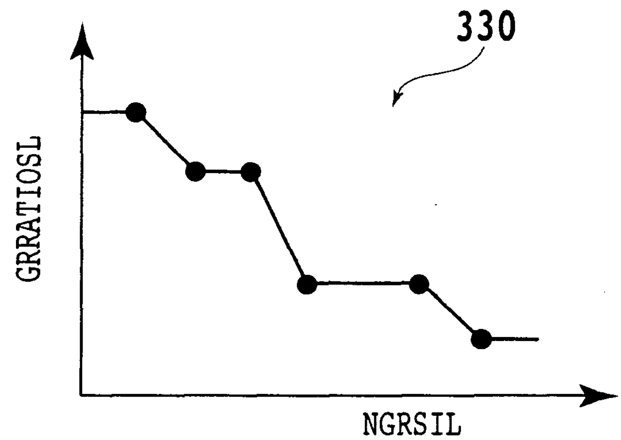


# FIG.21B

332

<table>
<tr><td>TABLE SEARCH PARAMETERS</td><td rowspan="2">TABLE TO BE SEARCHED</td><td>Z-AXIS NGRSIL</td></tr>
<tr><td>X-AXIS</td><td>$#NGRTRSMSSL</td></tr>
<tr><td rowspan="6">NE100MSL</td><td>$#KTRSMSSL1</td><td>n = 1</td></tr>
<tr><td>$#KTRSMSSL2</td><td>n = 2</td></tr>
<tr><td>$#KTRSMSSL3</td><td>n = 3</td></tr>
<tr><td>$#KTRSMSSL4</td><td>n = 4</td></tr>
<tr><td>$#KTRSMSSL5</td><td>n = 5</td></tr>
<tr><td>$#KTRSMSSL6</td><td>n = 6</td></tr>
</table>

# FIG.22

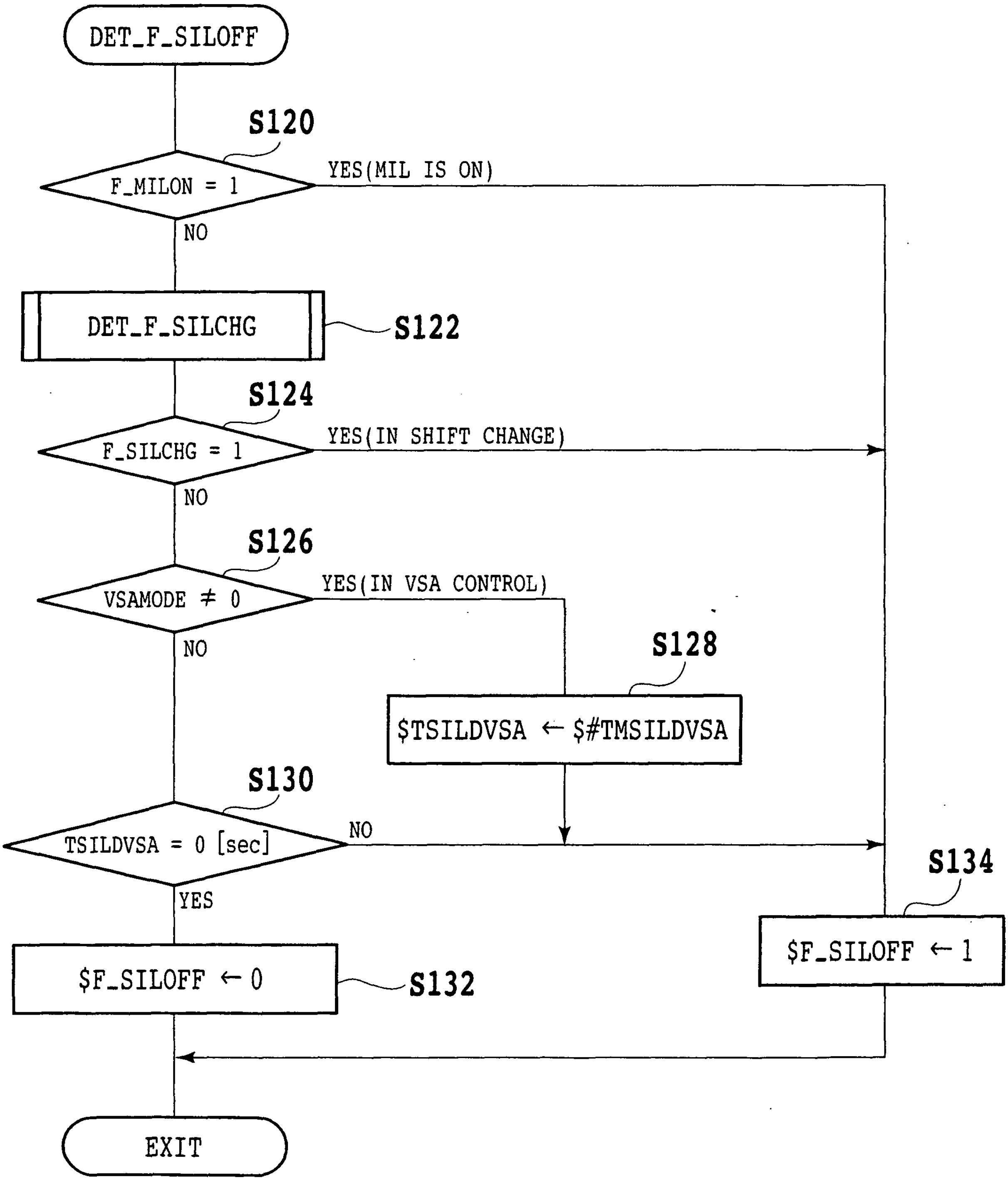
DET_F_SILOFF
S120
F_MILON = 1
YES(MIL IS ON)
NO
DET_F_SILCHG
S122
S124
F_SILCHG = 1
YES(IN SHIFT CHANGE)
NO
S126
VSAMODE ≠ 0
YES(IN VSA CONTROL)
NO
S128
$TSILDVSA ← $#TMSILDVSA
S130
TSILDVSA = 0 [sec]
NO
YES
$F_SILOFF ← 0
S132
S134
$F_SILOFF ← 1
EXIT

FIG.23

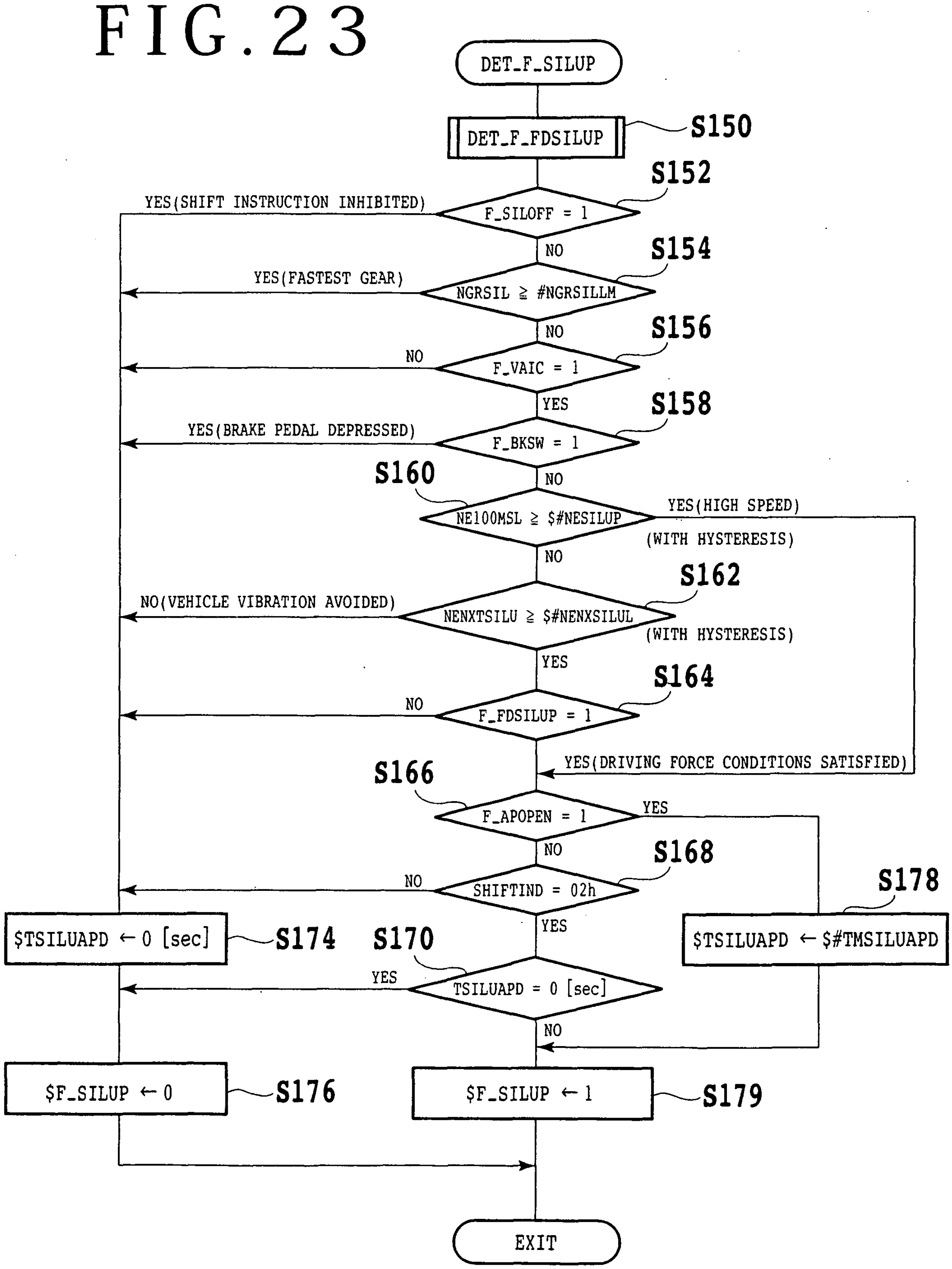
DET_F_SILUP
DET_F_FDSILUP
S150
S152
F_SILOFF = 1
YES(SHIFT INSTRUCTION INHIBITED)
NO
S154
NGRSIL ≧ #NGRSILLM
YES(FASTEST GEAR)
NO
S156
F_VAIC = 1
NO
YES
S158
F_BKSW = 1
YES(BRAKE PEDAL DEPRESSED)
NO
S160
NE100MSL ≧ $#NESILUP
YES(HIGH SPEED)
(WITH HYSTERESIS)
NO
S162
NENXTSILU ≧ $#NENXSILUL
NO(VEHICLE VIBRATION AVOIDED)
(WITH HYSTERESIS)
YES
S164
F_FDSILUP = 1
NO
YES(DRIVING FORCE CONDITIONS SATISFIED)
S166
F_APOPEN = 1
YES
NO
S168
SHIFTIND = 02h
NO
YES
S178
$TSILUAPD ← $#TMSILUAPD
$TSILUAPD ← 0 [sec]
S174
S170
TSILUAPD = 0 [sec]
YES
NO
$F_SILUP ← 0
S176
$F_SILUP ← 1
S179
EXIT

FIG.24

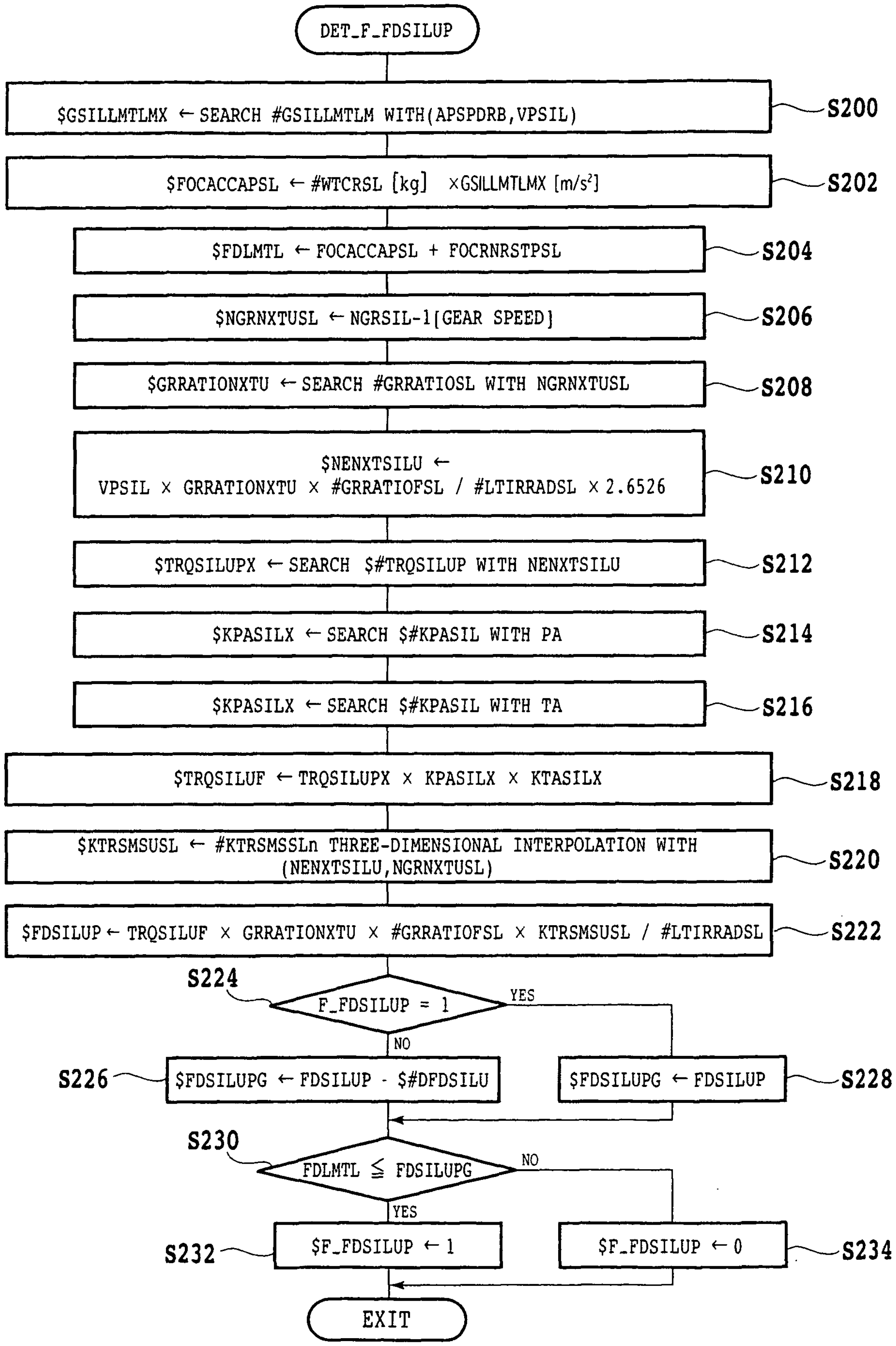
DET_F_FDSILUP
$GSILLMTLMX ← SEARCH #GSILLMTLM WITH(APSPDRB,VPSIL)
S200
$FOCACCAPSL ← #WTCRSL [kg] ×GSILLMTLMX [m/s²]
S202
$FDLMTL ← FOCACCAPSL + FOCRNRSTPSL
S204
$NGRNXTUSL ← NGRSIL-1[GEAR SPEED]
S206
$GRRATIONXTU ← SEARCH #GRRATIOSL WITH NGRNXTUSL
S208
$NENXTSILU ←
VPSIL × GRRATIONXTU × #GRRATIOFSL / #LTIRRADSL × 2.6526
S210
$TRQSILUPX ← SEARCH $#TRQSILUP WITH NENXTSILU
S212
$KPASILX ← SEARCH $#KPASIL WITH PA
S214
$KPASILX ← SEARCH $#KPASIL WITH TA
S216
$TRQSILUF ← TRQSILUPX × KPASILX × KTASILX
S218
$KTRSMSUSL ← #KTRSMSSLn THREE-DIMENSIONAL INTERPOLATION WITH (NENXTSILU,NGRNXTUSL)
S220
$FDSILUP ← TRQSILUF × GRRATIONXTU × #GRRATIOFSL × KTRSMSUSL / #LTIRRADSL
S222
S224
F_FDSILUP = 1
YES
NO
S226
$FDSILUPG ← FDSILUP - $#DFDSILU
$FDSILUPG ← FDSILUP
S228
S230
FDLMTL ≦ FDSILUPG
NO
YES
S232
$F_FDSILUP ← 1
$F_FDSILUP ← 0
S234
EXIT

# FIG.25A

350

APSPDRB →

VPSIL ↓

| | | | |
|---|---|---|---|
| | | XGSILLMTLM | |
| | 1,1 | ··· | X(6),1 |
| YGSILLMTLM | ⋮ | ··· | ⋮ |
| | 1,Y(7) | ··· | X(6),Y(7) |

351

THROTTLE COMMAND VALUE →

VPSIL ↓

| | | | |
|---|---|---|---|
| | | XGSILLMTLM | |
| | 1,1 | ··· | X(6),1 |
| YGSILLMTLM | ⋮ | ··· | ⋮ |
| | 1,Y(7) | ··· | X(6),Y(7) |

# FIG.25B

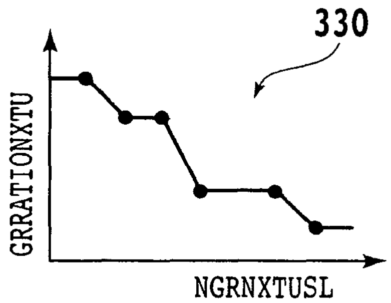


# FIG.25C

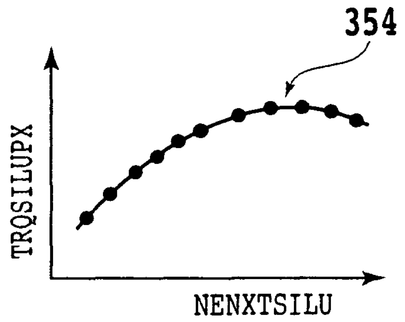


# FIG.25D

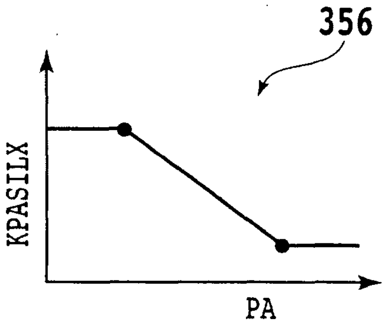


# FIG.25E

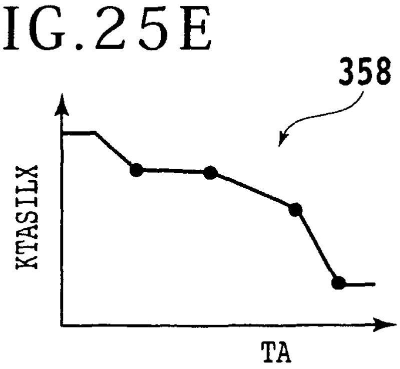


# FIG.25F

332

| TABLE SEARCH PARAMETERS | TABLE TO BE SEARCHED | Z-AXIS NGRSIL |
|---|---|---|
| X-AXIS | | #NGRTRSMSSL |
| NENXYSILU | $#KTRSMSSL1 | n = 1 |
| | $#KTRSMSSL2 | n = 2 |
| | $#KTRSMSSL3 | n = 3 |
| | $#KTRSMSSL4 | n = 4 |
| | $#KTRSMSSL5 | n = 5 |
| | $#KTRSMSSL6 | n = 6 |

FIG. 26

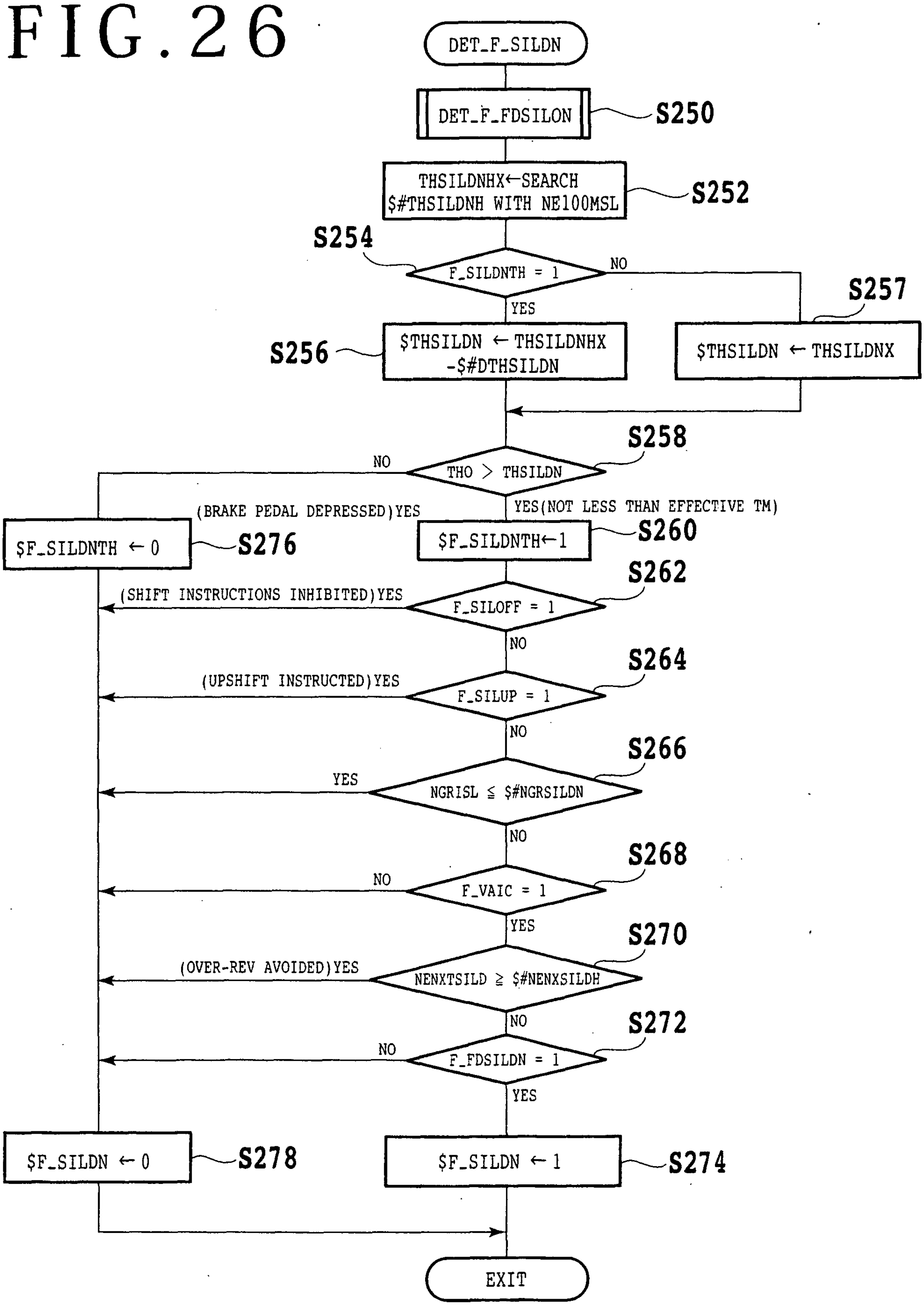
DET_F_SILDN
DET_F_FDSILON
S250
THSILDNHX←SEARCH
$#THSILDNH WITH NE100MSL
S252
S254
F_SILDNTH = 1
NO
S257
YES
S256
$THSILDN ← THSILDNHX
-$#DTHSILDN
$THSILDN ← THSILDNX
S258
NO
THO > THSILDN
YES(NOT LESS THAN EFFECTIVE TM)
(BRAKE PEDAL DEPRESSED)YES
$F_SILDNTH ← 0
S276
$F_SILDNTH←1
S260
S262
(SHIFT INSTRUCTIONS INHIBITED)YES
F_SILOFF = 1
NO
S264
(UPSHIFT INSTRUCTED)YES
F_SILUP = 1
NO
S266
YES
NGRISL ≦ $#NGRSILDN
NO
S268
NO
F_VAIC = 1
YES
S270
(OVER-REV AVOIDED)YES
NENXTSILD ≧ $#NENXSILDH
NO
S272
NO
F_FDSILDN = 1
YES
$F_SILDN ← 0
S278
$F_SILDN ← 1
S274
EXIT

FIG.27

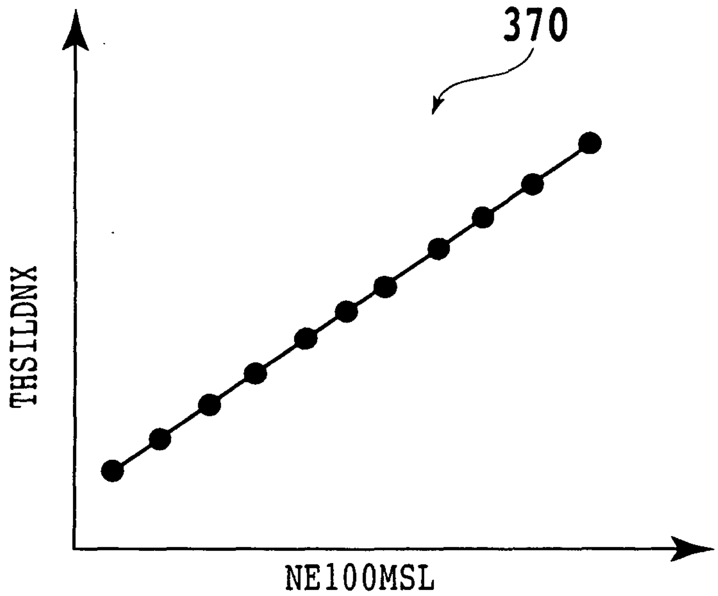

FIG. 28

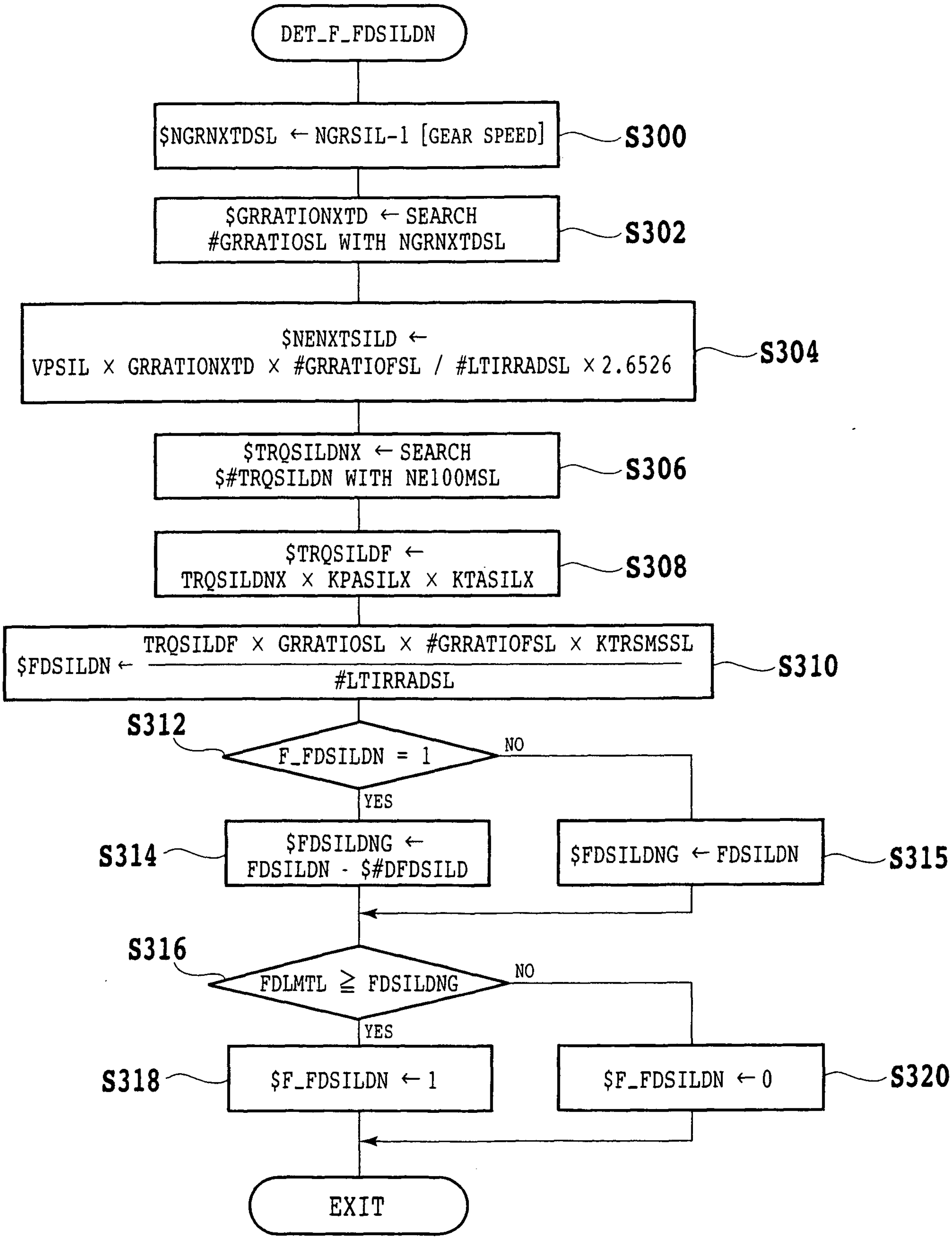
DET_F_FDSILDN
$NGRNXTDSL ← NGRSIL-1 [GEAR SPEED]
S300
$GRRATIONXTD ← SEARCH #GRRATIOSL WITH NGRNXTDSL
S302
$NENXTSILD ← VPSIL × GRRATIONXTD × #GRRATIOFSL / #LTIRRADSL × 2.6526
S304
$TRQSILDNX ← SEARCH $#TRQSILDN WITH NE100MSL
S306
$TRQSILDF ← TRQSILDNX × KPASILX × KTASILX
S308
$FDSILDN ← TRQSILDF × GRRATIOSL × #GRRATIOFSL × KTRSMSSL / #LTIRRADSL
S310
S312
F_FDSILDN = 1
NO
YES
S314
$FDSILDNG ← FDSILDN - $#DFDSILD
$FDSILDNG ← FDSILDN
S315
S316
FDLMTL ≧ FDSILDNG
NO
YES
S318
$F_FDSILDN ← 1
$F_FDSILDN ← 0
S320
EXIT

# FIG.29A

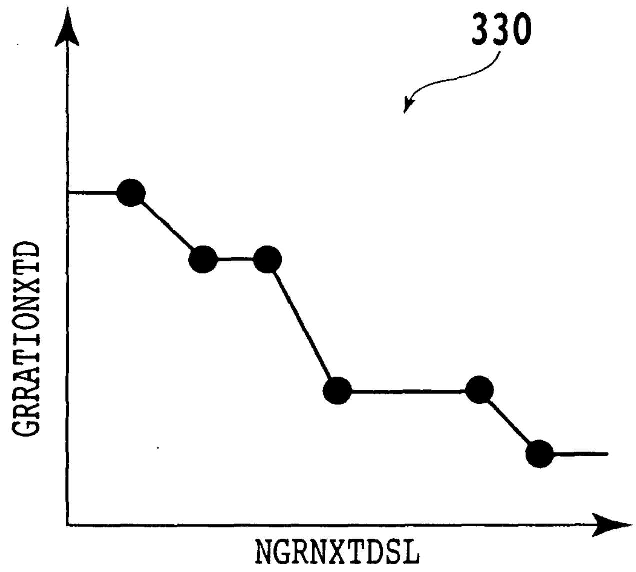


# FIG.29B

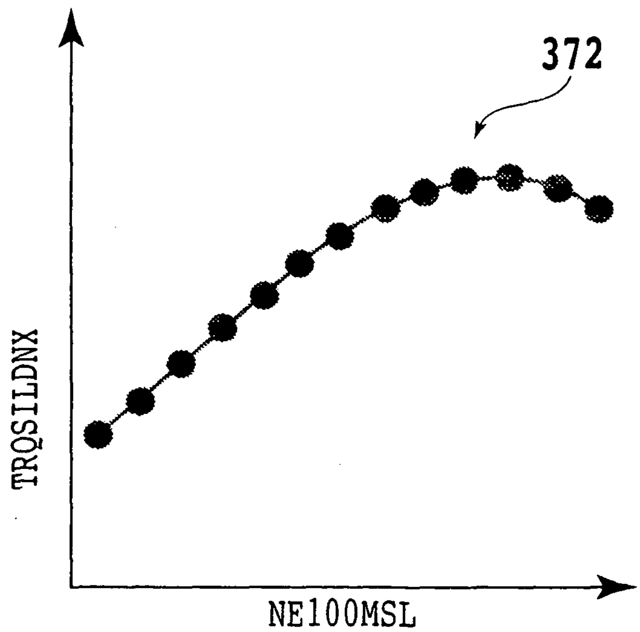

FIG.30

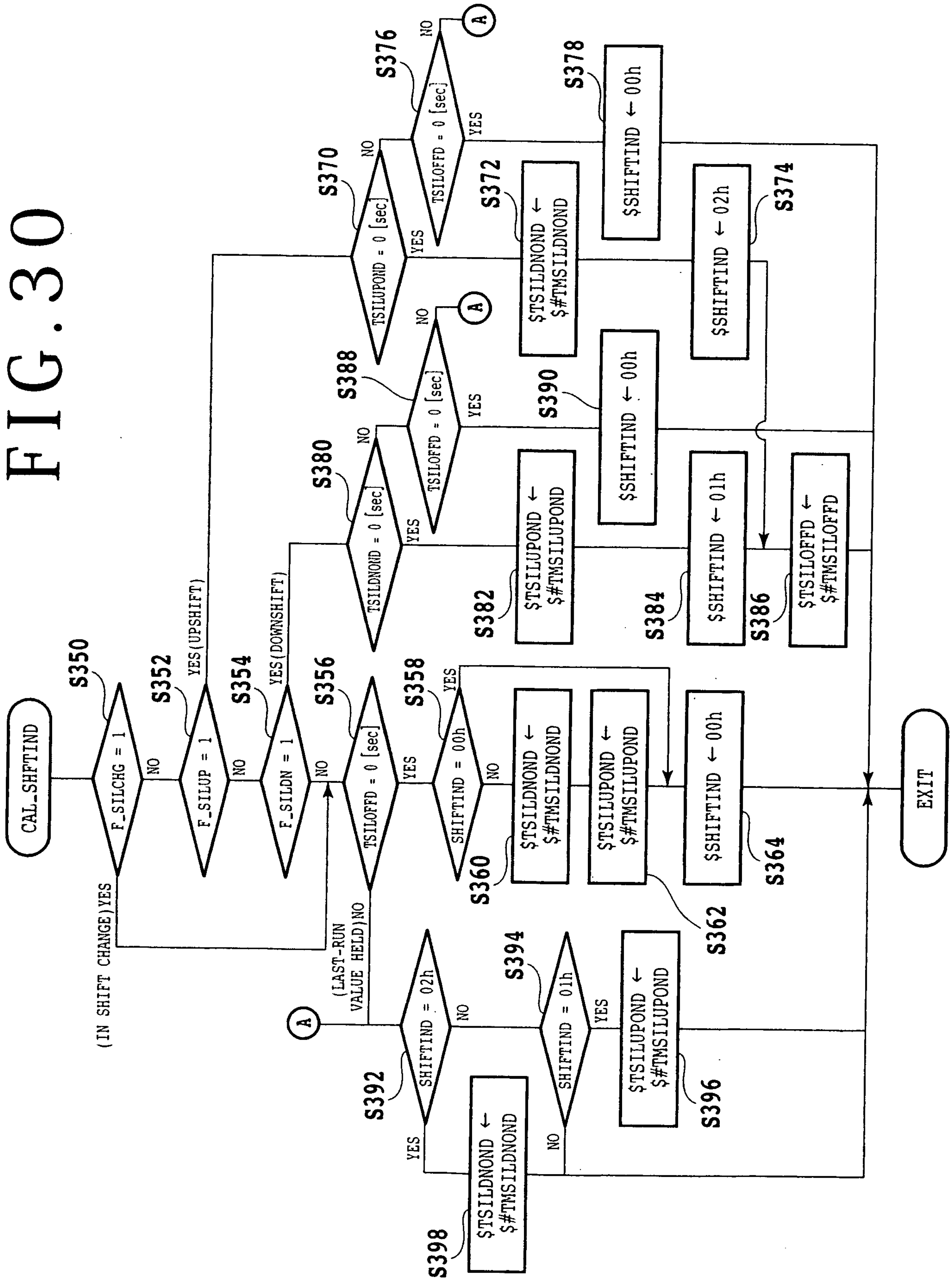
CAL_SHFTIND
S350
F_SILCHG = 1
(IN SHIFT CHANGE) YES
NO
S352
F_SILUP = 1
YES (UPSHIFT)
S354
F_SILDN = 1
YES (DOWNSHIFT)
S356
TSILOFFD = 0 [sec]
(LAST-RUN VALUE HELD) NO
S358
SHIFTIND = 00h
S360
$TSILDNOND ← $#TMSILDNOND
S362
$TSILUPOND ← $#TMSILUPOND
S364
$SHIFTIND ← 00h
EXIT
S370
TSILUPOND = 0 [sec]
S372
$TSILDNOND ← $#TMSILDNOND
S374
$SHIFTIND ← 02h
S376
TSILOFFD = 0 [sec]
S378
$SHIFTIND ← 00h
S380
TSILDNOND = 0 [sec]
S382
$TSILUPOND ← $#TMSILUPOND
S384
$SHIFTIND ← 01h
S386
$TSILOFFD ← $#TMSILOFFD
S388
TSILOFFD = 0 [sec]
S390
$SHIFTIND ← 00h
S392
SHIFTIND = 02h
S394
SHIFTIND = 01h
S396
$TSILUPOND ← $#TMSILUPOND
S398
$TSILDNOND ← $#TMSILDNOND
A
YES
NO

FIG. 31

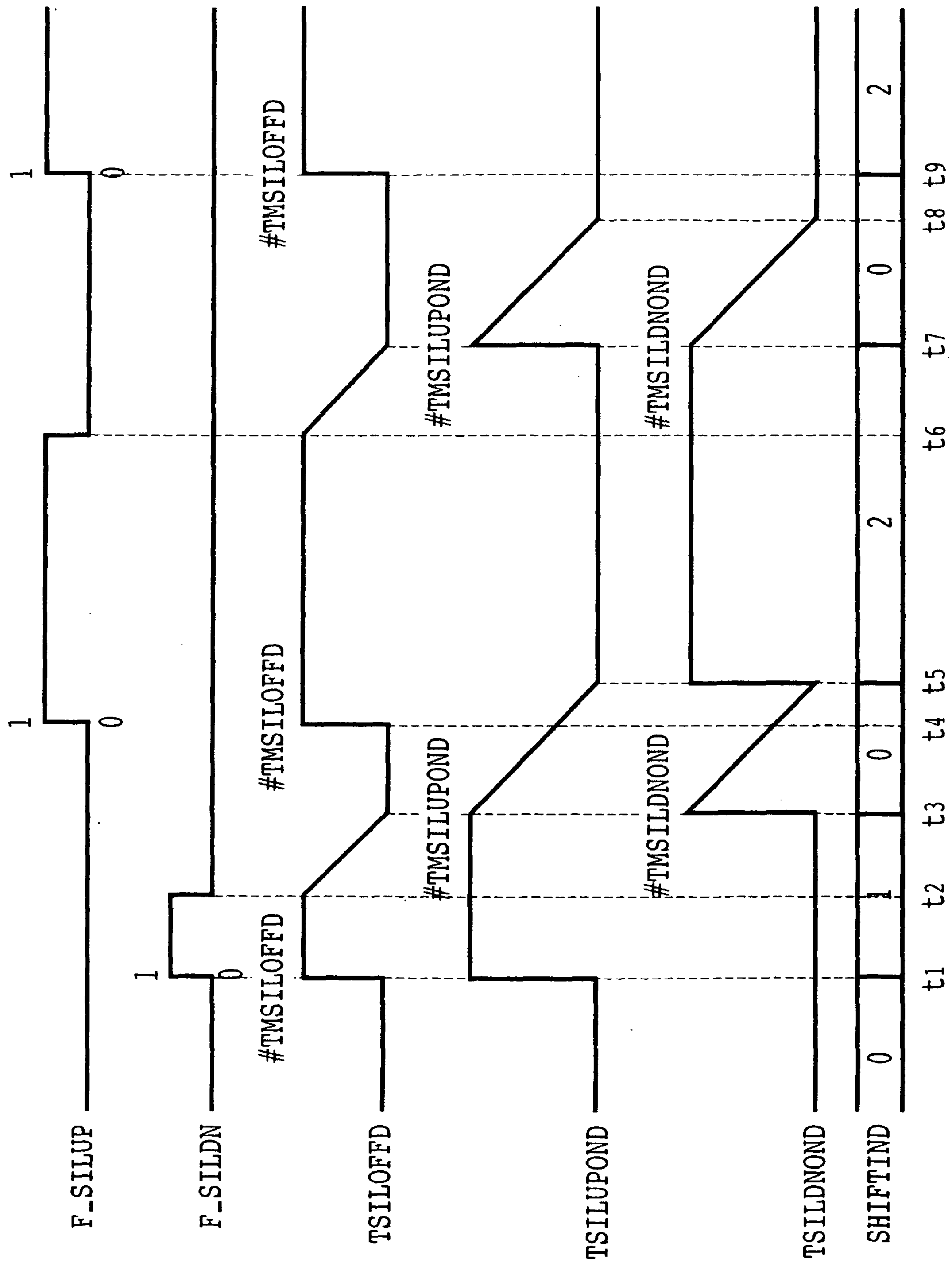
F_SILUP
F_SILDN
TSILOFFD
TSILUPOND
TSILDNOND
SHIFTIND
#TMSILOFFD
#TMSILUPOND
#TMSILDNOND
1
0
2
t1
t2
t3
t4
t5
t6
t7
t8
t9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO61122035 B